# EUROPEAN PATENT APPLICATION

(11) **EP 1 091 531 A1**
(43) Date of publication of application: **11.04.2001**
(21) Application number: 99925389.1
(22) Date of filing: 18.06.1999
(51) Int. Cl.: H04L 12/56, H04N 7/08, H04H 1/00, H04N 5/44, F24C 7/02

(54) **DATA TRANSMITTING/RECEIVING METHOD AND DEVICE, AND PROGRAM RECORDED MEDIUM**

(30) Priority: 19.06.1998 JP 17372198; 08.09.1998 JP 25355598; 26.02.1999 JP 5112499
(71) Applicant: MATSUSHITA ELECTRIC INDUSTRIAL CO., LTD., Kadoma-shi, Osaka 571-8501 (JP)
(72) Inventor: MATSUURA, Satoshi, Osaka-shi, Osaka 546-0035 (JP); OZAWA, Jun, Nara-shi, Nara 631-0005 (JP); ARAKI, Shoichi, Osaka-shi, Osaka 536-0003 (JP); IMANAKA, Takeshi, Nara-shi, Nara 631-0076 (JP)
(74) Representative: Grünecker, Kinkeldey, Stockmair & Schwanhäusser Anwaltssozietät
(86) International application number: JP9903278
(87) International publication number: WO9966679

(57) **Abstract**

Disclosed is a data transmission method for transmitting: data consisting of at least one of character data, image data, and voice data; an event descriptor describing an event for triggering the processing of the data; a condition descriptor describing a condition (including no condition) for the processing of the data; and a data processing descriptor describing a specific processing method for the data.

## Description

### TECHNICAL FIELD

In a first aspect, the present invention relates to a data transmission method for transmitting data together with conditions for processing the data, etc., and a data reception processing method for receiving the data and for processing the received data in accordance with the received conditions.

In a second aspect, the present invention relates to an event-driven type file creating apparatus, an event-driven type file reading apparatus, a data storing method, a data processing method, and a program recording medium, which are used to create various kinds of data, or to read and process the created data, when exchanging various kinds of information via a recording medium.

In third and fourth aspects, the present invention relates to the transmission and reception of auxiliary information in the fields of analog or digital broadcast systems or the like.

### BACKGROUND ART

### (First Prior Art)

In recent years, with the advance of network technology, various systems for distributing and receiving information using networks have been researched and developed. Traditionally, data exchange between information apparatuses connected to a network has often been performed as simple data communication, with the receiving end just receiving the transmitted data and using it as is, and there has arisen a need for systems that can automatically change the method of execution, etc. at the terminal equipment side by judging the hardware environment and the status at the terminal equipment side.

In view of this situation, the inventor has proposed, for example, in his prior patent application filed as Japanese Patent Application No. 10-108323, a method that distributes rule-format data to terminal equipment. According to this prior application (Japanese Patent Application No. 10-108323), by distributing rule-format data to terminal equipment it becomes possible to change the contents and information to be executed, in accordance with the hardware environment and the status at the receiving end, and this serves to alleviate the burden of manually altering the received information at the information receiving terminal side.

### (Second Prior Art)

On the other hand, with the recent development of flash cards and other recording media, various kinds of information have come to be exchanged using recording media. In a typical example of data exchange performed between information apparatuses using recording media, data created by the information creating apparatus is recorded on a recording medium, and the recorded data is read out by the other apparatus for use. Data exchange using recording media has the advantages that no complicated protocols are needed, and that space limitations such as limitations on apparatus installation space are virtually nonexistent.

### (Third Prior Art)

In recent years, with the advance of digital technology, digital broadcast systems for transmitting broadcast signals in digital form have been researched developed. In a digital broadcast system, multimedia data consisting of images, graphics, voice, etc. can be transmitted as additional information by multiplexing it with main information consisting of images and voice corresponding to those carried in the traditional television signal.

One example of a prior art broadcast system implementing such a system is disclosed in Japanese Unexamined Patent Publication No. 9-149378; in the system disclosed therein, the operation of an apparatus at the controlled side is controlled based on the additional information demultiplexed from the multiplexed transmitted signal, and the added value of the receiving apparatus is enhanced by taking advantage of the feature of digital broadcasting that can transmit various kinds of information in multiplexed form.

Turning back to the first prior art, in the method of the prior application (Japanese Patent Application No. 10-108323), since the judgement as to the execution at the terminal equipment side is made using data of the ordinary rule format, if the number of rules held at the terminal equipment side increases, large CPU power is needed to evaluate the condition part of the rule, and system response and performance drop. This inconvenience may increase particularly in cases where a plurality of processing operations have to be performed together by using a single microcomputer because of cost constraints.

Accordingly, it is an object of the first aspect of the invention to provide a data transmission method and a data reception processing method that can alleviate such CPU burden and can also reduce the cost.

On the other hand, the information exchange using recording media, described in the second prior art method, is no more than simple exchange of data, and has the problem that interoperation between apparatuses, like plug-and-play, cannot be accomplished.

In view of this, in the second aspect of the invention, an event-driven type rule is recorded together with data so that, upon occurrence of a specified event, corresponding processing can be automatically carried out. For example, by preparing a rule that triggers an action by responding to the insertion of a recording medium as an event, various plug-and-play features can be realized. Furthermore, by allowing the imposition of a time limitation on the rule, efficient processing can be achieved.

Further, when it is desired to transmit data created on a personal computer, for example, there are cases in which the place where the data for transmission is created is different from the place where the communication line such as the telephone line is available. This problem can be addressed by laying a special line to the personal computer or by connecting the personal computer via a wireless link, but these measures involve problems of increased cost, limited communication speed, etc. When the method of the second aspect of the invention is used, the problems of telephone line routing, etc. can be solved, because by writing data destination information, transmission time, etc. as event-driven type rules on a recording medium at the data creating side, the transmission can be accomplished by just inserting the recording medium into a transmission apparatus installed at a place where the telephone line is available.

Thus, in view of the problems that interoperation between apparatuses, like plug-and-play, cannot be accomplished when exchanging information between apparatuses, that data exchanged between apparatuses cannot be processed efficiently because of the inability to allow the imposition of a time limitation on the rule when exchanging information, and that when it is desired to transmit data created on a personal computer, a special line has to be routed to the personal computer, resulting in increased cost or limited communication speed, it is an object of the second aspect of the invention to provide an event-driven type file creating apparatus, an event-driven type file reading apparatus, a data storing method, a data processing method, and a program recording medium, which can accomplish interoperation between apparatuses, like plug-and-play, when exchanging information between apparatuses, can allow the imposition of a time limitation on the rule when exchanging information, can efficiently process data being exchanged between apparatuses, and can transmit data created on a personal computer without involving a cost increase or limitation on the communication speed.

In the prior art disclosed in Japanese Unexamined Patent Publication No. 9-149378 and given above as the third prior art example, since the configuration is such that the receiving apparatus directly controls peripheral devices connected to it, control commands for the peripheral devices expected to be connected to the receiving apparatus must be supported in advance at the receiving apparatus side; therefore, when a new function is added to any of the connected peripheral devices, or when it is desired to add a new peripheral device, control commands at the receiving apparatus side must be modified accordingly. For the same reason, while this prior art receiving apparatus is suited for temporarily controlling a peripheral device in accordance with the contents of a broadcast program, such as controlling the brightness of illumination, it is difficult to perform control of constantly such as updating the normal operation of a peripheral device, for example, adding a new recipe to a microwave oven.

In view of the above problems with the prior art receiving apparatus, it is an object of the third and fourth aspects of the invention to provide a receiving apparatus, a receiving method, a transmission method, etc. that can handle the addition of a new peripheral device, the updating of the contents, etc.

### DESCLOSURE OF THE INVENTION

The 1st invention of the present invention is a data transmission method for transmitting:
data consisting of at least one of character data, image data, and voice data;
an event descriptor describing an event for triggering the processing of said data;
a condition descriptor describing a condition (including no condition) for the processing of said data; and
a data processing descriptor describing a specific processing method for said data.

The 2nd invention of the present invention is an event-driven type file creating apparatus comprising:
data processing method specifying means for specifying a method for processing data;
file creating means for storing said data and said specified data processing method in a file; and
file writing means for writing said file to a recording medium.

The 3rd invention of the present invention is a transmission method for transmitting, by multiplexing on a broadcast signal, an additional information storage location identifier indicating the storage location of additional information and a transfer destination identifier expressing transfer destination information of said additional information.

The 4th invention of the present invention is a transmission method for transmitting, by multiplexing on a broadcast signal, an additional information storage location identifier indicating the storage location of additional information, a transfer destination identifier expressing transfer destination information of said additional information, and a user confirmation information descriptor describing contents that need user confirmation regarding said additional information.

### BRIEF DESCRIPTION OF THE DRAWINGS

Figure 1 is a diagram showing the system configuration at the transmitting end according to a first embodiment in the first aspect of the present invention.
Figure 2 is a diagram showing the hardware configuration at the transmitting end according to the first embodiment in the first aspect of the present invention.
Figure 3 is a diagram showing the system configuration at the receiving end according to the first embodiment in the first aspect of the present invention.
Figure 4 is a diagram showing the hardware configuration at the receiving end according to the first embodiment in the first aspect of the present invention.
Figure 5 is a flow chart illustrating the operating procedure at the transmitting end according to the first embodiment in the first aspect of the present invention.
Figure 6 is a diagram showing an example of a GUI at the transmitting end according to the first embodiment in the first aspect of the present invention.
Figure 7 is a diagram showing an example of a set of descriptors generated at the transmitting end according to the first embodiment in the first aspect of the present invention.
Figure 8 is a flow chart illustrating the operating procedure at the receiving end according to the first embodiment in the first aspect of the present invention.
Figure 9 is a diagram showing the system configuration at the transmitting end according to a second embodiment in the first aspect of the present invention.
Figure 10 is a diagram showing the hardware configuration at the transmitting end according to the second embodiment in the first aspect of the present invention.
Figure 11 is a diagram showing the system configuration at the receiving end according to the second embodiment in the first aspect of the present invention.
Figure 12 is a diagram showing the hardware configuration at the receiving end according to the second embodiment in the first aspect of the present invention.
Figure 13 is a flow chart illustrating the operating procedure at the transmitting end according to the second embodiment in the first aspect of the present invention.
Figure 14 is a diagram showing examples of descriptors generated at the transmitting end according to the second embodiment in the first aspect of the present invention.
Figure 15 is a flow chart illustrating the operating procedure at the receiving end according to the second embodiment in the first aspect of the present invention.
Figure 16 is a diagram showing the system configuration at the receiving end according to a third embodiment in the first aspect of the present invention.
Figure 17 is a flow chart illustrating the operating procedure at the receiving end according to the third embodiment in the first aspect of the present invention.
Figure 18 is a diagram showing the system configuration at the receiving end according to a fourth embodiment in the first aspect of the present invention.
Figure 19 is a flow chart illustrating the operating procedure at the receiving end according to the fourth embodiment in the first aspect of the present invention.
Figure 20 is a diagram showing the system configuration at the transmitting end according to a fifth embodiment in the first aspect of the present invention.
Figure 21 is a diagram showing the hardware configuration at the transmitting end according to the fifth embodiment in the first aspect of the present invention.
Figure 22 is a diagram showing the system configuration at the receiving end according to the fifth embodiment in the first aspect of the present invention.
Figure 23 is a diagram showing the hardware configuration at the receiving end according to the fifth embodiment in the first aspect of the present invention.
Figure 24 is a flow chart illustrating the operating procedure at the transmitting end according to the fifth embodiment in the first aspect of the present invention.
Figure 25 is a diagram showing examples of descriptors generated at the transmitting end according to the fifth embodiment in the first aspect of the present invention.
Figure 26 is a flow chart illustrating the operating procedure at the receiving end according to the fifth embodiment in the first aspect of the present invention.
Figure 27 is a diagram showing the system configuration at the writing side according to a first embodiment in the second aspect of the present invention.
Figure 28 is a diagram showing the hardware configuration at the writing side according to the first embodiment in the second aspect of the present invention.
Figure 29 is a diagram showing the system configuration at the reading side according to the first embodiment in the second aspect of the present invention.
Figure 30 is a diagram showing the hardware configuration at the reading side according to the first embodiment in the second aspect of the present invention.
Figure 31 is a flow chart illustrating the operating procedure at the writing side according to the first embodiment in the second aspect of the present invention.
Figure 32 is a diagram showing an example of a GUI at the writing side according to the first embodiment in the second aspect of the present invention.
Figure 33 is a diagram showing an example of a set of files generated at the writing side according to the first embodiment in the second aspect of the present invention.
Figure 34 is a flow chart illustrating the operating procedure at the reading side according to the first embodiment in the second aspect of the present invention.
Figure 35 is a diagram showing the system configuration at the writing side according to a second embodiment in the second aspect of the present invention.
Figure 36 is a diagram showing the hardware configuration at the writing side according to the second embodiment in the second aspect of the present invention.
Figure 37 is a diagram showing the system configuration at the reading side according to the second embodiment in the second aspect of the present invention.
Figure 38 is a diagram showing the hardware configuration at the reading side according to the second embodiment in the second aspect of the present invention.
Figure 39 is a flow chart illustrating the operating procedure at the writing side according to the second embodiment in the second aspect of the present invention.
Figure 40 is a diagram showing an example of a GUI at the writing side according to the second embodiment in the second aspect of the present invention.
Figure 41 is a diagram showing an example of a set of files generated at the writing side according to the second embodiment in the second aspect of the present invention.
Figure 42 is a flow chart illustrating the operating procedure at the reading side according to the second embodiment in the second aspect of the present invention.
Figure 43 is a diagram showing the system configuration at the writing side according to a third embodiment in the second aspect of the present invention.
Figure 44 is a diagram showing the hardware configuration at the writing side according to the third embodiment in the second aspect of the present invention.
Figure 45 is a diagram showing the system configuration at the reading side according to the third embodiment in the second aspect of the present invention.
Figure 46 is a diagram showing the hardware configuration at the reading side according to the third embodiment in the second aspect of the present invention.
Figure 47 is a flow chart illustrating the operating procedure at the writing side according to the third embodiment in the second aspect of the present invention.
Figure 48 is a diagram showing an example of a heating control data input screen at the writing side according to the third embodiment in the second aspect of the present invention.
Figure 49 is a diagram showing an example of a set of files generated at the writing side according to the third embodiment in the second aspect of the present invention.
Figure 50 is a flow chart illustrating the operating procedure at the reading side according to the third embodiment in the second aspect of the present invention.
Figure 51 is a diagram showing the system configuration at the writing side according to a fourth embodiment in the second aspect of the present invention.
Figure 52 is a diagram showing the hardware configuration at the writing side according to the fourth embodiment in the second aspect of the present invention.
Figure 53 is a diagram showing the system configuration at the reading side according to the fourth embodiment in the second aspect of the present invention.
Figure 54 is a diagram showing the hardware configuration at the reading side according to the fourth embodiment in the second aspect of the present invention.
Figure 55 is a flow chart illustrating the operating procedure at the writing side according to the fourth embodiment in the second aspect of the present invention.
Figure 56 is a diagram showing an example of a set of files generated at the writing side according to the fourth embodiment in the second aspect of the present invention.
Figure 57 is a flow chart illustrating the operating procedure at the reading side according to the fourth embodiment in the second aspect of the present invention.
Figure 58 is a diagram showing the system configuration at the transmitting end according to a first embodiment in the third aspect of the present invention.
Figure 59 is a diagram showing the hardware configuration at the transmitting end according to the first embodiment in the third aspect of the present invention.
Figure 60 is a diagram showing the system configuration at the receiving end according to the first embodiment in the third aspect of the present invention.
Figure 61 is a diagram showing the hardware configuration at the receiving end according to the first embodiment in the third aspect of the present invention.
Figure 62 is a flow chart illustrating the operating procedure at the transmitting end according to the first embodiment in the third aspect of the present invention.
Figure 63 is a diagram showing an example of the data format of video, audio, identifier, and additional information multiplexed for transmission.
Figure 64 is a flow chart illustrating the operating procedure at the receiving end according to the first embodiment in the third aspect of the present invention.
Figure 65 is a diagram showing the system configuration at the transmitting end according to a first embodiment in the fourth aspect of the present invention.
Figure 66 is a diagram showing the hardware configuration at the transmitting end according to the first embodiment in the fourth aspect of the present invention.
Figure 67 is a diagram showing the system configuration at the receiving end according to the first embodiment in the fourth aspect of the present invention.
Figure 68 is a diagram showing the hardware configuration at the receiving end according to the first embodiment in the fourth aspect of the present invention.
Figure 69 is a flow chart illustrating the operating procedure at the transmitting end according to the first embodiment in the fourth aspect of the present invention.
Figure 70 is a diagram showing an example of the data format of video, audio, identifier, and additional information multiplexed for transmission.
Figure 71 is a flow chart illustrating the operating procedure at the receiving end according to the first embodiment in the fourth aspect of the present invention.
Figure 72 is a diagram showing a screen display example at the receiving end according to the first embodiment in the fourth aspect of the present invention.
Figure 73 is a diagram showing the system configuration of a second embodiment in the fourth aspect of the present invention.
Figure 74 is a diagram showing the hardware configuration of the second embodiment in the fourth aspect of the present invention.
Figure 75 is a flow chart illustrating an operating procedure according to the second embodiment in the fourth aspect of the present invention.
Figure 76 is a diagram showing the system configuration of a third embodiment in the fourth aspect of the present invention.
Figure 77 is a diagram showing the hardware configuration of the third embodiment in the fourth aspect of the present invention.
Figure 78 is a flow chart illustrating an operating procedure according to the third embodiment in the fourth aspect of the present invention.
Figure 79 is a diagram showing the system configuration of a fourth embodiment in the fourth aspect of the present invention.
Figure 80 is a diagram showing the hardware configuration of the fourth embodiment in the fourth aspect of the present invention.
Figure 81 is a flow chart illustrating an operating procedure according to the fourth embodiment in the fourth aspect of the present invention.
Figure 82 is a diagram showing the system configuration of a fifth embodiment in the fourth aspect of the present invention.
Figure 83 is a diagram showing the hardware configuration of the fifth embodiment in the fourth aspect of the present invention.
Figure 84 is a flow chart illustrating an operating procedure according to the fifth embodiment in the fourth aspect of the present invention.
Figure 85 is a diagram showing the system configuration of a sixth embodiment in the fourth aspect of the present invention.
Figure 86 is a diagram showing the hardware configuration of the sixth embodiment in the fourth aspect of the present invention.
Figure 87 is a flow chart illustrating an operating procedure according to the sixth embodiment in the fourth aspect of the present invention.

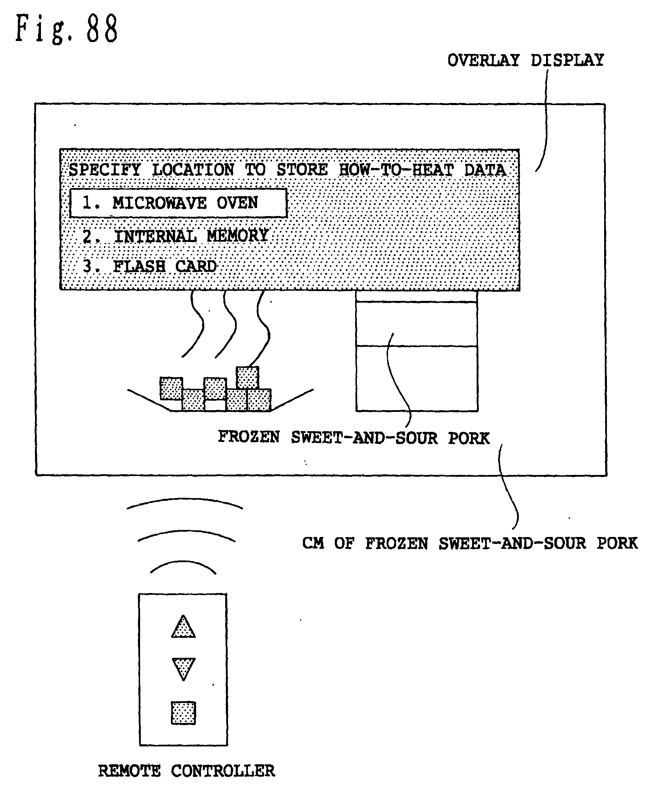

Figure 88 is a diagram showing an example of a screen display according to the sixth embodiment in the fourth aspect of the present invention.

### DESCRIPTION OF REFERENCE NUMERALS

101. TRANSMISSION DATA SPECIFYING MEANS
102. DATA PROCESSING METHOD SPECIFYING MEANS
103. DESCRIPTOR GENERATING UNIT
104. TRANSMISSION DATA COMBINING UNIT
105. TRANSMITTING UNIT
106. MODEM
107. TIME LIMITATION SPECIFYING MEANS
108. TIME LIMITING DESCRIPTOR GENERATING UNIT
201. CPU
202. MAIN STORAGE DEVICE
203. AUXILIARY STORAGE DEVICE
301. RECEIVING UNIT
302. RECEIVED DATA DEMULTIPLEXING UNIT
303. DATA STORING MEANS
304. DATA PROCESSING DESCRIPTOR STORING MEANS
305. CONDITION DESCRIPTOR STORING MEANS
306. EVENT DESCRIPTOR STORING MEANS
307. DATA PROCESSING UNIT
308. CONDITION EVALUATING UNIT
309. EVENT RECEIVING UNIT
310. DATA DISPLAY MEANS
311. USER INPUT MEANS
312. EVENT TIME LIMITING DESCRIPTOR STORING MEANS
313. EVENT RECEPTION MANAGEMENT UNIT
314. TIMING MEANS
315. CONDITION TIME LIMITING DESCRIPTOR STORING MEANS
316. CONDITION EVALUATION CONTROL UNIT
317. PROCESSING TIME LIMITING DESCRIPTOR STORING MEANS
318. PROCESSING TIME CONTROL UNIT
401. VRAM
501. SIGNAL ENCODING UNIT
502. EVENT DESCRIPTOR ENCODING UNIT
503. RULE ENCODING UNIT
504. ADDITIONAL INFORMATION ENCODING UNIT
505. MULTIPLEXING UNIT
506. TRANSMITTING UNIT
507. UP CONVERTER
508. TRANSMITTING ANTENNA
701. RECEIVING ANTENNA
702. DOWN CONVERTER
703. TUNER
704. DEMULTIPLEXING UNIT
705. SIGNAL DECODING UNIT
706. EVENT DESCRIPTOR DECODING UNIT
707. RULE DECODING UNIT
708. ADDITIONAL INFORMATION DECODING UNIT
709. RULE EXECUTING UNIT
710 MONITOR
711. SPEAKER
101A. DATA SPECIFYING MEANS
102A. DATA PROCESSING METHOD SPECIFYING MEANS
103A. DESCRIPTOR GENERATING UNIT
104A. FILE CREATING UNIT
105A. FILE WRITING UNIT
201A. CPU
202A. MAIN STORAGE DEVICE
203A. AUXILIARY STORAGE DEVICE
301A. FILE READING UNIT
302A. IDENTIFIER DEMULTIPLEXING UNIT
303A. DATA PROCESSING DESCRIPTOR STORING MEANS
304A. CONDITION DESCRIPTOR STORING MEANS
305A. EVENT DESCRIPTOR STORING MEANS
306A. DATA PROCESSING UNIT
307A. CONDITION EVALUATING UNIT
308A. EVENT RECEIVING UNIT
309A. DATA DISPLAY MEANS
310A. TIMING MEANS
401A. VRAM
501A. DATA TRANSMISSION METHOD SPECIFYING MEANS
701A. DESTINATION DESCRIPTOR STORING MEANS
702A. DATA TRANSMITTING UNIT
703A. MODEM
901A. HEATING CONTROL DATA INPUT MEANS
902A. HEATING CONDITION SPECIFYING MEANS
1101A. HEATING CONTROL UNIT
1102A. COOKING HEATER
1103A. USER INPUT UNIT
1104A. HEATING CONTROL DATA STORING MEANS
1301A. RELATED INFORMATION SPECIFYING MEANS
1302A. DISPLAY CONDITION SPECIFYING MEANS
1501A. RELATED INFORMATION DISPLAY MEANS
1502A. PROGRAM SELECTING MEANS
101B. SIGNAL ENCODING UNIT
102B. IDENTIFIER 1 ENCODING UNIT
103B. IDENTIFIER 2 ENCODING UNIT
104B. ADDITIONAL INFORMATION ENCODING UNIT
105B. MULTIPLEXING UNIT
106B. TRANSMITTING UNIT
107B. UP CONVERTER
108B. TRANSMITTING ANTENNA
201B. CPU
202B. MAIN STORAGE DEVICE
203B. AUXILIARY STORAGE DEVICE
301B. RECEIVING ANTENNA
302B. DOWN CONVERTER
303B. TUNER
304B. DEMULTIPLEXING UNIT
305B. SIGNAL DECODING UNIT
306B. IDENTIFIER 1 DECODING UNIT
307B. IDENTIFIER 2 DECODING UNIT
308B. ADDITIONAL INFORMATION DECODING UNIT
309B. TRANSFERRING UNIT
310B. MONITOR
311B. SPEAKER
101C. SIGNAL ENCODING UNIT
102C. STORAGE LOCATION IDENTIFIER ENCODING UNIT
103C. TRANSFER DESTINATION IDENTIFIER ENCODING UNIT
104C. USER CONFIRMATION INFORMATION ENCODING UNIT
105C. ADDITIONAL INFORMATION ENCODING UNIT
106C. MULTIPLEXING UNIT
107C. TRANSMITTING UNIT
108C. UP CONVERTER
109C. TRANSMITTING ANTENNA
201C. CPU
202C. MAIN STORAGE DEVICE
203C. AUXILIARY STORAGE DEVICE
301C. RECEIVING ANTENNA
302C. DOWN CONVERTER
303C. TUNER
304C. DEMULTIPLEXING UNIT
305C. SIGNAL DECODING UNIT
306C. STORAGE LOCATION IDENTIFIER DECODING UNIT
307C. TRANSFER DESTINATION IDENTIFIER DECODING UNIT
308C. ADDITIONAL INFORMATION DECODING UNIT
309C. USER CONFIRMATION INFORMATION DESCRIPTOR DECODING UNIT
310C. TIME MEASURING UNIT
311C. TRANSFERRING UNIT
312C. MONITOR
313C. SPEAKER

### BEST MODE FOR CARRYING OUT THE INVENTION

Various embodiments in accordance with the first aspect of the present invention will be described first.

### (Embodiment 1 in the First Aspect of the Invention)

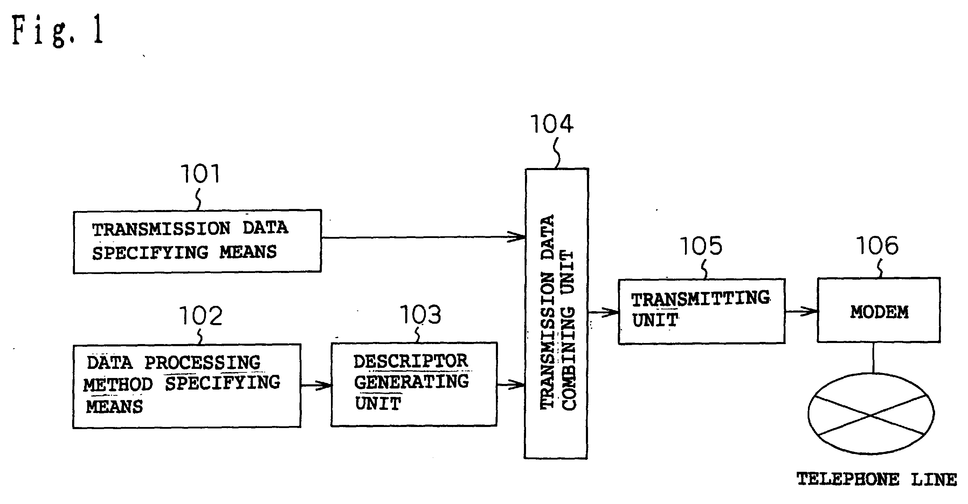

Figure 1 is a diagram showing the system configuration at the transmitting end according to a first embodiment in the first aspect of the present invention. In Figure 1, reference numeral 101 is a transmission data specifying means for specifying data to be transmitted, 102 is a data processing method specifying means for specifying how the transmitted data is to be processed at the receiving end, 103 is a descriptor generating unit for generating an event descriptor, a condition descriptor, and a data processing descriptor in accordance with the data processing method specified by the data processing method specifying means 102, 104 is a transmission data combining unit for compressing the transmission data and the descriptors and combining them together, 105 is a transmitting unit for transmitting the data combined in the transmission data combining unit 104 in accordance with a prescribed protocol, and 106 is a modem.

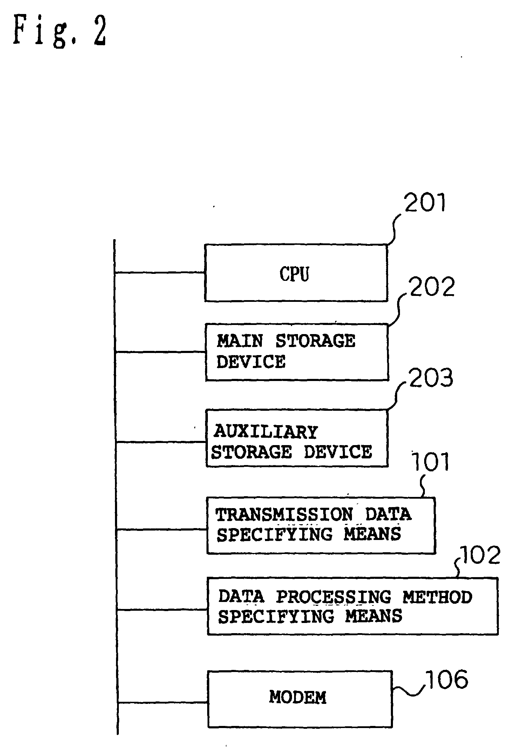

Figure 2 shows the hardware configuration of the present embodiment for implementing the above-configured system at the transmitting end. The configuration shown in Figure 2 is basically the same as that of a general purpose computer system.

Since this hardware configuration includes the same constituent elements as those shown in the system configuration of Figure 1, the same constituent elements will be designated by the same reference numerals and will not be specifically described herein. In Figure 2, reference numeral 202 is a main storage device constructed from a volatile memory for storing programs, 203 is an auxiliary storage device constructed from a nonvolatile memory in which programs and other data are stored, and 201 is a CPU for executing the programs stored in the main storage device 202. As noted above, the hardware configuration is basically the same as that of a general purpose computer system, so that any program stored on the auxiliary storage device 203 is first loaded into the main storage device 202 before it can be executed by the CPU 201.

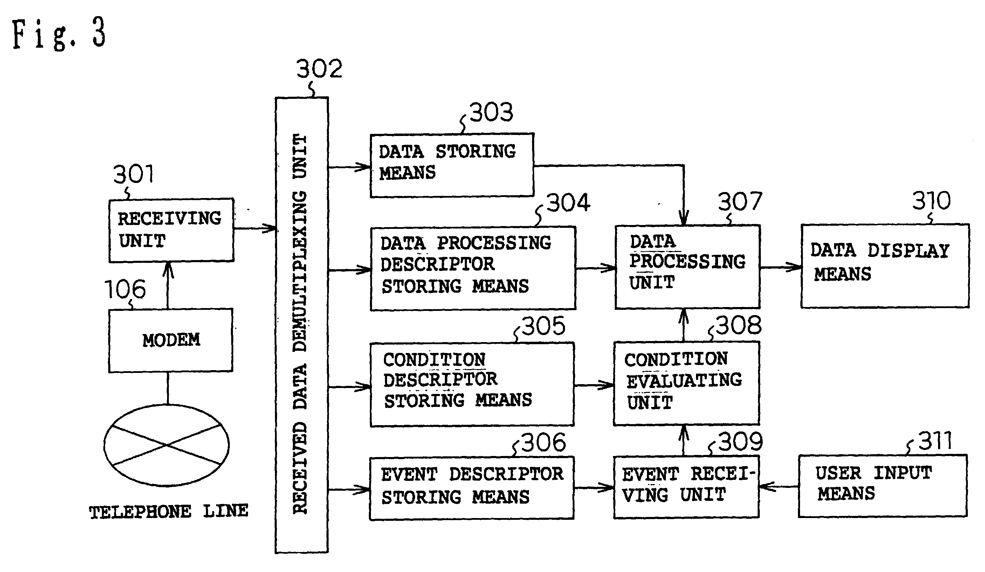

The system configuration at the receiving end is shown in Figure 3. This system configuration includes the same constituent elements as those shown in the system configuration of Figure 1; therefore, the same constituent elements will be designated by the same reference numerals and will not be specifically described herein. In Figure 3, reference numeral 301 is a receiving unit for receiving data in accordance with a prescribed protocol, 302 is a received data demultiplexing unit for expanding and demultiplexing the received data, 303 is a data storing means for storing the demultiplexed data, 304 is a data processing descriptor storing means for storing the data processing descriptor out of the demultiplexed descriptors, 305 is a condition descriptor storing means for storing the condition descriptor, 306 is an event descriptor storing means for storing the event descriptor, 307 is a data processing unit for processing the data stored in the data storing means 303 in accordance with the data processing descriptor, 308 is a condition evaluating unit for evaluating the condition in accordance with the condition descriptor, 309 is an event receiving unit for receiving the occurrence of an event in accordance with the event descriptor, 310 is a data display means for displaying the data, and 311 is a user input means for accepting an input from a user.

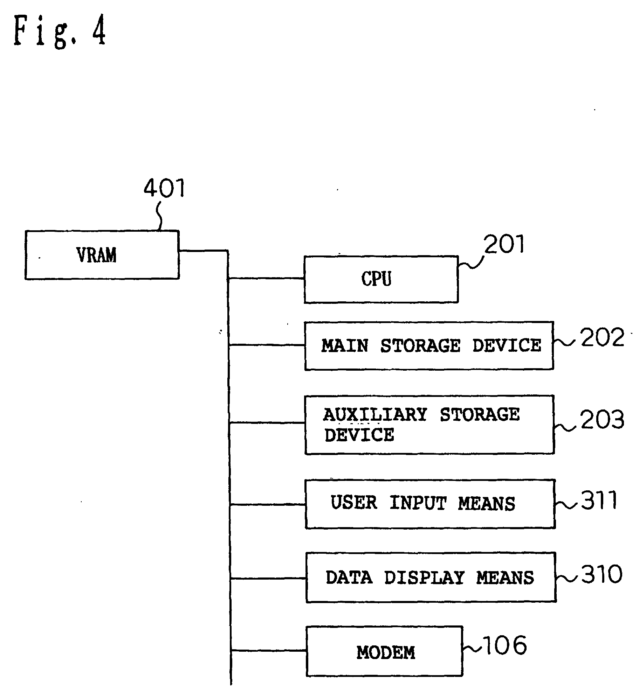

Figure 4 shows the hardware configuration of the present embodiment for implementing the above-configured system. The configuration shown in Figure 4 is basically the same as that of a general purpose computer system.

Since this hardware configuration includes the same constituent elements as those shown in the system configuration of Figure 2 or 3, the same constituent elements will be designated by the same reference numerals and will not be specifically described herein. Reference numeral 401 is a VRAM for storing image data, etc. for implementing an graphic user interface.

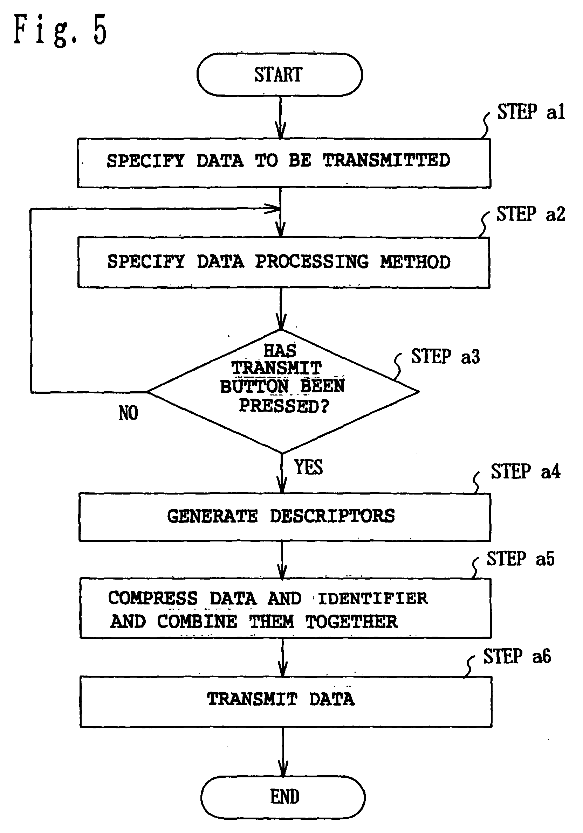

The operation of the above-configured systems will be described, first the transmitting system and then the receiving system. The operation at the transmitting end will be described with reference to the flow chart of Figure 5.

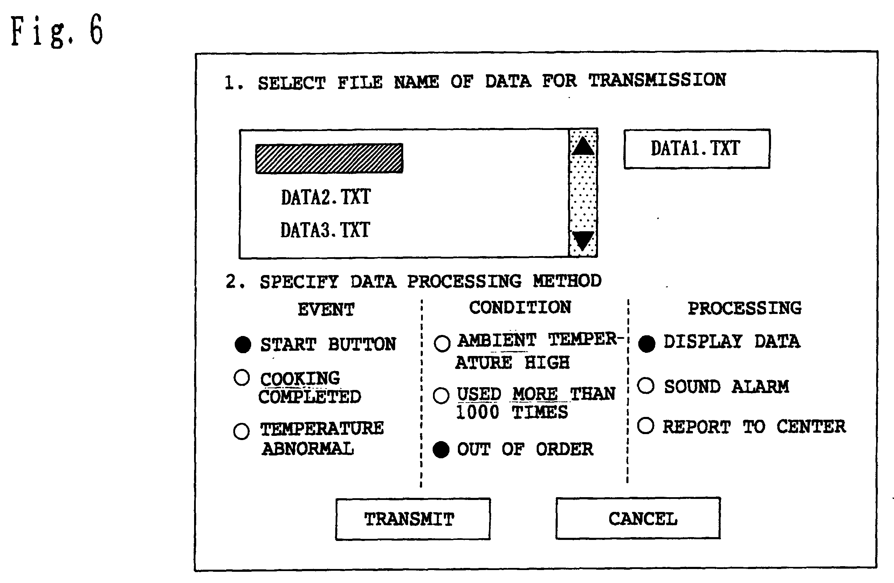

The description given hereinafter deals with an example of transmitting and receiving a condition for performing processing to display a message "THIS OVEN IS OUT OF ORDER PLEASE USE THE OVEN NEXT TO THIS ONE" when the user presses the start button on a microwave oven which is out of order. In this example, it is assumed that the transmission data and the data processing method are specified using a GUI such as shown in Figure 6.

### 〈Step a1〉

Specifies the data to be transmitted. In this example, the message "THIS OVEN IS OUT OF ORDER PLEASE USE THE OVEN NEXT TO THIS ONE" is created using an editor and given a name "DATA1.TXT", and this data is specified as the transmission data.

### 〈Step a2〉

Specifies the data processing method. In this example, since the purpose is to display the data when the user presses the start button, "START BUTTON IS PRESSED" is selected as the event, "OVEN OUT OF ORDER" is selected as the condition, and finally "DISPLAY" is selected as the specific data processing method.

### 〈Step a3〉

Continues to accept the specification of the data processing method being entered in step a2 until the transmit button is pressed. When the transmit button is pressed, the process proceeds to step a4.

### 〈Step a4〉

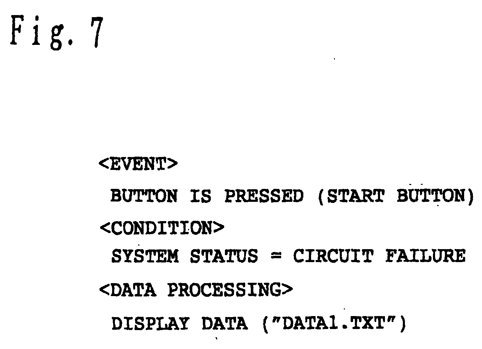

Generates the event descriptor, condition descriptor, and data processing descriptor in accordance with the specified data processing method. Examples of the descriptors generated here are shown in Figure 7.

### 〈Step a5〉

The transmission data combining unit 104 compresses the specified data and the descriptors and combines them together.

### 〈Step a6〉

The transmitting unit 105 transmits the data via the modem 106 in accordance with a prescribed protocol, after which the step is terminated.

In the present embodiment, text data is used as the data to be transmitted, but image data such as GIF or JPEG, image data such as MPEG, or data described using such a language as HTML or XML may also be used. Furthermore, binary data (including byte code) or program, executable at the receiving end, may be transmitted as the data. Such data can be used, for example, for upgrading software at the receiving apparatus side. In cases where a command or program for directly controlling a device at the receiving side is described in the data processing descriptor, or where display data is described by including it in the data processing descriptor, the main body of the data to be processed need not necessarily be transmitted (this corresponds to claims 13 and 14). It is also possible to describe the respective descriptors by grouping them together using a multipart of MIME, etc. In the present embodiment, a modem is used as the communication device, but it will be appreciated that other type of communication device may be used depending on the communication line used (a digital line, the Internet, digital broadcasting, etc.). A proprietary protocol may be used as the communication protocol, or any other protocol, such as XMODEM, FTP, HTTP, SMTP, or BFT of G3, may be used.

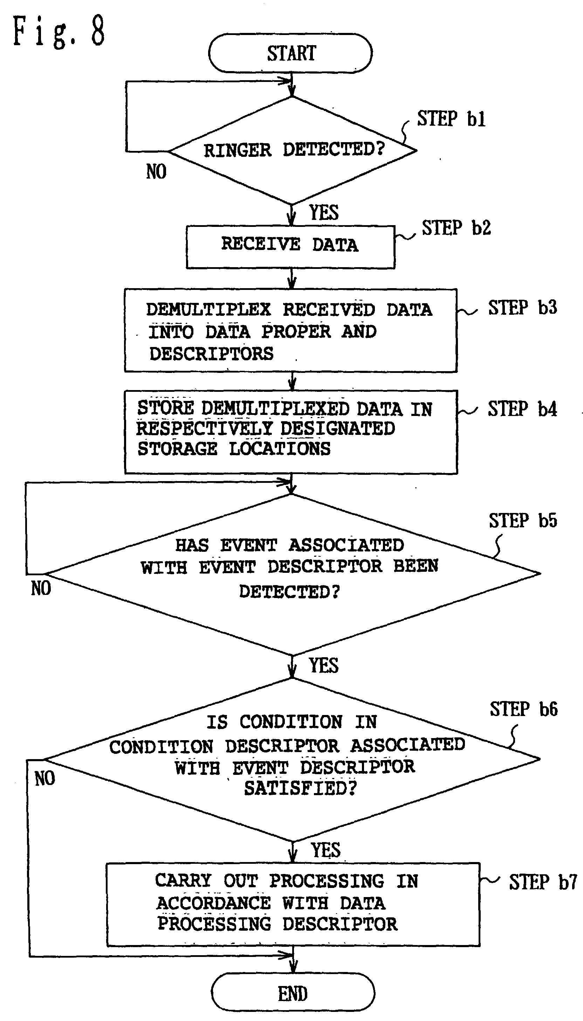

Next, the operation at the receiving end will be described with reference to the flow chart of Figure 8.
〈Step b1〉 Waits in ringer waiting mode and, upon receiving a ringer, goes off hook to connect the line.
〈Step b2〉 Receives data via the modem 106 in accordance with a prescribed protocol.
〈Step b3〉 When the reception of the data is completed in step b2, the received data is expanded and demultiplexed into the data and the descriptors, i.e., the event descriptor, the condition descriptor, and the data processing descriptor.
〈Step b4〉 The demultiplexed data is stored in the data storing means 303, the data processing descriptor is stored in the data processing descriptor storing means 304, the condition descriptor is stored in the condition descriptor storing means 305, and the event descriptor stored in the event descriptor storing means 306.
〈Step b5〉 The event receiving unit 309 receives the event described in the event descriptor. When the event is received, the process proceeds to step 6 with the corresponding event descriptor. In this example, "START BUTTON IS PRESSED" from the user input means 311 is received as the event.
〈Step b6〉 The condition evaluating unit 308 evaluates the condition described in the condition descriptor associated with the event descriptor passed from step b5. If the condition is satisfied, the process proceeds to step b7. In this example, it is examined whether the condition "OVEN OUT OF ORDER" is satisfied or not.
〈Step b7〉 In accordance with the data processing descriptor corresponding the condition descriptor whose condition is satisfied in step b6, the data processing unit 307 processes the data, after which the step is terminated. In this example, the message "THIS OVEN IS OUT OF ORDER PLEASE USE THE OVEN NEXT TO THIS ONE" is displayed on the data display means 310.

The above embodiment has dealt with the simplest example of display as an example of the data processing, but a condition concerning a user profile may be described in the condition descriptor, and processing for editing the contents of data to match the user may be included in the description.

Using the data transmission method and reception processing method described above, it becomes possible to transmit an event-driven type rule that evaluates the condition based on the event occurring at the receiving end, and to perform operation that matches the status at the receiving end.

To summarize, since an event such as a user input generally occurs at an unexpected time and at irregular intervals of time, if a method is employed that requires the CPU to periodically monitor for a user input, the burden would become too large; therefore, event-driven type processing as employed in the present invention offers a great advantage.

### (Embodiment 2 in the First Aspect of the Invention)

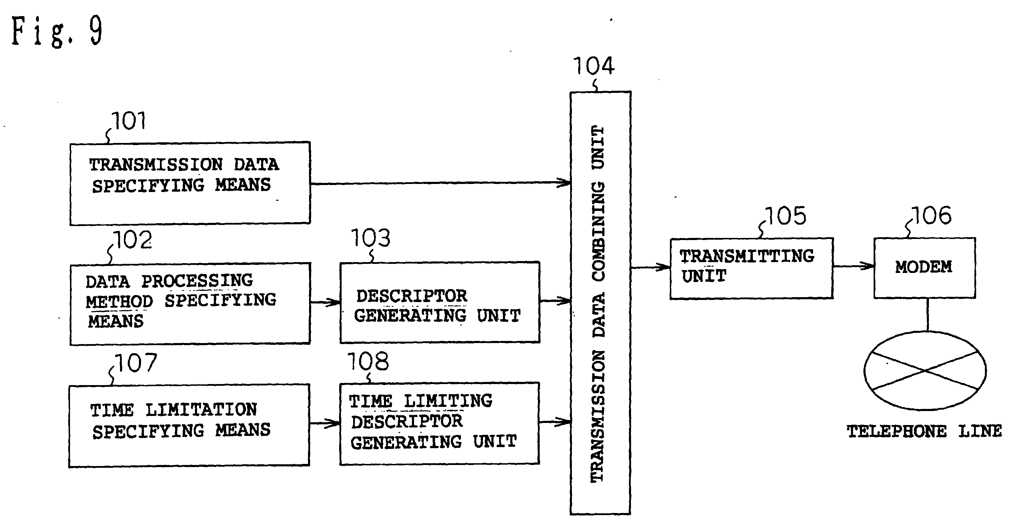

Figure 9 is a diagram showing the system configuration at the transmitting end according to a second embodiment in the first aspect of the present invention. This system configuration includes the same constituent elements as those shown in the system configuration of Figure 1; therefore, the same constituent elements will be designated by the same reference numerals and will not be specifically described herein. In Figure 9, reference numeral 107 is a time limitation specifying means for specifying a time limitation, and 108 is a time limiting descriptor generating unit for generating an event time limiting descriptor, a condition time limiting descriptor, and a processing time limiting descriptor in accordance with the time limitation specified by the time limitation specifying means 107; here, the transmission data combining unit 104 combines the data including these time limiting descriptors.

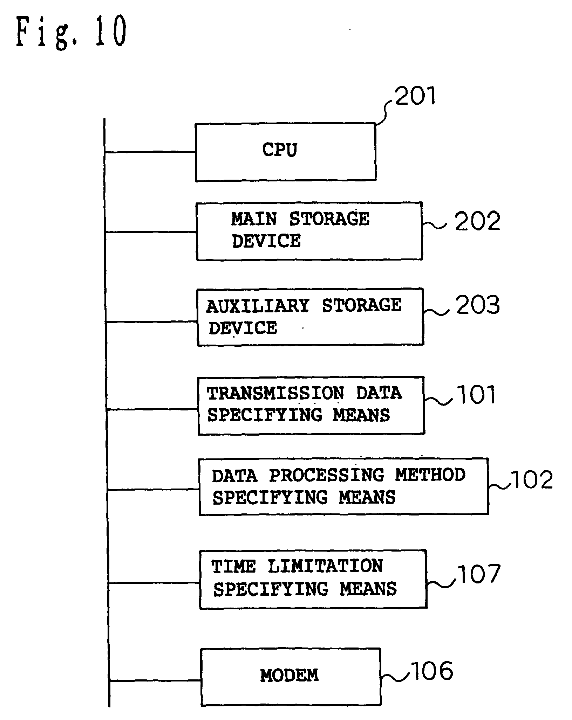

Figure 10 shows the hardware configuration of the present embodiment for implementing the above-configured transmitting system. The configuration shown in Figure 10 is basically the same as that of a general purpose computer system. Since this hardware configuration includes the same constituent elements as those shown in the system configuration of Figure 9, the same constituent elements will be designated by the same reference numerals and will not be specifically described herein.

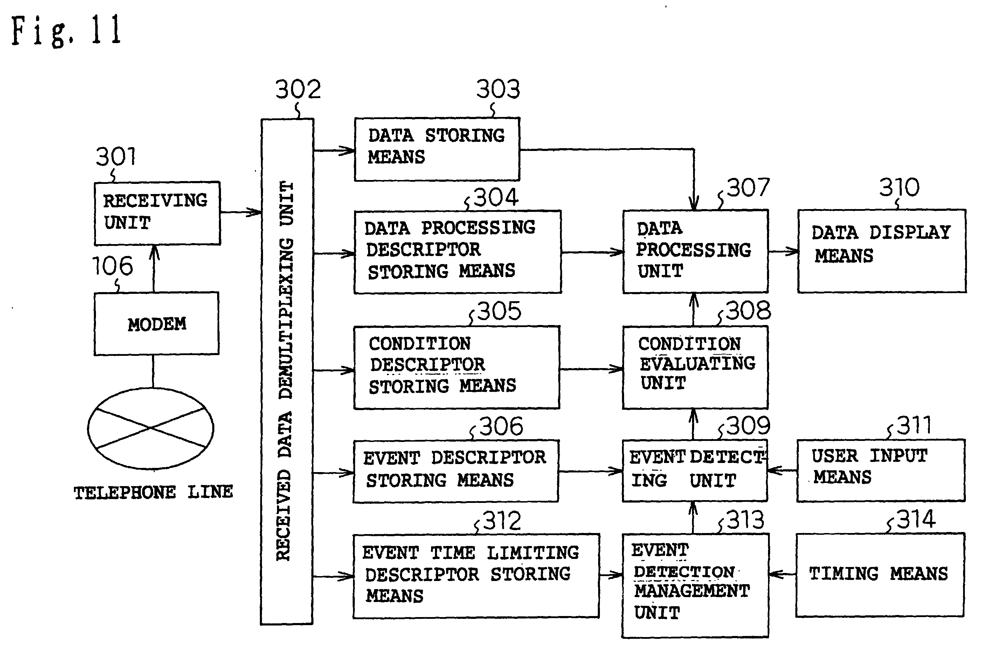

The system configuration at the receiving end is shown in Figure 11. The embodiment shown in Figure 11 concerns the case where only the event time limitation is imposed. This system configuration includes the same constituent elements as those shown in the system configuration of Figure 9; therefore, the same constituent elements will be designated by the same reference numerals and will not be specifically described herein. In Figure 11, reference numeral 312 is an event time limiting descriptor storing means for storing the event time limiting descriptor demultiplexed from the received data, 313 is an event reception management unit for managing the validity/invalidity of the reception of an event on the basis of the event time limiting descriptor, and 314 is a timing means for holding the current time and measuring a time interval.

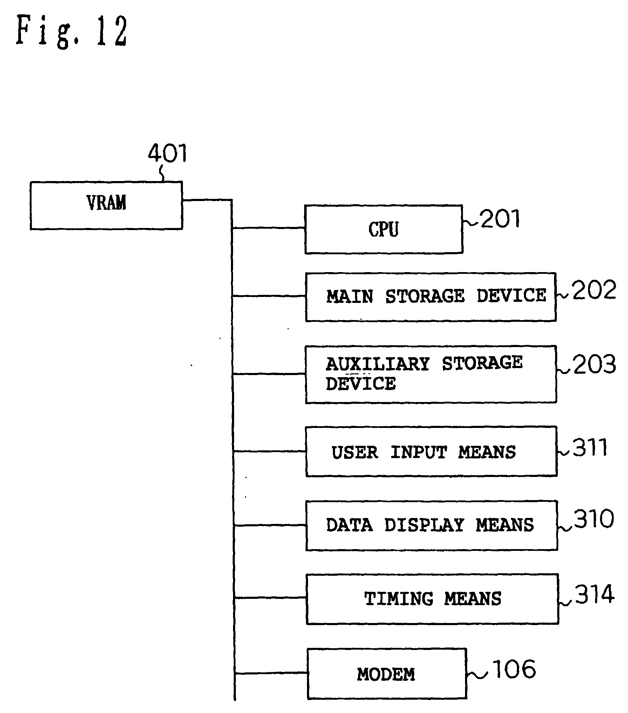

Figure 12 shows the hardware configuration of the present embodiment for implementing the above-configured system. The configuration shown in Figure 12 is basically the same as that of a general purpose computer system. Since this hardware configuration includes the same constituent elements as those shown in the system configuration of Figure 2 or 11, the same constituent elements will be designated by the same reference numerals and will not be specifically described herein.

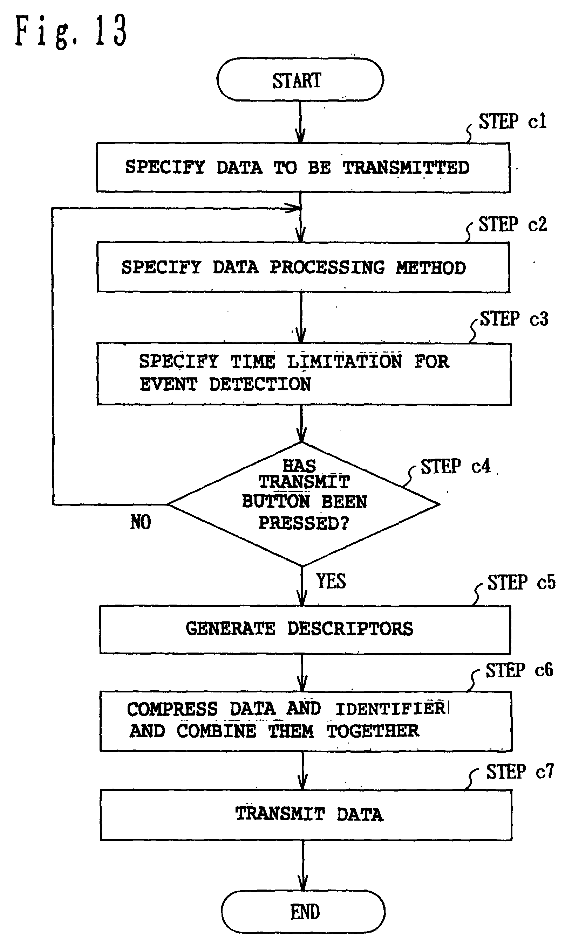

The operation of the above-configured systems will be described, first the transmitting system and then the receiving system. The operation at the transmitting end will be described with reference to the flow chart of Figure 13.

The description given hereinafter deals with an example of transmitting information, about presents for which the deadline for applications is set. When the apply button is selected, an application entry format is displayed if the date is not past the deadline of September 30th, and from October 1st onward, a message "WE RAVE ALREADY CLOSED APPLICATIONS" is displayed.

### 〈Step c1〉

Specifies the data to be transmitted. In this example, the main body of the information, the application entry format ("FORM1.DAT"), and the message "WE HAVE ALREADY CLOSED APPLICATIONS" ("DATA2.TXT") are created, and specified as the data to be transmitted.

### 〈Step c2〉

Specifies the data processing method. In this example, the method is specified so that prescribed information is displayed when the user presses the apply button. Since one of two different screens is selected for display according to the time limit described hereinafter, the processing for display is specified for each case. If there is no specific condition concerning the display, the condition need not be specified. If the condition is not specified, it is assumed that the condition always holds.

### 〈Step c3〉

Specifies the time limit for the reception of an event. In this example, since it is desired to change the contents of display according to the date for the same event of "APPLY BUTTON IS PRESSED", art event time limitation is imposed on each of the two different kinds of display processing specified in step c2 so that one is valid through September 30th and the other becomes valid on October 1st.

### 〈Step c4〉

Continues to accept the specification of the time limit being entered in step c3 until the transmit button is pressed. When the transmit button is pressed, the process proceeds to step c5.

### 〈Step c5〉

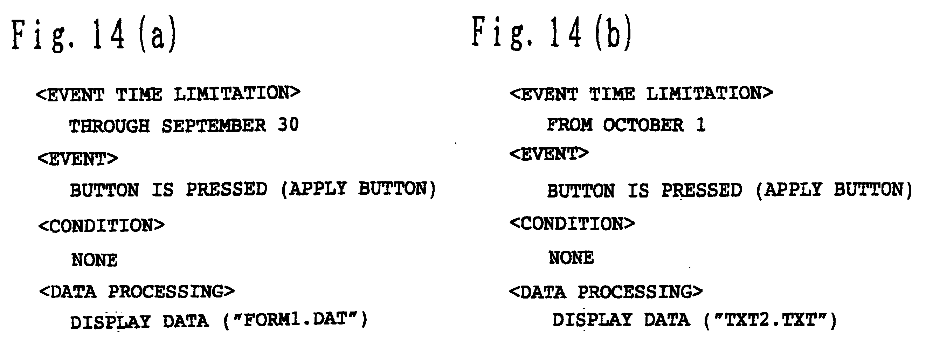

Generates the event descriptor, condition descriptor, and data processing descriptor in accordance with the specified data processing method, and generates the event time limiting descriptor in accordance with the specified time limitation. In this example, since one of the two different kinds of processing is carried out depending on the time segment, two sets of descriptors having the same event descriptor but different time limits are generated. Examples of the descriptors generated in step c5 are shown in Figure 14.

### 〈Step c6〉

The transmission data combining unit 104 compresses the specified data and each of the descriptors and combines them together.

### 〈Step c7〉

The transmitting unit 105 transmits the data via the modem 106 in accordance with a prescribed protocol, after which the step is terminated.

The present embodiment has dealt with the case where a time limitation is specified only for the event, but it will be appreciated that a time limitation can also be specified for the condition or the data processing. When a time limitation is specified for the condition or the data processing, the condition time limiting descriptor or the processing time limiting descriptor is also generated in step c5, and all the descriptors generated are compressed and combined together in step c6.

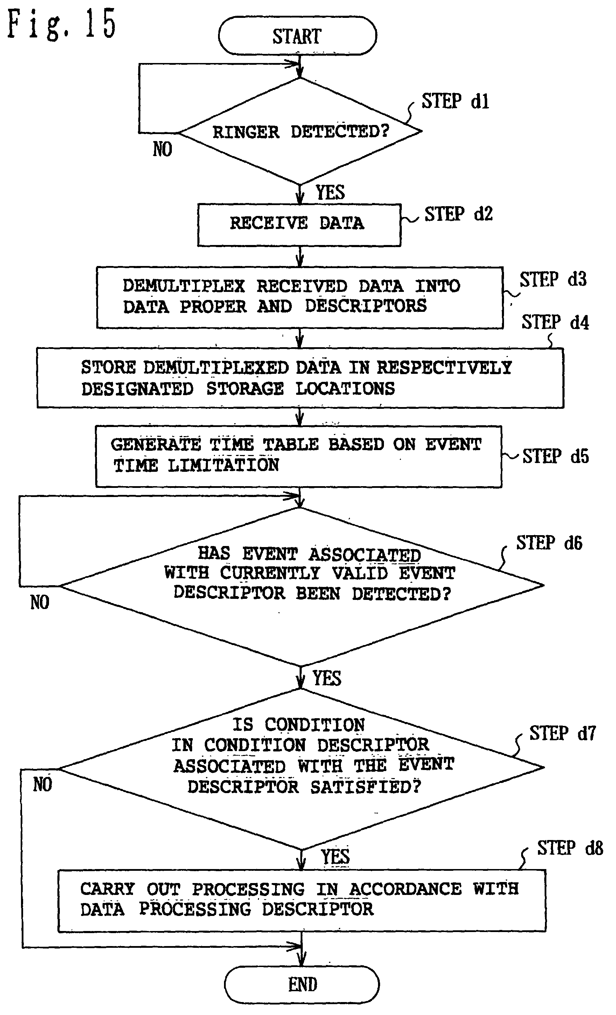

Next, the operation at the receiving end will be described with reference to the flow chart of Figure 15.

### 〈Step d1〉

Waits in ringer waiting mode and, upon detection of a ringer, goes off hook to connect the line.

### 〈Step d2〉

Receives data via the modem 106 in accordance with a prescribed protocol.

### 〈Step d3〉

When the reception of the data is completed in step d2, the received data is expanded and demultiplexed into the data and the descriptors, i.e., the event time limiting descriptor, the event descriptor, the condition descriptor, and the data processing descriptor.

### 〈Step d4〉

The demultiplexed data is stored in the data storing means 303, the data processing descriptor is stored in the data processing descriptor storing means 304, the condition descriptor is stored in the condition descriptor storing means 305, the event descriptor is stored in the event descriptor storing means 306, and the event time limiting descriptor is stored in the event time limiting descriptor storing means 312.

### 〈Step d5〉

By referring to the event time limiting descriptor, a time table is generated that is used to manage the periods during which the respective event descriptors are valid. In this example, the time table is generated such that the descriptor in part (a) of Figure 14 is valid through September 30th and the descriptor in part (b) of Figure 14 is valid from October 1st onward.

### 〈Step d6〉

Based on the time table generated in step d5, the event receiving unit 309 receives the event associated with the event descriptor currently valid for reception. When the event is received, the process proceeds to step d6. In this example, since both of the descriptors shown in parts (a) and (b) of Figure 14 are specified to receive the same event, "APPLY BUTTON IS PRESSED" from the user input means 311 is received as the event regardless of the date (though the condition to be evaluated and the data processing to be performed both differ depending on the date of event reception).

### 〈Step d7〉

The condition evaluating unit 308 evaluates the condition described in the condition descriptor associated with the currently valid event descriptor passed from step d6. If the condition is satisfied, the process proceeds to step d8. In this example, since the condition is not specified, it is always assumed that the condition is satisfied.

### 〈Step d8〉

In accordance with the data processing descriptor associated with the condition descriptor whose condition is satisfied in step d7, the data processing unit 307 processes the data, after which the step is terminated. In this example, if the date is not later than September 30th, the data processing shown in part (a) of Figure 14 is performed to display the application format, and if the date is October istor later, the data processing shown in part (b) of Figure 14 is performed to display the message "WE HAVE ALREADY CLOSED APPLICATIONS" on the data display means 310.

The above embodiment has dealt with the simplest example of display as an example of the data processing, but in a sales system, for example, it is possible to describe the processing such that if 80% of the sales target is attained by 18:00, then merchandise will be sold at a discount.

Using the data transmission method and reception processing method described above, a rule that can automatically change the method of processing for an event at the receiving end according to the date of the occurrence of the event can be easily created at the transmitting end for transmission. Accordingly, different processing can be performed for the same event, for example, according to the time segment, or processing that is valid only during a certain time segment can be realized.

### (Embodiment 3 in the First Aspect of the Invention)

The system configuration and hardware configuration at the transmitting end according to a third embodiment of the present invention are the same as the configurations respectively shown in Figures 9 and 10; therefore, the description thereof will not be repeated here.

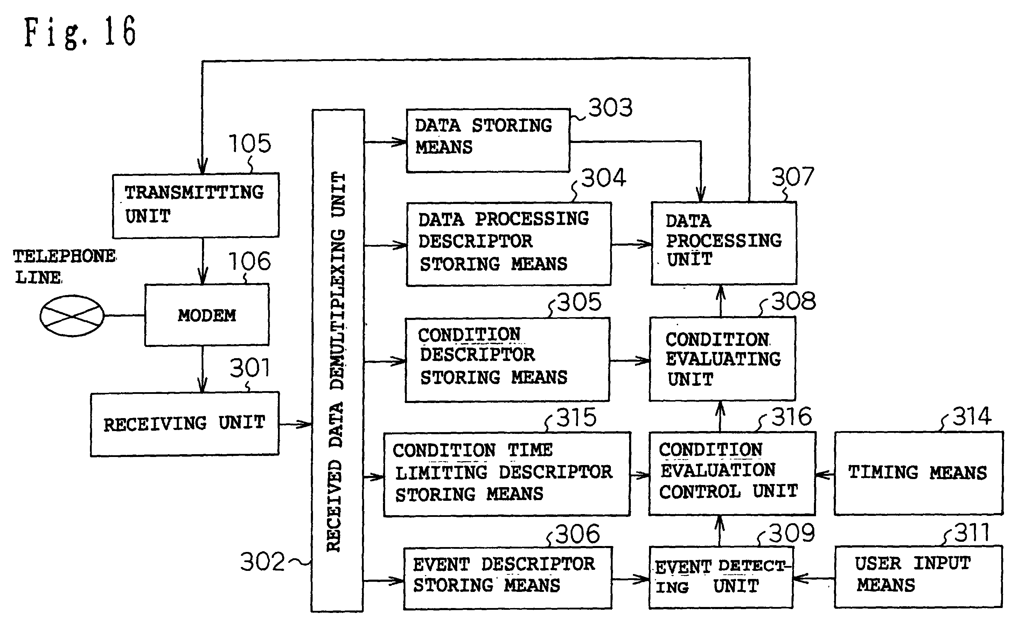

The system configuration at the receiving end is shown in Figure 16. This system configuration includes the same constituent elements as those shown in the system configuration of Figure 11; therefore, the same constituent elements will be designated by the same reference numerals and will not be specifically described herein. In Figure 16, reference numeral 315 is a condition time limiting descriptor storing means for storing the condition time limiting descriptor demultiplexed from the received data, and 316 is a condition evaluation control unit for controlling the condition evaluation in accordance with the condition time limiting descriptor.

The hardware configuration of the present embodiment for implementing the above-configured system is the same as that shown in Figure 12, and therefore, the description thereof will not be repeated here.

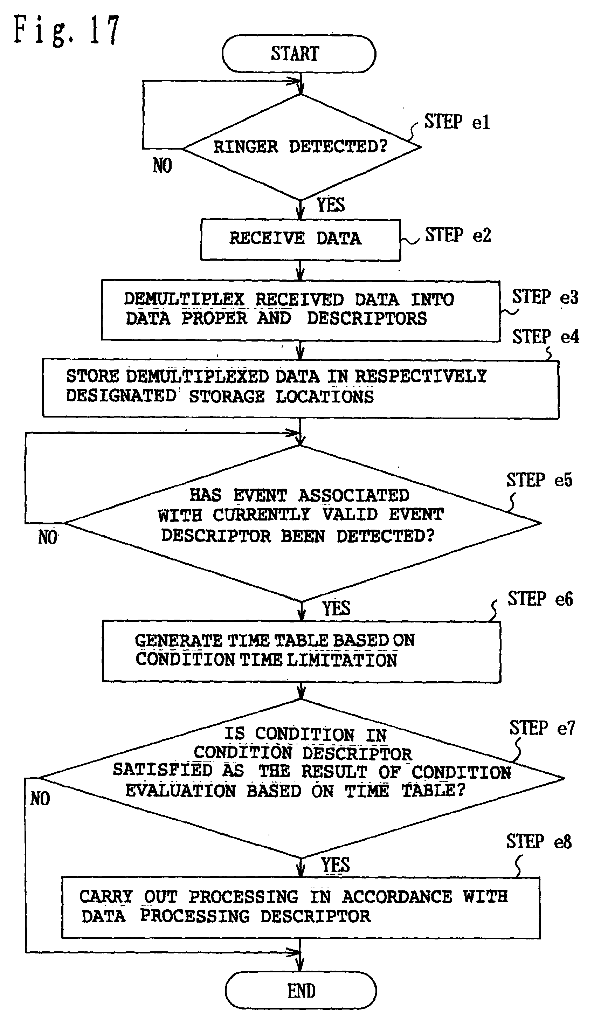

The operation of the above-configured system will be described. The operation at the transmitting end will not be described here since it is substantially the same as the operation illustrated in the flow chart of Figure 13; therefore, the operation at the receiving end only will be described below with reference to the flow chart of Figure 17.

The description given hereinafter deals with the case where, in inventory control, for example, if specific merchandise has been left unsold for more than one month after it was delivered to the store, a report is sent to the center.

### 〈Step e1〉

Waits in ringer waiting mode and, upon detection of a ringer, goes off hook to connect the line.

### 〈Step e2〉

Receives data via the modem 106 in accordance with a prescribed protocol.

### 〈Step e3〉

When the reception of the data is completed in step e2, the received data is expanded and demultiplexed into the data and the descriptors, i.e., the event descriptor, the condition time limiting descriptor, the condition descriptor, and the data processing descriptor.

### 〈Step e4〉

The demultiplexed data is stored in the data storing means 303, the data processing descriptor is stored in the data processing descriptor storing means 304, the condition descriptor is stored in the condition descriptor storing means 305, the event descriptor is stored in the event descriptor storing means 306, and the condition time limiting descriptor is stored in the condition time limiting descriptor storing means 315.

### 〈Step e5〉

The event receiving unit 309 receives the event described in the event descriptor. When the event is received, the process proceeds to step e6. In this example, "MERCHANDISE DELIVERED" from the user input means 311 is received as the event.

### 〈Step e6〉

A time table for condition evaluation is generated in accordance with the condition time limiting descriptor.

### 〈Step e7〉

Based on the time table generated in step e6, the condition evaluating unit 308 evaluates the condition by considering the time limit under the control of the condition evaluation control unit 316. If the condition is satisfied, the process proceeds to step e7. In this example, the stock period of the merchandise since its delivery is counted, and when the period exceeds one month, the condition is satisfied.

### 〈Step e8〉

Based on the contents of the data processing descriptor associated with the condition descriptor examined in step e6, the data processing unit 307 processes the data, after which the step is terminated. In this example, a report is sent to the center.

Using the data transmission method and reception processing method described above, it becomes possible to handle situations where the condition needs continual evaluation.

### (Embodiment 4 in the First Aspect of the Invention)

The system configuration and hardware configuration at the transmitting end according to a fourth embodiment of the present invention are the same as the configurations respectively shown in Figures 9 and 10; therefore, the description thereof will not be repeated here.

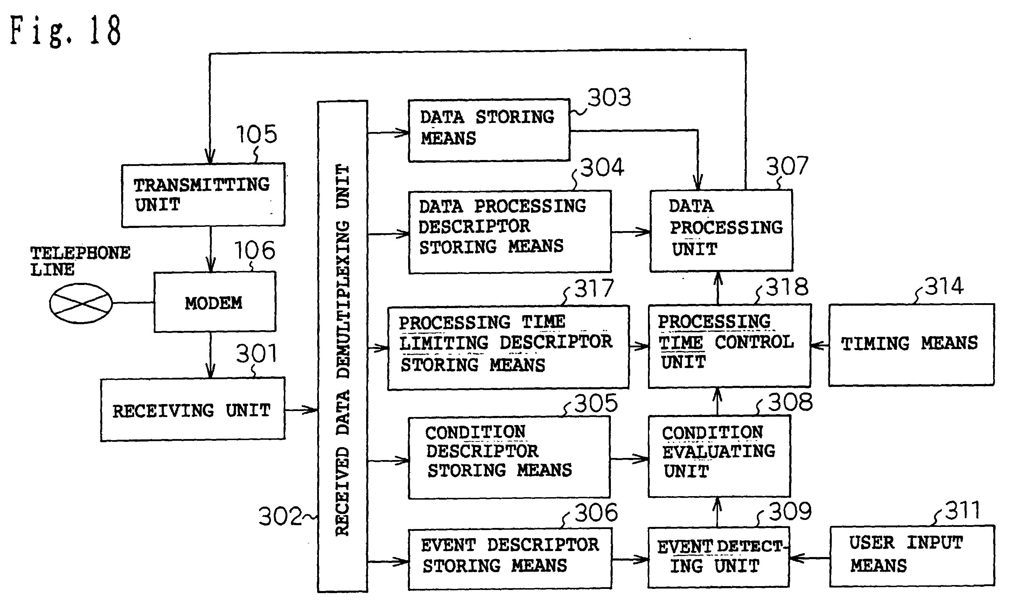

The system configuration at the receiving end is shown in Figure 18. This system configuration includes the same constituent elements as those shown in the system configuration of Figure 11; therefore, the same constituent elements will be designated by the same reference numerals and will not be specifically described herein. In Figure 18, reference numeral 317 is a processing time limiting descriptor storing means for storing the processing time limiting descriptor demultiplexed from the received data, and 318 is a processing time control unit for controlling the time of data processing in accordance with the processing time limiting descriptor.

The hardware configuration of the present embodiment for implementing the above-configured system is the same as that shown in Figure 12, and therefore, the description thereof will not be repeated here.

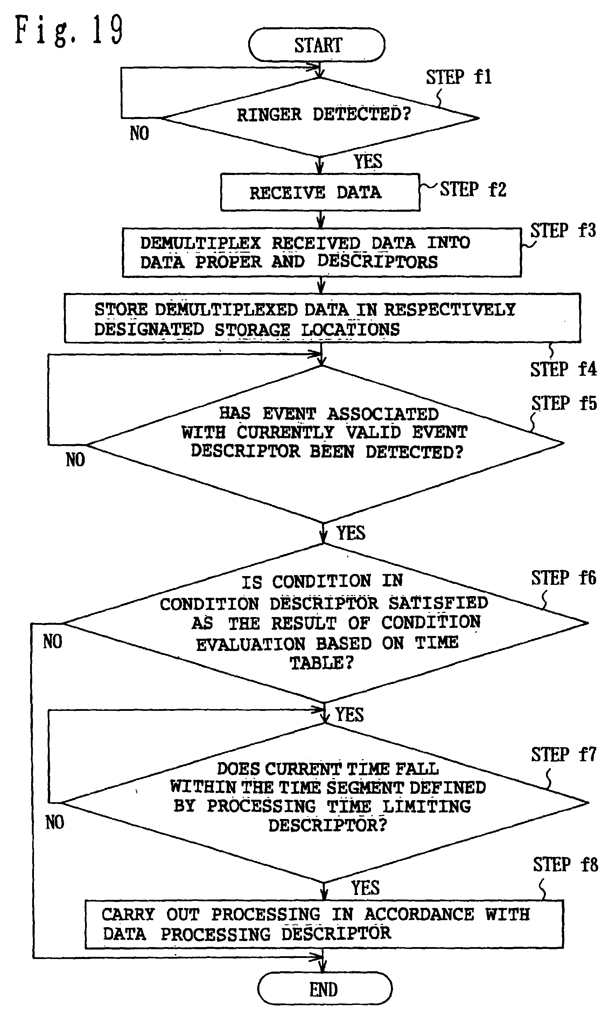

The operation of the above-configured system will be described. The operation at the transmitting end will not be described here since it is substantially the same as the operation illustrated in the flow chart of Figure 13; therefore, the operation at the receiving end only will be described below with reference to the flow chart of Figure 19.

The description given hereinafter deals with an example in which when a message to be transmitted is accepted, the message is transmitted out during late night hours after 23:00 where lower charges apply, unless urgency is not specified.

### 〈Step f1〉

Waits in ringer waiting mode and, upon detection of a ringer, goes off hook to connect the line.

### 〈Step f2〉

Receives data via the modem 106 in accordance with a prescribed protocol.

### 〈Step f3〉

When the reception of the data is completed in step f2, the received data is expanded and demultiplexed into the data and the descriptors, i.e., the event descriptor, the condition descriptor, the processing time limiting descriptor, and the data processing descriptor.

### 〈Step f4〉

The demultiplexed data is stored in the data storing means 303, the data processing descriptor is stored in the data processing descriptor storing means 304, the condition descriptor is stored in the condition descriptor storing means 305, the event descriptor is stored in the event descriptor storing means 306, and the processing time limiting descriptor is stored in the processing time limiting descriptor storing means 317.

### 〈Step f5〉

The event receiving unit 309 receives the event described in the event descriptor. When the event is received, the process proceeds to step f6. In this example, "MESSAGE TRANSMIT REQUEST" from the user input means 311 is received as the event.

### 〈Step f6〉

The condition evaluating unit 308 evaluates the condition described in the condition descriptor associated with the valid event descriptor passed from step f5. If the condition is satisfied, the process proceeds to step f7. In this example, if there is no specification of "urgency" in the message requesting a transmission, the condition is satisfied.

### 〈Step f7〉

Preparations are made for the processing described in the data processing descriptor associated with the condition descriptor passed from step f6 and, based on the contents of the processing time limiting descriptor, the processing time control unit instructs the data processing unit 307 to start the processing. In this example, if any message to be transmitted is left when the time is past 23:00, the instruction to execute the transmission is given to the data processing unit.

### 〈Step f8〉

The data processing unit 301 instructed to start the processing carries out the data processing, after which the step is terminated. In this example, the message is transmitted.

Using the data transmission method and reception processing method described above, since the processing can be carried out at a time different from the time that the event is detected and the condition is evaluated, it becomes possible to perform communication during a time segment where lower charges apply or to stagger accesses from region to region to avoid concentration of accesses to the center during a particular time segment.

### (Embodiment 5 in the First Aspect of the Invention)

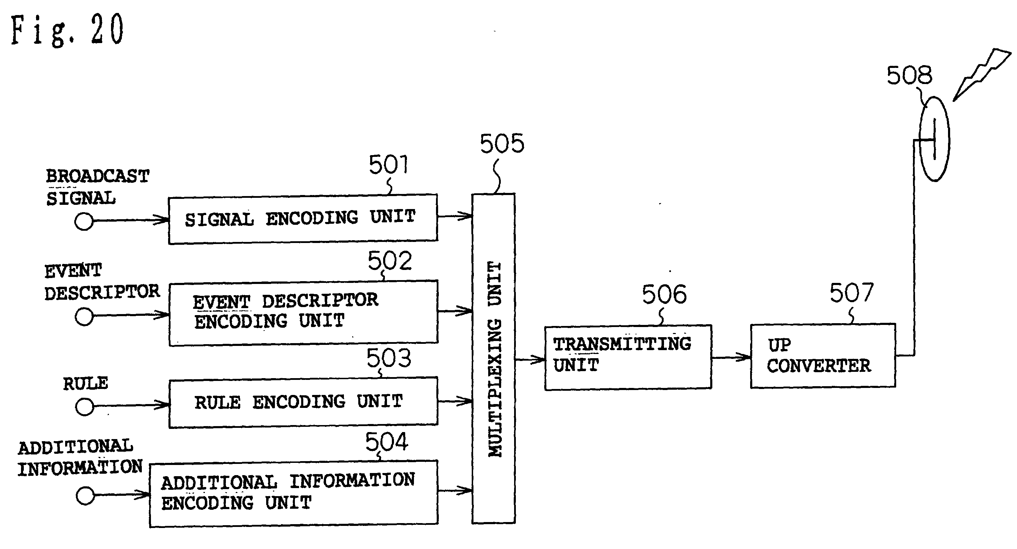

Figure 20 is a diagram showing the system configuration at the transmitting end according to a fifth embodiment of the present invention. In Figure 20, reference numeral 501 is a signal encoding unit for applying proper encoding operations, including compression, to a broadcast signal, 502 is an event descriptor encoding unit for encoding an event descriptor in synchronization with the encoding being performed in the signal encoding unit, 503 is a rule encoding unit for encoding a rule associated with the event descriptor in synchronization with the encoding being performed in the signal encoding unit, 504 is an additional information encoding unit for encoding additional information in synchronization with the encoding being performed in the signal encoding unit, 505 is a multiplexing unit for multiplexing the encoded broadcast signal, descriptor, and additional information, 506 is a transmitting unit for applying processing necessary for transmission, such as channel codec and modulation operations, to the multiplexed signal, 507 is an up converter for modulating the signal into a predetermined higher frequency, and 508 is a transmitting antenna.

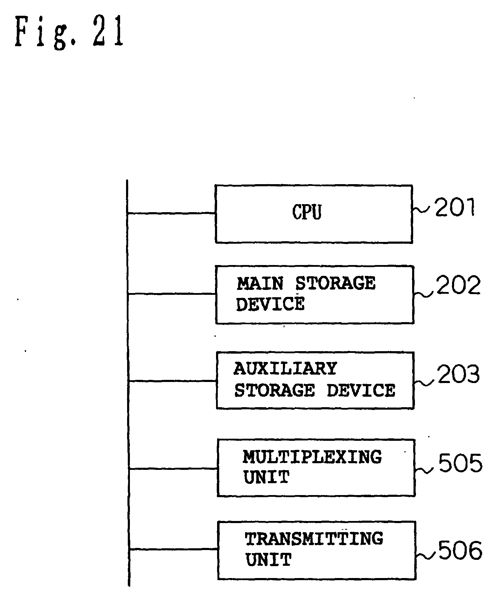

Figure 21 shows the hardware configuration of the present embodiment for implementing the above-configured system at the transmitting end. The configuration shown in Figure 21 is basically the same as that of a general purpose computer system. Since this hardware configuration includes the same constituent elements as those shown in the system configuration of Figure 2 or 20, the same constituent elements will be designated by the same reference numerals and will not be specifically described herein.

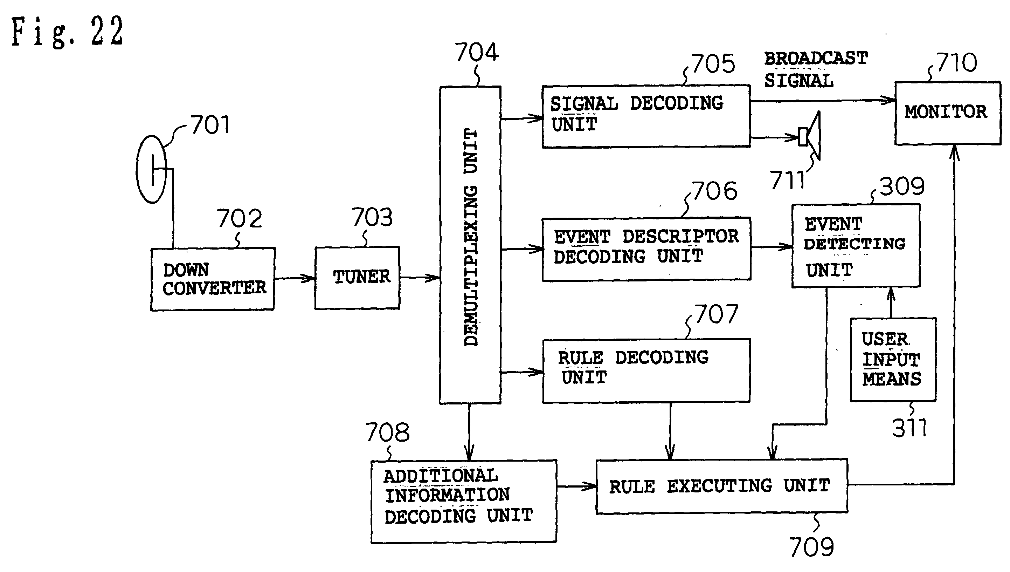

The system configuration at the receiving end is shown in Figure 22. This system configuration includes the same constituent elements as those shown in the system configuration of Figure 3; therefore, the same constituent elements will be designated by the same reference numerals and will not be specifically described herein. In Figure 22, reference numeral 701 is a receiving antenna, 702 is a down converter for modulating the satellite wave received by the receiving antenna into a predetermined lower frequency, 703 is a digital broadcast receiving tuner, 704 is a demultiplexing unit for demultiplexing the signal selected by the tuner into the broadcast signal consisting of video and audio information, the event descriptor, the rule, and the additional information, 705 is a signal decoding unit for decoding the encoded broadcast signal, 706 is an event descriptor decoding unit for decoding the encoded event descriptor, 707 is a rule decoding unit for decoding the encoded rule, 708 is an additional information decoding unit for decoding the encoded additional information, 709 is a rule executing unit for evaluating the condition of the rule and executing the rule, 710 is a monitor, and 711 is a speaker.

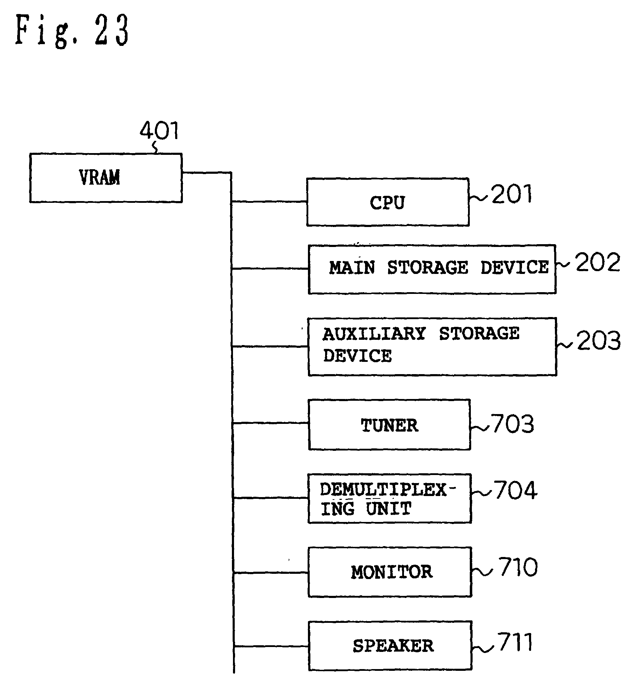

Figure 23 shows the hardware configuration of the present embodiment for implementing the above-configured system. The configuration shown in Figure 23 is basically the same as that of a general purpose computer system. Since this hardware configuration includes the same constituent elements as those shown in the system configuration of Figure. 2 or 22, the same constituent elements will be designated by the same reference numerals and will not be specifically described herein.

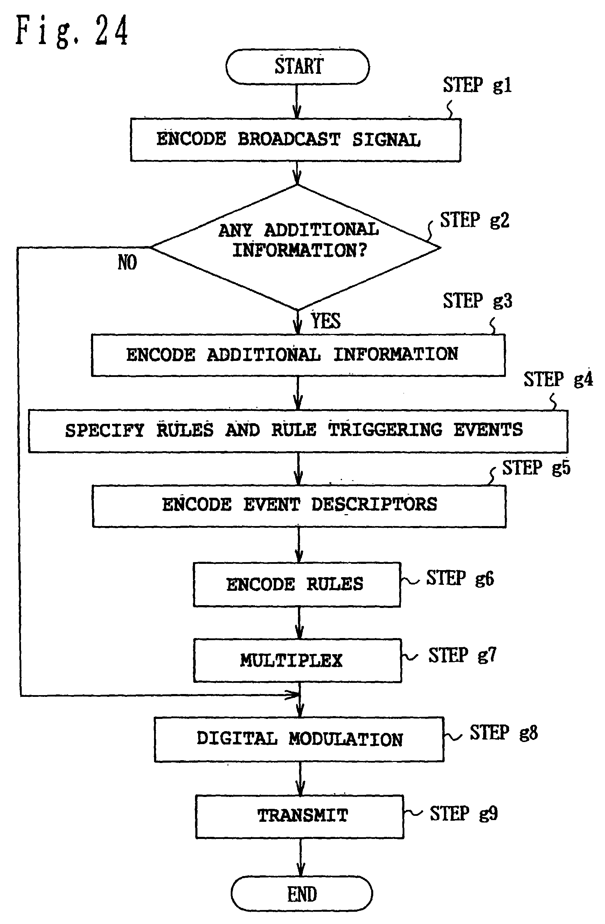

The operation of the above-configured systems will be described in the order, first the transmitting end and then the receiving end. The operation at the transmitting end will be described with reference to the flow chart of Figure 24.

The description given hereinafter deals with an example of transmitting a rule 1, which identifies the reception of additional information as an event and displays a message "RECEIVING ADDITIONAL INFORMATION" on the monitor if onscreen display is enabled, and a rule 2, which identifies the pressing of a display button by the user as an event and displays the contents of the additional information if the additional information is being received.

### 〈Step g1〉

The signal encoding unit 501 applies proper encoding operations, including compression, etc. to the broadcast signal consisting of video information, such as a standard television signal or HighVision signal, and its associated audio information.

### 〈Step g2〉

It is examined whether there is additional information associated with the broadcast signal encoded in step g1 and, if there is additional information, the process proceeds to step g3. Otherwise, the process proceeds to step g8.

### 〈Step g3〉

The additional information to be multiplexed for transmission is encoded by the additional information encoding unit 504 in the same manner as in step g1.

### 〈Step g4〉

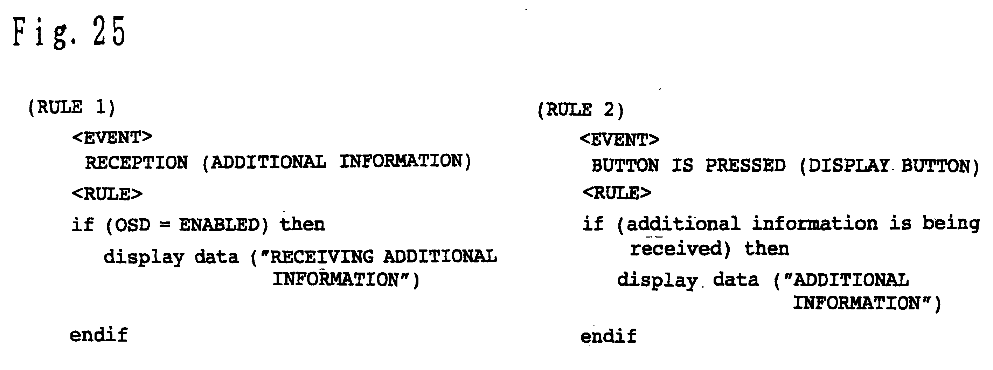

The condition for processing the additional information and the contents of the processing are specified in the form of a rule, and an event that triggers the rule is specified. Rules and event descriptors are generated in accordance with the specified contents. In this example, the rule 1 and the rule 2 are specified. The descriptors generated here are shown in Figure 25.

### 〈Step g5〉

The event descriptor encoding unit 502 encodes the event descriptors.

### 〈Step g6〉

The rule encoding unit 503 encodes the rules.

### 〈Step g7〉

The encoded broadcast signal, additional information, event descriptors, and rules are supplied to the multiplexing unit 505 for multiplexing.

### 〈Step g8〉

The transmitting unit 506 applies necessary processing, such as channel codec and modulation operations, to the signal multiplexed in step g7, and thus modulates the signal into a digital broadcast transmission signal.

### 〈Step g9〉

The signal is transmitted toward a broadcast satellite from the transmitting antenna 508 via the up converter 507.

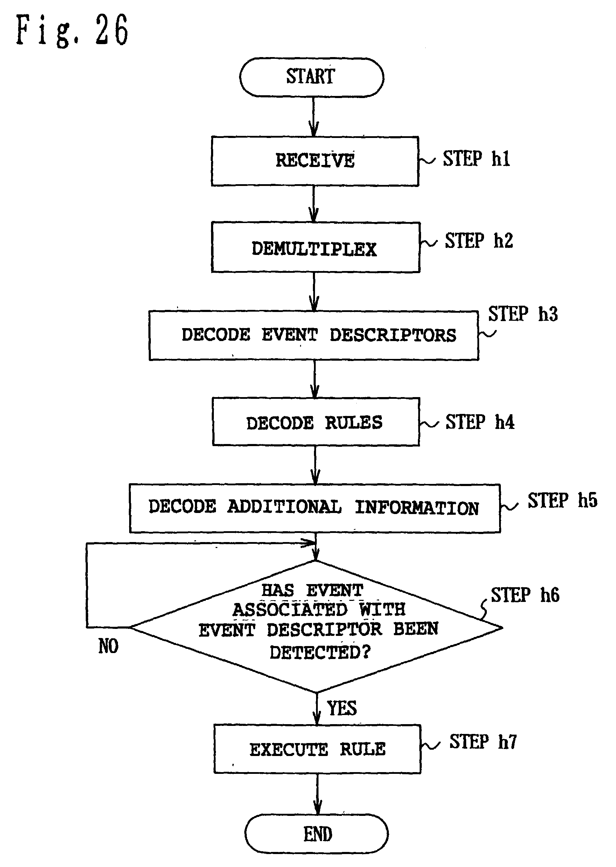

Next, the operation at the receiving end will be described with reference to the flow chart of Figure 26.

### 〈Step h1〉

The satellite wave received by the receiving antenna 701 is down converted by the down converter 702 to the predetermined frequency band, and supplied to the digital broadcast tuner 703 and then to the digital demodulator for frequency selection and demodulation.

### 〈Step h2〉

The digital broadcast signal selected and demodulated in step h1 is demultiplexed by the demultiplexing unit 704 into the program information consisting of video and audio information, the event descriptors, the rules, and the additional information.

### 〈Step h3〉

The event descriptor decoding unit 706 decodes the event descriptors carried in the received signal.

### 〈Step h4〉

The rule decoding unit 707 decodes the rules carried in the received signal.

### 〈Step h5〉

The additional information decoding unit 708 decodes the additional information carried in the received signal.

### 〈Step h6〉

Receives an event corresponding to the event descriptors decoded in step h3. When an event is received, the process proceeds to step h7. In this example, when the event "RECEIVING ADDITIONAL INFORMATION" or the event "DISPLAY BUTTON IS PRESSED" is received, the process proceeds to the next step.

### 〈Step h7〉

The condition evaluation and the execution of the rule corresponding to the event descriptor received in step h6 are performed, after which the step is terminated. In this example, when the additional information is received, the rule 1 is executed to examine whether onscreen display is enabled or not and, if it is enabled, the message "RECEIVING ADDITIONAL INFORMATION" is displayed on the monitor 710. On the other hand, when the user has pressed the display button, the rule 2 is executed and, if the additional information is being received, the additional information is displayed.

Using the digital broadcast transmission method and reception processing method described above, it becomes possible to transmit an event-driven type rule that evaluates the condition based on the event occurring at the receiving end, and to perform operation that matches the status at the receiving end.

In the above embodiments of the present invention, interrupts to the CPU have been handled as events, but the events used in the present invention are not limited to such events, but generally refer to externally arising events that need not monitoring.

Further, the program medium of the present invention refers to a program medium, such as a CD, which stores thereon a program for implementing by a computer all or part of each process in the above-described data transmission method, or to a program medium, such as a DVD, which stores thereon a program for implementing by a computer all or part of each process in the above-described data reception processing method.

Next, various embodiments in accordance with the second aspect of the present invention will be described with reference to drawings.

### (Embodiment 1 in the Second Aspect of the Invention)

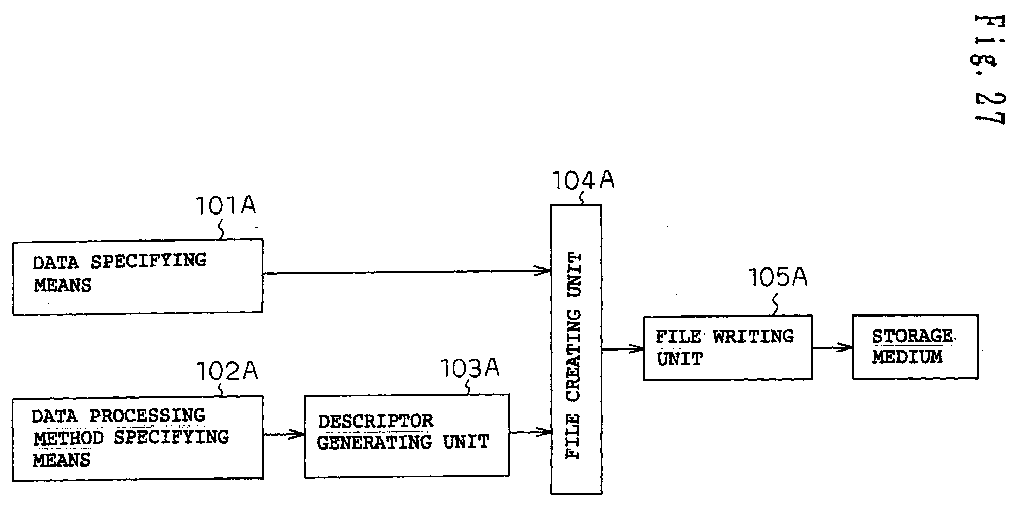

Figure 27 is a diagram showing the system configuration at the writing side according to a first embodiment in the second aspect of the present invention. In Figure 27, reference numeral 101A is a data specifying means for specifying data to be stored, 102A is a data processing method specifying means for specifying how the data is to be processed at the reading side, 103A is a descriptor generating unit for generating an event descriptor, a condition descriptor, and a data processing descriptor in accordance with the data processing method specified by the data processing method specifying means 102A, 104A is a file creating unit for converting the data and the descriptors to a predetermined file format, and 105A is a file writing unit for writing the file created by the file creating unit 104A to a designated storage medium.

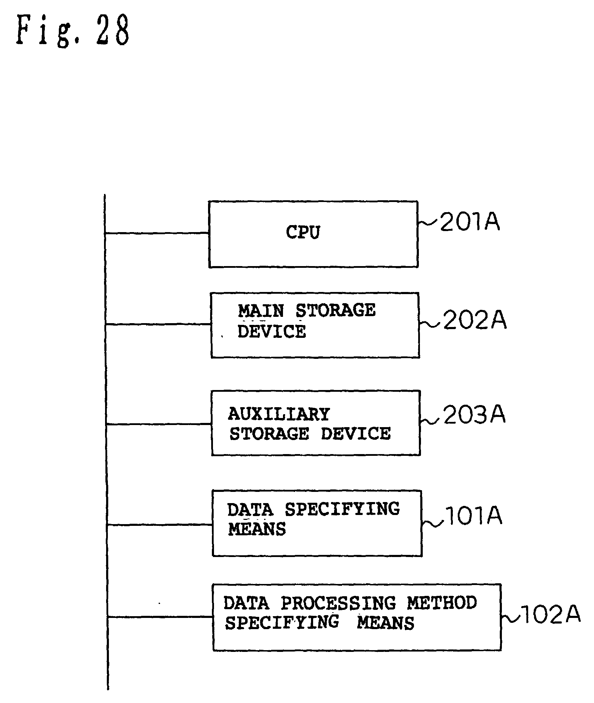

Figure 28 shows the hardware configuration of the present embodiment for implementing the above-configured system at the writing side. The configuration shown in Figure 28 is basically the same as that of a general purpose computer system. Since this hardware configuration includes the same constituent elements as those shown in the system configuration of Figure 27, the same constituent elements will be designated by the same reference numerals and will not be specifically described herein. In Figure 28, reference numeral 202A is a main storage device constructed from a volatile memory for storing programs, 203A is an auxiliary storage device constructed from a nonvolatile memory in which programs and other data are stored, and 201A is a CPU for executing the programs stored in the main storage device 202A. As noted above, the hardware configuration is basically the same as that of a general purpose computer system, so that any program stored on the auxiliary storage device 203A is first loaded into the main storage device 202A before it can be executed by the CPU 201A.

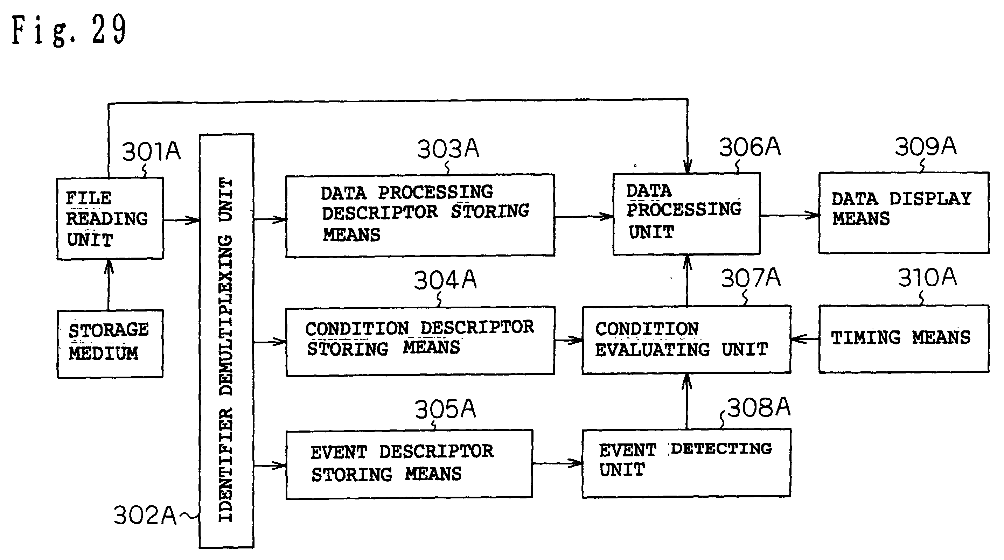

The system configuration at the reading side is shown in Figure 29. This system configuration includes the same constituent elements as those shown in the system configuration of Figure 27; therefore, the same constituent elements will be designated by the same reference numerals and will not be specifically described herein. In Figure 29, reference numeral 301A is a file reading unit for reading out a file from a designated storing medium, 302A is a descriptor separating unit for separating the descriptors by extracting them from the readout file, 303A is a data processing descriptor storing means for storing the data processing descriptor out of the separated descriptors, 304A is a condition descriptor storing means for storing the condition descriptor, 305A is an event descriptor storing means for storing the event, descriptor, 306A is a data processing unit for processing the data in accordance with the data processing descriptor, 307A is a condition evaluating unit for evaluating the condition in accordance with the condition descriptor, 308A is an event receiving unit for receiving an event in accordance with the event descriptor, 309A is a data display means for displaying the data, and 310A is a timing means for returning the time.

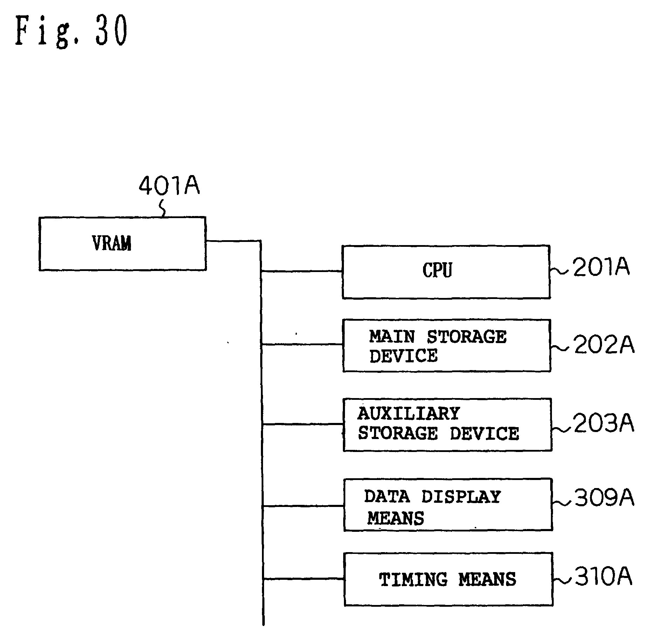

Figure 30 shows the hardware configuration of the present embodiment for implementing the above-configured system. The configuration shown in Figure 30 is basically the same as that of a general purpose computer system. Since this hardware configuration includes the same constituent elements as those shown in the system configuration of Figure 29, the same constituent elements will be designated by the same reference numerals and will not be specifically described herein.

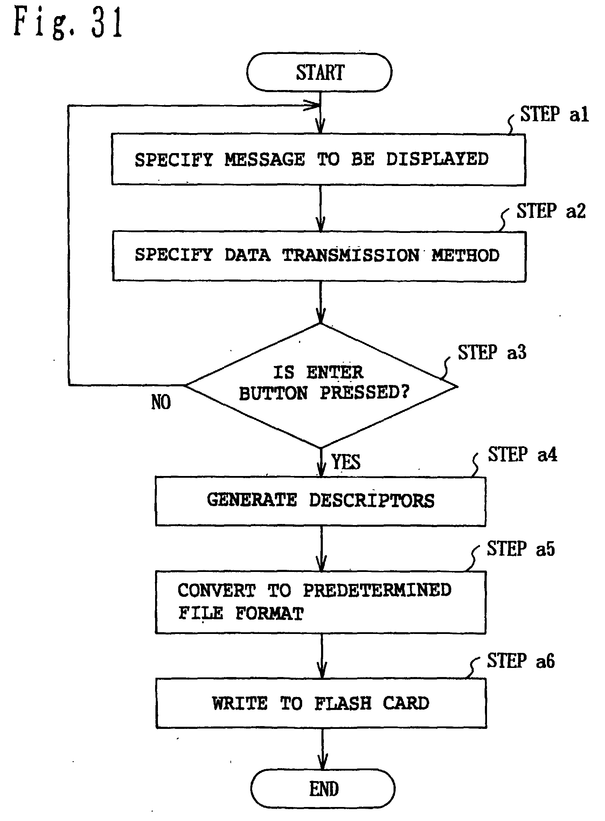

The operation of the above-configured systems will be described, first the system at the writing side and then the system at the reading side. First, the operation at the writing side will be described with reference to the flow chart of Figure 31.

The description given hereinafter deals with an example in which a message for a family member is created and written to a flash card at the writing side and, when the flash card is inserted at the reading side, the message is displayed upon the arrival of a preset time to display the message.

### 〈Step a1〉

Specifies the message to be displayed, by using the data specifying means 101A. In this example, a message "PLEASE TAKE IN THE WASHING" is created using a text editor.

### 〈Step a2〉

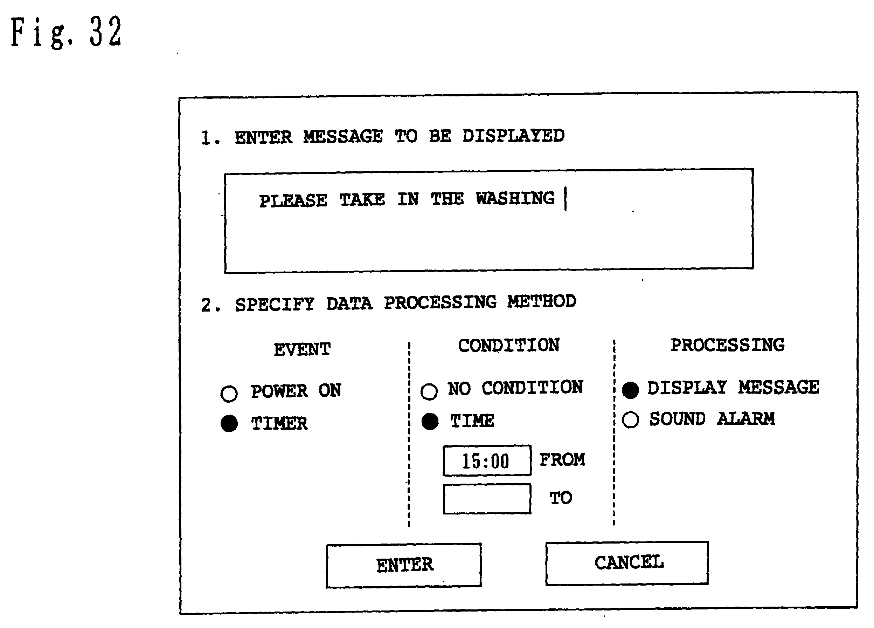

Specifies the method of data processing by using the data processing method specifying means 102A. In this example, since it is desired to display the message at a specified time, "TIMER COUNT COMPLETED" is set as the event and "15:00" as the condition, and finally, "DISPLAY" is chosen as the specific processing method for the data. An example of a screen for specifying the data and the data processing method is shown in Figure 32.

### 〈Step a3〉

Continues to accept the specification of the data processing method being entered in step a2 until the enter button is pressed. When the enter button is pressed, the process proceeds to step a4.

### 〈Step a4〉

Generates the event descriptor, condition descriptor, and data processing descriptor in accordance with the specified data processing method.

### 〈Step a5〉

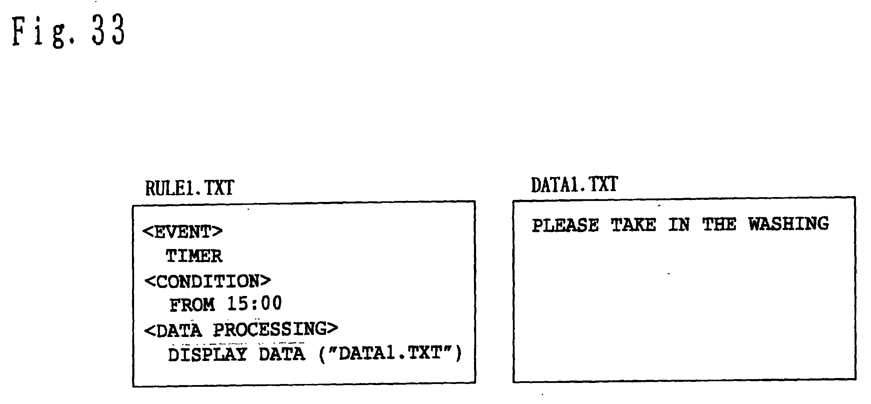

The file creating unit 104A converts the specified data and the descriptors to a predetermined file format. An example of a generated file format is shown in Figure 33. In this example, the set of descriptors is converted to a file named RULE1.TXT, while the data is converted to a file named DATA1.TXT. In the RULE1.TXT, the DATA1.TXT is associated as the display data.

### 〈Step a6〉

The file writing unit 105A writes the files to a flash card, upon which the step is terminated.

In the above example, the message has been created by entering characters using a text editor, but the characters may be entered using a tablet, or the message may be input in form of voice by using a microphone or in the form of an image by using a camera.

Further, text format has been used as the file format, but binary format may be used instead.

Furthermore, the file system has been described by dealing with the format used in a conventional OS, but a unique format may be used.

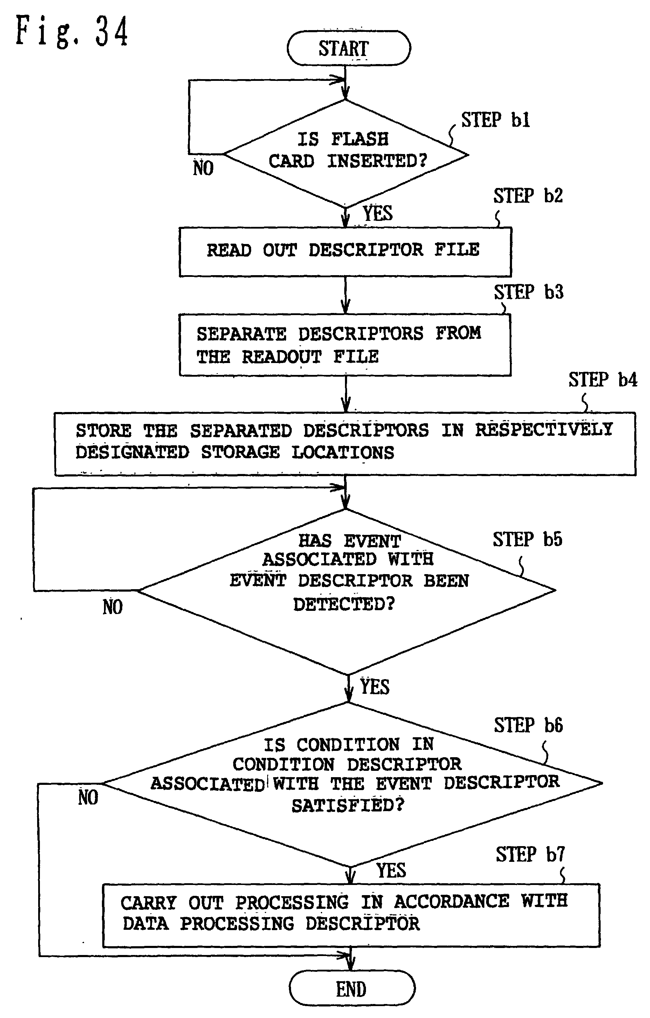

Next, the operation at the reading side will be described with reference to the flow chart of Figure 34.

### 〈Step b1〉

It is examined whether the flash card is inserted or not. If the flash card is inserted, the process proceeds to step b2.

### 〈Step b2〉

The descriptor file is read out from the file reading unit 106A.

### 〈Step b3〉

The respective descriptors, i.e., the event descriptor, the condition descriptor, and the data processing descriptor, are separated from the file read out in step b2.

### 〈Step b4〉

The data processing descriptor thus separated is stored in the data processing descriptor storing means 303A, the condition descriptor is stored in the condition descriptor storing means 304A, and the event descriptor is stored in the event descriptor storing means 305A.

### 〈Step b5〉

The event receiving unit 308A receives the event described in the event descriptor. When the event is received, the process proceeds to step b6. In this example, "TIMER INTERRUPT" from the timing means 310A is received as the event.

### 〈Step b6〉

The condition evaluating unit 308A evaluates the condition described in the condition descriptor associated with the event descriptor passed from step b5. If the condition is satisfied, the process proceeds to step b7. In this example, it is examined whether "15:00" is satisfied or not.

### 〈Step b7〉

Based on the data processing descriptor associated with the condition descriptor whose condition is satisfied in step b6, the corresponding data file is read out of the storing medium, and the data is processed by the data processing unit 307A, after which the step is terminated. In this example, the message "PLEASE TAKE IN THE WASHING" is displayed on the data display means 309A.

In this way, at the reading side, when the flash card is inserted, the respective descriptors are automatically read, and waiting mode is entered to wait for the occurrence of an event so that the event described in the event descriptor is automatically received.

The above embodiment has dealt with the simplest example of message display as an example of the data processing, but it is also possible to present procedures such as a cooking recipe by voice by using the elapsed time as an event.

Further, the flash card has been taken as an example of the storing medium, but it will be appreciated that other removable media such as a hard disk may be used, or a ROM (read only memory) such as a CD-ROM may be used as the medium.

The file creating unit in the present embodiment is an example of the file creating means of the present invention, the file writing unit in the present embodiment is an example of the file writing means of the present invention, the file reading unit in the present embodiment is an example of the file reading means of the present invention, and the data processing unit, condition evaluating unit, and event receiving unit in the present embodiment are each an example of the data processing means of the present invention.

Using the event-driven type file creating apparatus, event-driven type file reading apparatus, data storing method, and data processing method described above, it becomes possible to implement the writing side, for example, as software of a personal computer and the reading side as an adaptor connected to a television set. This not only enables the creation of relatively complex data, but can also make the reading side simple and low cost in construction. Another advantage is that since no particular operation is needed at the message viewing side, the system can be used easily even by children and old people.

### (Embodiment 2 in the Second Aspect of the Invention)

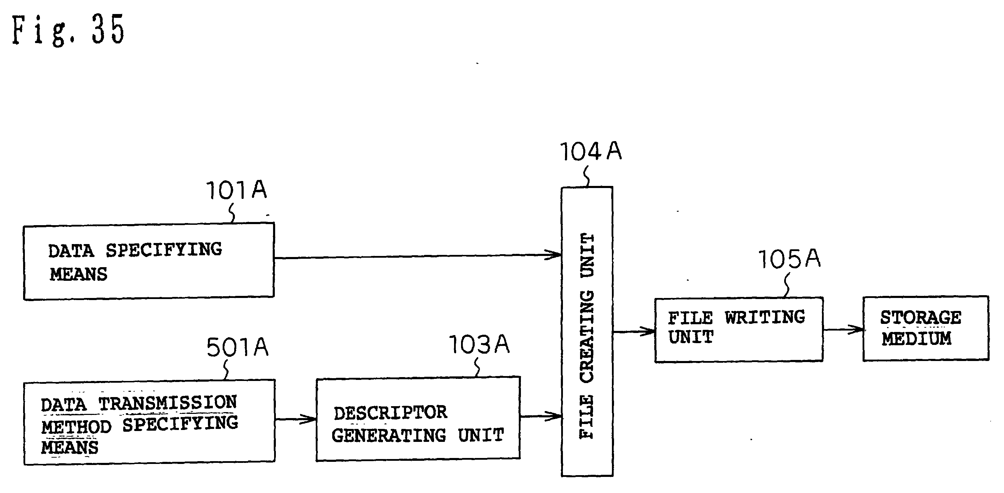

Figure 35 is a diagram showing the system configuration at the writing side according to a second embodiment of the present invention. The configuration shown in Figure 35 includes the same constituent elements as those shown in the system configuration of Figure 27; therefore, the same constituent elements will be designated by the same reference numerals and will not be specifically described herein.

In Figure 35, reference numeral 501A is a data transmission method specifying means for specifying the telephone number of the data receiving party and the timing for data transmission by time or by an event.

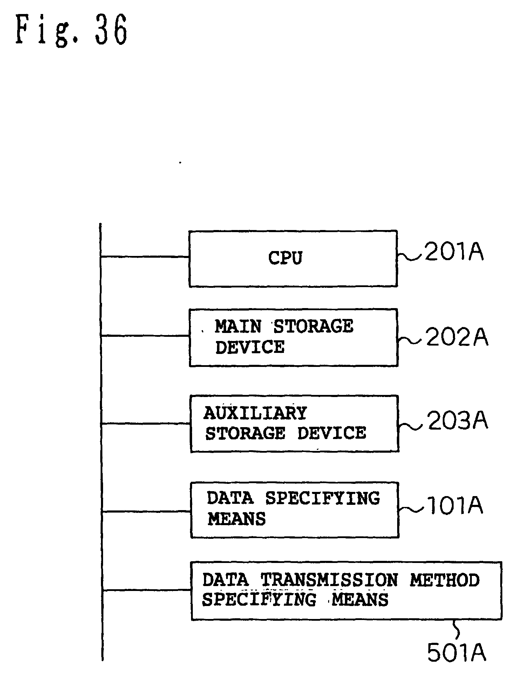

Figure 36 shows the hardware configuration of the present embodiment for implementing the above-configured system at the writing side. The configuration shown in Figure 36 is basically the same as that of a general purpose computer system. Since this hardware configuration includes the same constituent elements as those shown in the system configuration of Figure 28 or 35, the same constituent elements will be designated by the same reference numerals and will not be specifically described herein.

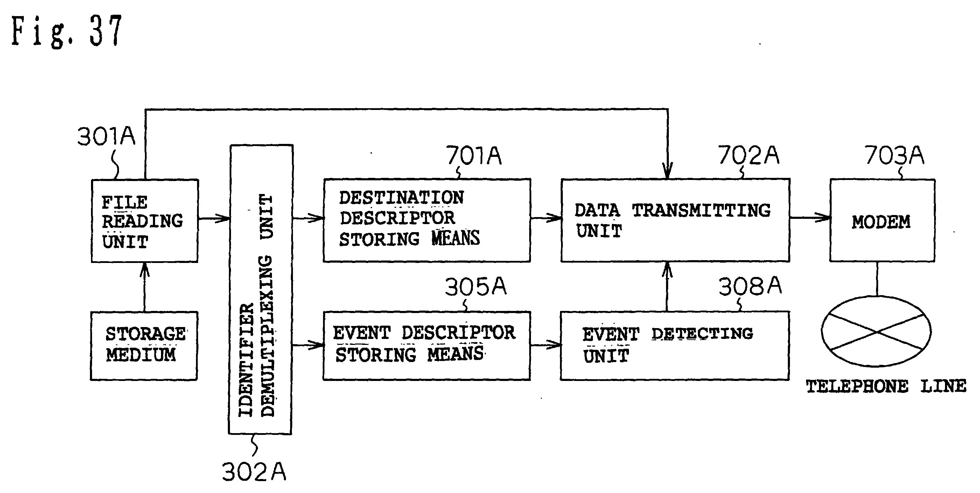

The system configuration at the transmitting (reading) side is shown in Figure 37. This system configuration includes the same constituent elements as those shown in the system configuration of Figure 29; therefore, the same constituent elements will be designated by the same reference numerals and will not be specifically described herein. In Figure 37, reference numeral 701A is a destination descriptor storing means for storing a destination descriptor out of the separated descriptors, 702A is a data transmitting unit for transmitting data associated with the event descriptor in accordance with the destination descriptor, and 703A is a modem.

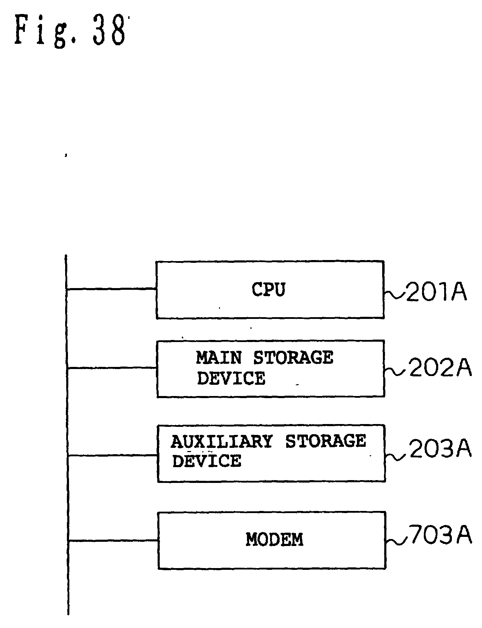

Figure 38 shows the hardware configuration of the present embodiment for implementing the above-configured system. The configuration shown in Figure 38 is basically the same as that of a general purpose computer system. Since this hardware configuration includes the same constituent elements as those shown in the system configuration of Figure 28 or 37, the same constituent elements will be designated by the same reference numerals and will not be specifically described herein.

The description given hereinafter deals with an example in which image data is recorded on a flash card and the recorded data is transmitted out.

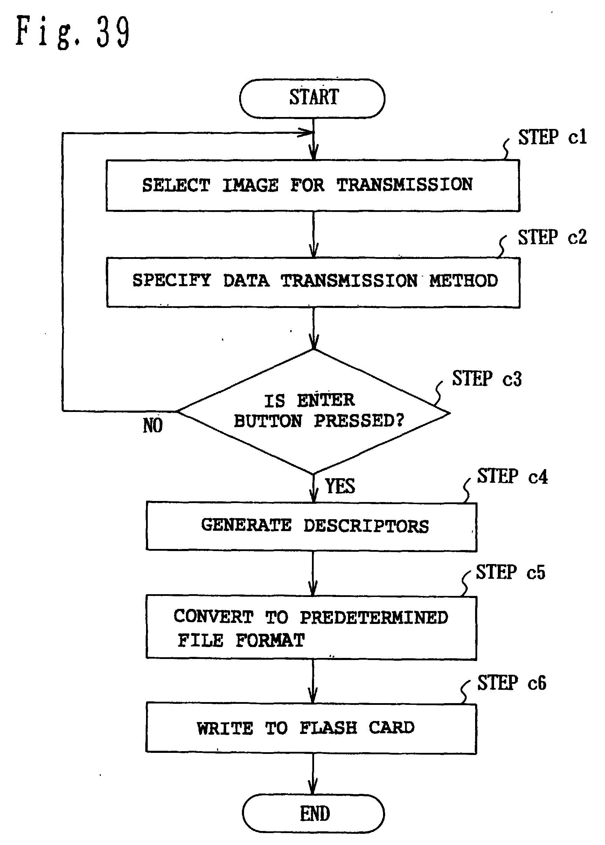

First, writing of a file to a flash card will be described with reference to the flow chart of Figure 39.

### 〈Step c1〉

The image to be transmitted is selected using the data specifying means 101A.

### 〈Step c2〉

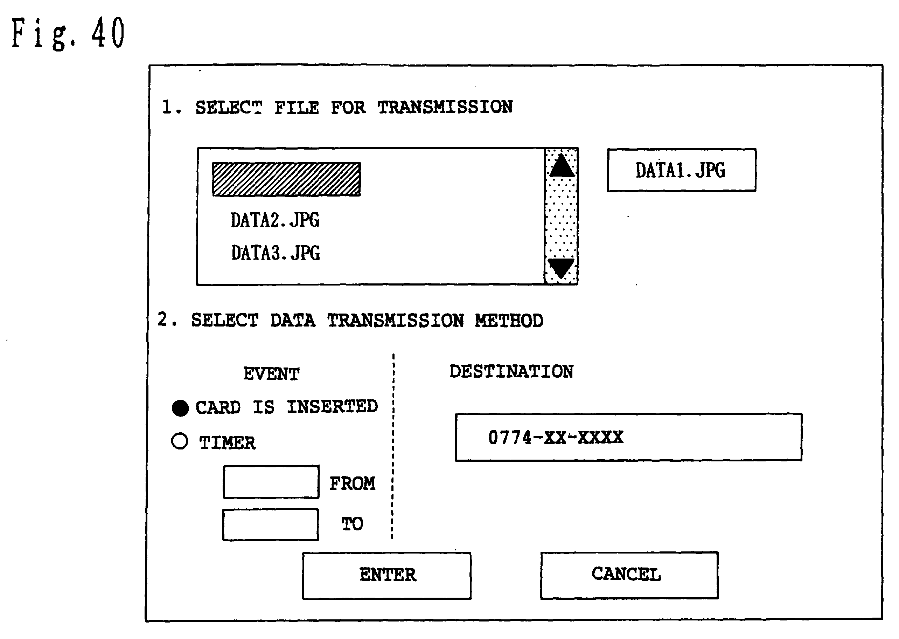

As the data transmission method, the destination and the event for starting the transmission are specified using the transmission method specifying means 501A. In this example, assuming that it is desired to start the transmission immediately after the insertion of the flash card, "FLASH CARD IS INSERTED" is specified as the event. An example of a screen for specifying the data and the transmission method is shown in Figure 40.

### 〈Step c3〉

Continues to accept the specifications from steps c1 through c2 until the enter button is pressed. When the enter button is pressed, the process proceeds to step c4.

### 〈Step c4〉

Generates the event descriptor and destination descriptor.

### 〈Step c5〉

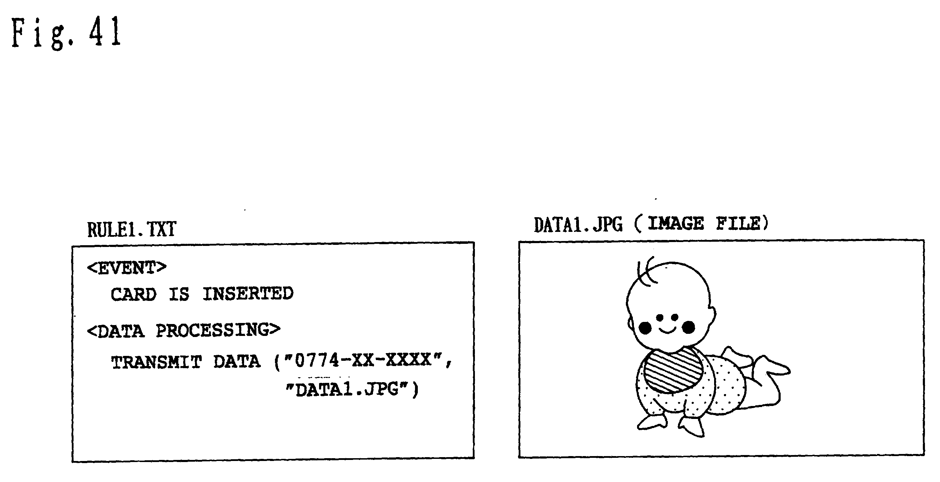

The file creating unit 104A converts the specified image data and the descriptors to a predetermined file format. Examples of the generated files are shown in Figure 41.

### 〈Step c6〉

The file writing unit 105A writes the files generated in step c5 to the flash card, after which the step is terminated.

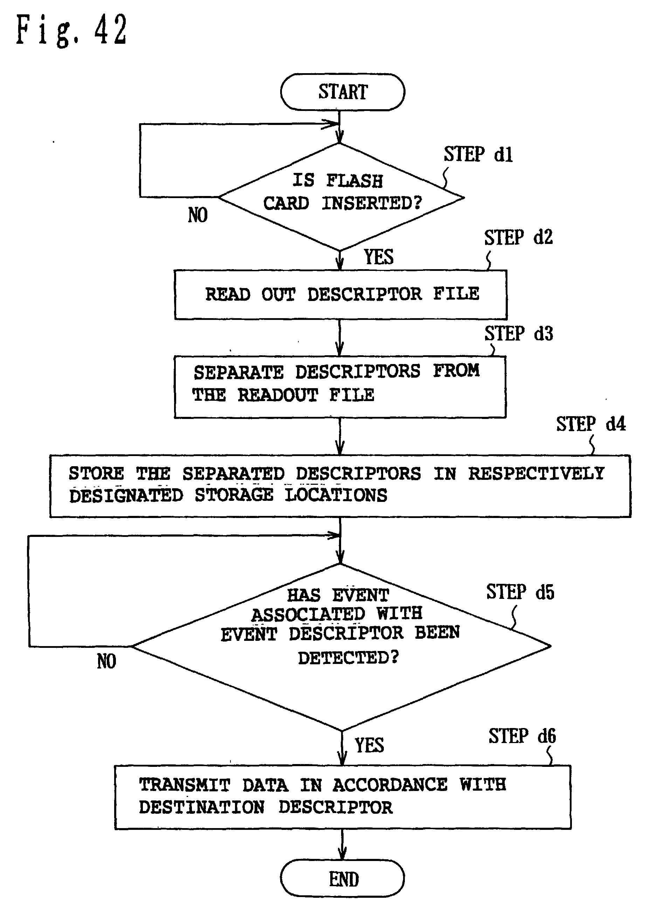

Next, the operation of the data transmission apparatus as the reading side will be described with reference to the flow chart of Figure 42.

### 〈Step d1〉

It is examined whether the flash card is inserted or not. If the flash card is inserted, the process proceeds to step d2.

### 〈Step d2〉

The descriptor file is read out from the file reading unit 106A.

### 〈Step d3〉

The respective descriptors, i.e., the event descriptor and the destination descriptor, are separated from the file read out in step d2.

### 〈Step d4〉

The destination descriptor thus separated is stored in the destination descriptor storing means 701A, and the event descriptor is stored in the event descriptor storing means 305A.

### 〈Step d5〉

The event receiving unit 308A receives the event described in the event descriptor. When the event is received, the process proceeds to step d6. In this example, since "CARD IS INSERTED" is used as the event, it is determined that the event has occurred upon insertion of the card.

### 〈Step d6〉

Based on the information carried in the destination descriptor, the corresponding data file is read out from the flash card, and the data transmitting unit 702A transmits the data via the modem 703A, after which the step is terminated.

Here, rather than using "CARD IS INSERTED" as the event for transmission, "TIMER COUNT COMPLETED AT SPECIFIED TIME" may be used as the event to specify the time so that the data will be transmitted during a time segment where lower charges apply.

It will also be appreciated that other medium than the flash card may be used as the recording medium.

Image data has been taken as an example of the transmission data, but moving image data such as MPEG data, facsimile data, program data, or any other data can be transmitted as long as the data is digital data.

Furthermore, the writing side may be connected to the telephone line so that the set of the descriptors and data can be downloaded.

The file creating unit in the present embodiment is an example of the file creating means of the present invention, the file writing unit in the present embodiment is an example of the file writing means of the present invention, the data transmission method specifying means in the present embodiment is an example of the data processing method specifying means of the present invention, the file reading unit in the present embodiment is an example of the file reading means of the present invention, and the data transmitting unit and event receiving unit in the present embodiment are each an example of the data processing means of the present invention.

As described above, when the information concerning the data receiving party, the transmission time, etc. are written as an event-driven type data processing descriptor to the recording medium together with the data at the writing side, the processing for transmission can be accomplished by just inserting the recording medium in the transmission apparatus which is the only one being installed at a place where the telephone line is available; this offers the advantage of being able to eliminate the problem of telephone line routing, etc.

### (Embodiment 3 in the Second Aspect of the Invention)

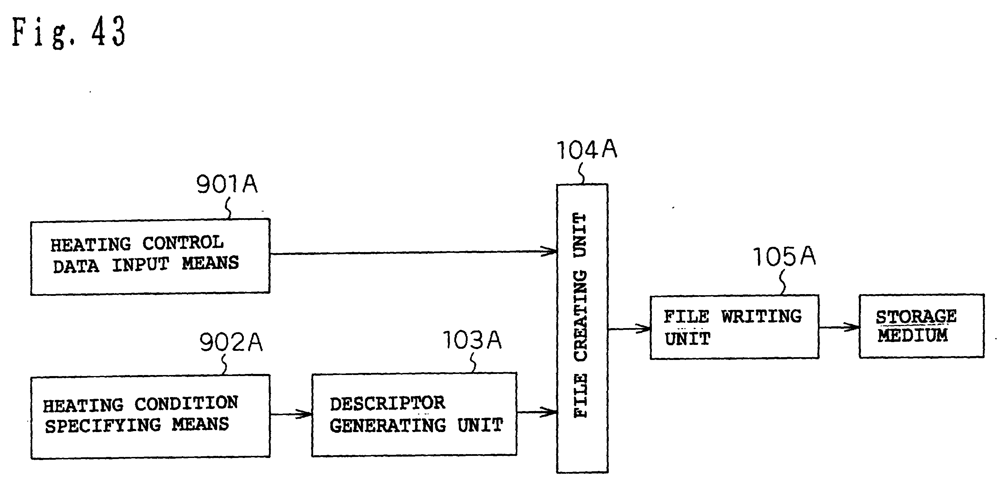

Figure 43 is a diagram showing the system configuration at the writing side according to a third embodiment of the present invention. The configuration shown in Figure 43 includes the same constituent elements as those shown in the system configuration of Figure 27; therefore, the same constituent elements will be designated by the same reference numerals and will not be specifically described herein.

In Figure 43, reference numeral 901A is a heating control data input means for inputting heating control data, and 902A is a heating condition specifying means for specifying the menu number that uses the heating control data and the condition under which the heating control data can be used.

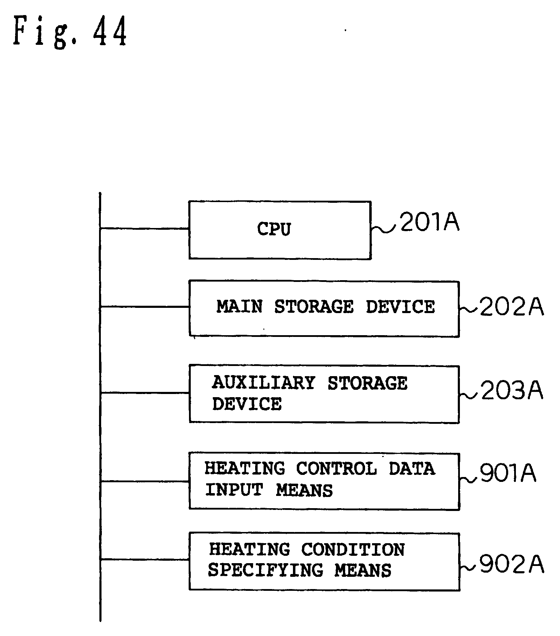

Figure 44 shows the hardware configuration of the present embodiment for implementing the above-configured system at the writing side. The configuration shown in Figure 44 is basically the same as that of a general purpose computer system. Since this hardware configuration includes the same constituent elements as those shown in the system configuration of Figure 28 or 43, the same constituent elements will be designated by the same reference numerals and will not be specifically described herein.

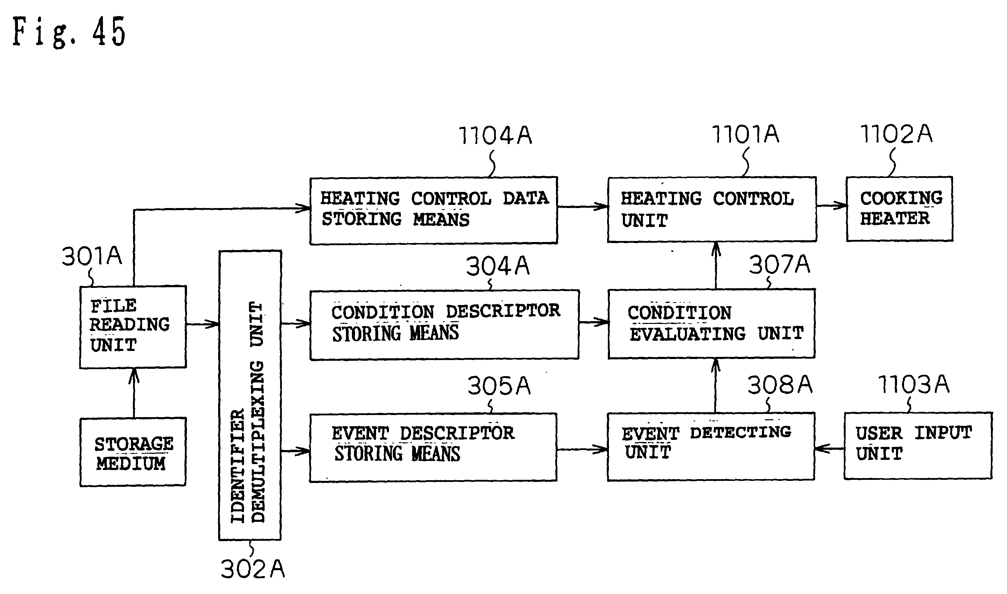

The system configuration at the cooking (reading) side is shown in Figure 45. This system configuration includes the same constituent elements as those shown in the system configuration of Figure 29; therefore, the same constituent elements will be designated by the same reference numerals and will not be specifically described herein. In Figure 45, reference numeral 1101A is a heating control unit for performing heating based on the heating control data, 1102A is a cooking heater, 1103A is a user input unit for accepting a user input such as a menu number input, the pressing of a start button, etc., and 1104A is a heating control data storing means for storing the heating control data that the heating control unit 1101A uses.

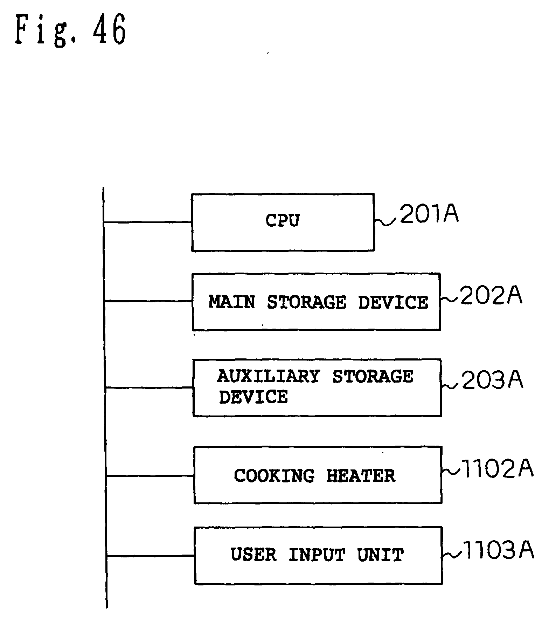

Figure 46 shows the hardware configuration of the present embodiment for implementing the above-configured system. The configuration shown in Figure 46 is basically the same as that of a general purpose computer system. Since this hardware configuration includes the same constituent elements as those shown in the system configuration of Figure 28 or 45, the same constituent elements will be designated by the same reference numerals and will not be specifically described herein.

These days, many frozen food products which need only be heated before serving are sold on the market, and fine heating control is needed to cook the food so it tastes good when eaten. It is also desired to be able to quickly adjust to new products.

In view of this, the present embodiment deals with an example in which food is heated by a microwave oven using heating control data recorded on a flash card.

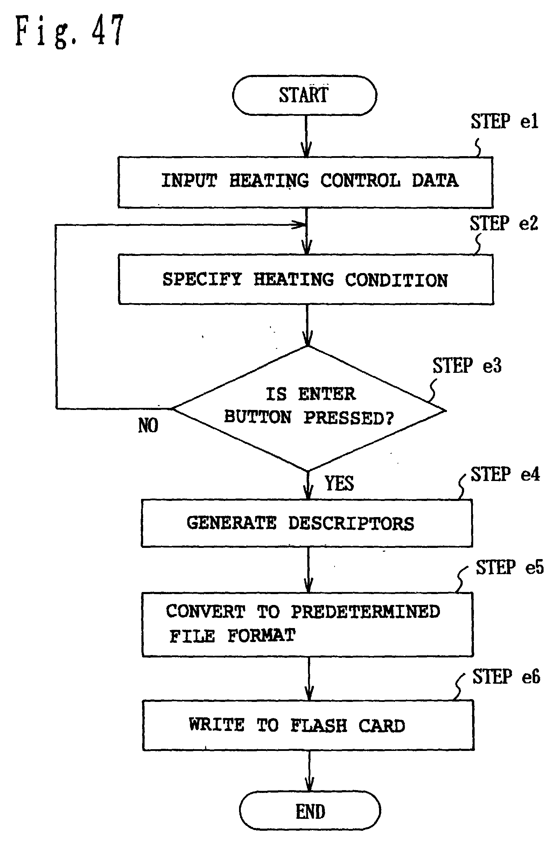

First, writing of heating control data to a flash card will be described with reference to the flow chart of Figure 47.

### 〈Step e1〉

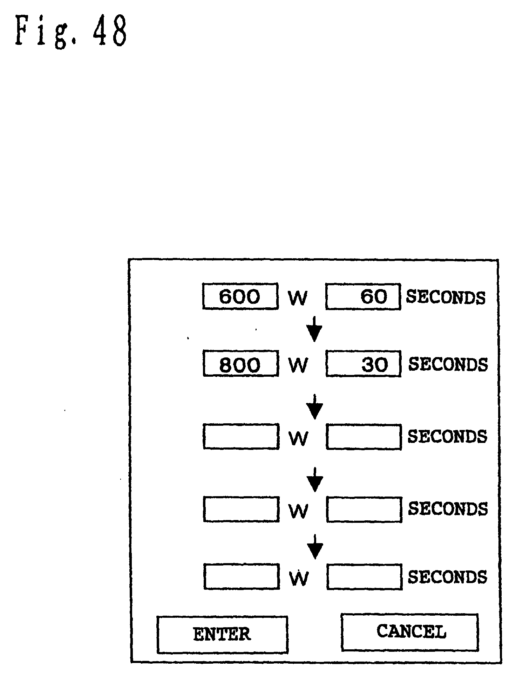

Heating control data is input from the heating control data input means 901A. An example of an input screen is shown in Figure 48. The example of Figure 48 shows that the food is first heated at 600 W for 60 seconds and then heated at 800 W for 30 seconds.

### 〈Step e2〉

Using the heating condition specifying means 902A, the menu number and the condition such as ambient temperature are specified as the event for writing the heating data. For example, "1" is specified as the menu number, and ambient temperature not lower than 0 degree and not higher than 40 degrees is specified as the condition.

### 〈Step e3〉

Steps e1 and e2 are repeated until the heating control data and heating conditions are specified and, when the specification is completed, the process proceeds to step e4.

### 〈Step e4〉

The event descriptor and condition descriptor are generated.

### 〈Step e5〉

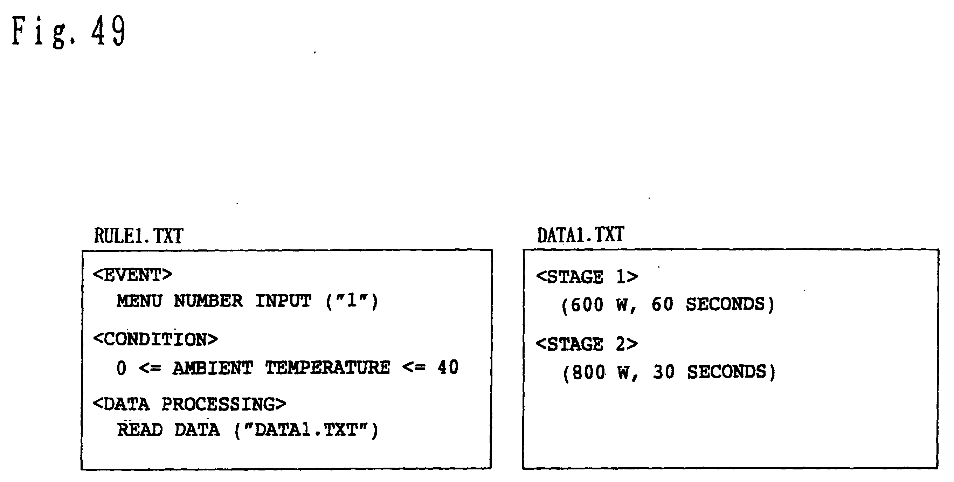

The file creating unit 104A converts the input heating control data and the descriptors to a predetermined file format. Examples of the generated files are shown in Figure 49.

### 〈Step e6〉

The file writing unit 105A writes the files generated in step e5 to the flash card, after which the step is terminated.

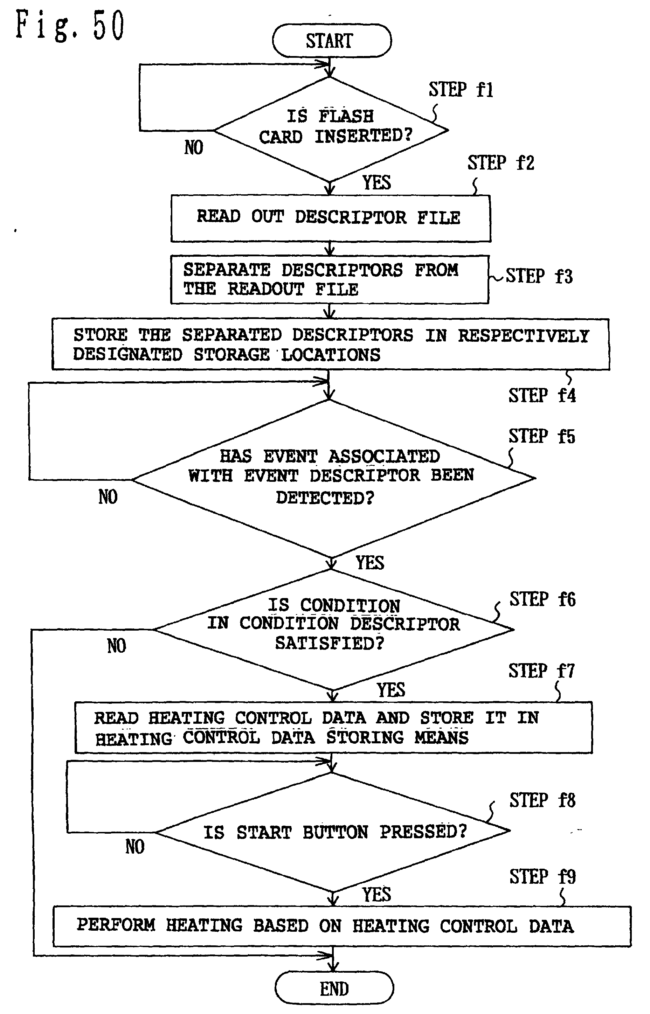

Next, the operation of the data transmission apparatus as the reading side will be described with reference to the flow chart of Figure 50.

### 〈Step f1〉

When the flash card is inserted, an interrupt is caused to the CPU. Accordingly, when the flash card is inserted, the process proceeds to step f2.

### 〈Step f2〉

The descriptor file is read out from the file reading unit 106A.

### 〈Step f3〉

The respective descriptors, i.e., the event descriptor and the condition descriptor, are separated from the file read out in step f2.

### 〈Step f4〉

The condition descriptor thus separated is stored in the condition descriptor storing means 304A, and the event descriptor is stored in the event descriptor storing means 305A.

### 〈Step f5〉

The event receiving unit 308A receives the event described in the event descriptor. When the event is received, the process proceeds to step f6. In this example, the menu number input from the user input unit 1103A is received as the event.

### 〈Step f6〉

When the menu number input is received, the corresponding event descriptor is retrieved, and it is examined whether the condition defined by the condition descriptor is satisfied or not; if the condition is satisfied, the process proceeds to step f7.

### 〈Step f7〉

The corresponding heating control data is read out from the file reading unit 301A, and stored in the heating control data storing means 1104A.

### 〈Step f8〉

When the start button is pressed from the user input unit 1103A, it is determined that the event has occurs. Therefore, when the button is pressed, the process proceeds to step f9.

### 〈Step f9〉

Using the data stored in the control data storing means 1104A, the heating control unit 1101A controls the cooking heater 1102A to perform heating. The step is then terminated.

In the above example, a flash card has been used as the recording medium, but other media such as a bar code or a magnetic card may be used.

As for the condition described in the condition descriptor, any other condition than the ambient temperature, for example, the temperature inside the oven, the weight of the food, or the like can also be described as the condition.

The above description has specifically dealt with an example of heating control for a microwave oven or the like, but the above system can also be applied to a washing machine, a vacuum cleaner, or the like if an input to an operation panel is used as the event and sensor information as the condition. For example, by downloading a new washing method onto a recording medium, and by just inserting the recording medium into the washing machine, the same washing method as implemented in a new model can also be implemented easily in the current machine.

The file creating unit in the present embodiment is an example of the file creating means of the present invention, the file writing unit in the present embodiment is an example of the file writing means of the present invention, the heating condition specifying means in the present embodiment is an example of the data processing means of the present invention, the file reading unit in the present embodiment is an example of the file reading means of the present invention, the heating control unit, condition evaluating unit, and event receiving unit in the present embodiment are each an example of the data processing means of the present invention, and the cooking heater in the present embodiment is an example of the heating means of the present invention.

By writing the heating control data as an event-driven type data processing descriptor to the recording medium together with the data at the writing side, as described above, fine heating control can be performed for each menu, and an adjustment to a new menu can also be accomplished easily.

### (Embodiment 4 in the Second Aspect of the Invention)

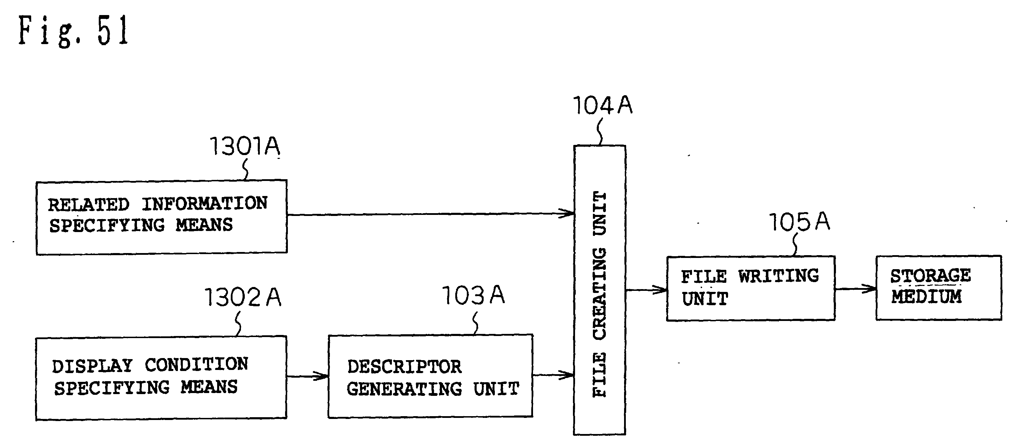

Figure 51 is a diagram showing the system configuration at the writing side according to a fourth embodiment in the second aspect of the present invention. The configuration shown in Figure 51 includes the same constituent elements as those shown in the system configuration of Figure 27; therefore, the same constituent elements will be designated by the same reference numerals and will not be specifically described herein.

In Figure 51, reference numeral 1301A is a related information specifying means for specifying program related information, and 1302A is a display condition specifying means for specifying an event for displaying the related information, such as an action to select a program from a program list, and the condition under which the related information can be displayed.

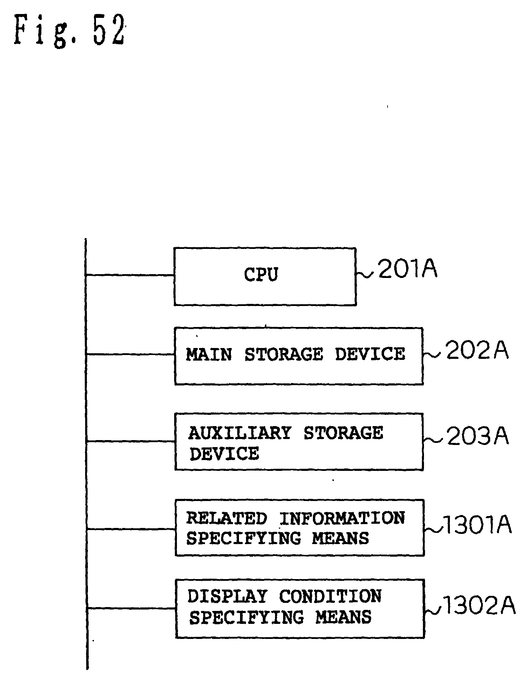

Figure 52 shows the hardware configuration of the present embodiment for implementing the above-configured system at the data creating side. The configuration shown in Figure 52 is basically the same as that of a general purpose computer system. Since this hardware configuration includes the same constituent elements as those shown in the system configuration of Figure 28 or 51, the same constituent elements will be designated by the same reference numerals and will not be specifically described herein.

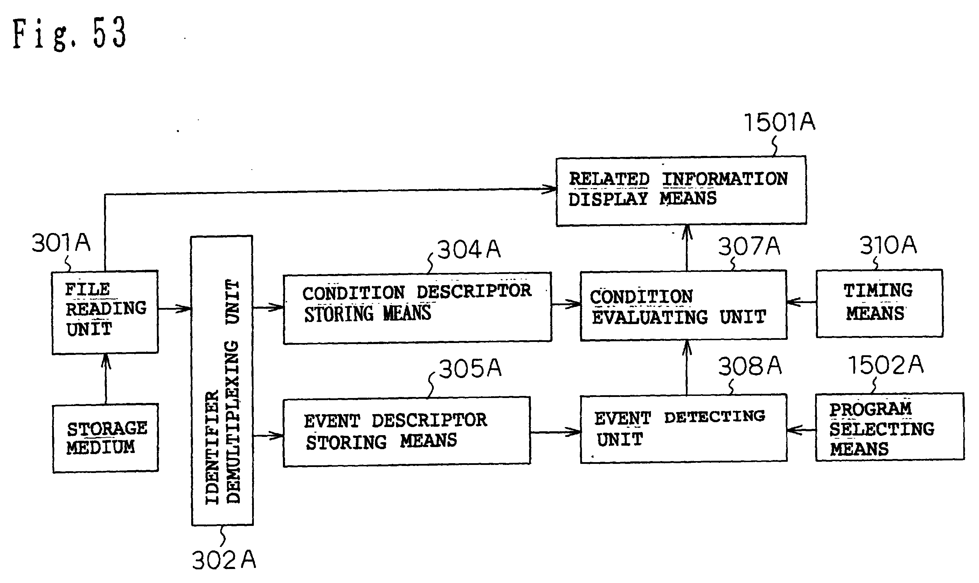

The system configuration at the display (reading) side is shown in Figure 53. This system configuration includes the same constituent elements as those shown in the system configuration of Figure 29; therefore, the same constituent elements will be designated by the same reference numerals and will not be specifically described herein. In Figure 53, reference numeral 1501A is a related information display means for displaying the related information by reading it from a recording medium, and 1502A is a program selecting means for the user to select the program whose related information he wishes to have displayed.

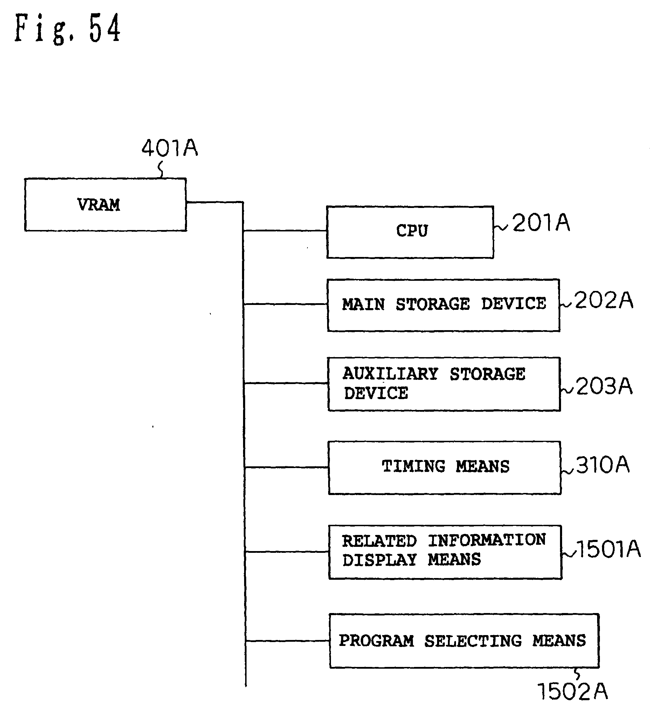

Figure 54 shows the hardware configuration of the present embodiment for implementing the above-configured system. The configuration shown in Figure 54 is basically the same as that of a general purpose computer system. Since this hardware configuration includes the same constituent elements as those shown in the system configuration of Figure 28 or 53, the same constituent elements will be designated by the same reference numerals and will not be specifically described herein.

The description hereinafter given deals with an example in which program related information, such as previews and performers' profiles, is recorded on a CD-ROM and, when a program is selected at the display side, its related information is read out from the CD-ROM for display.

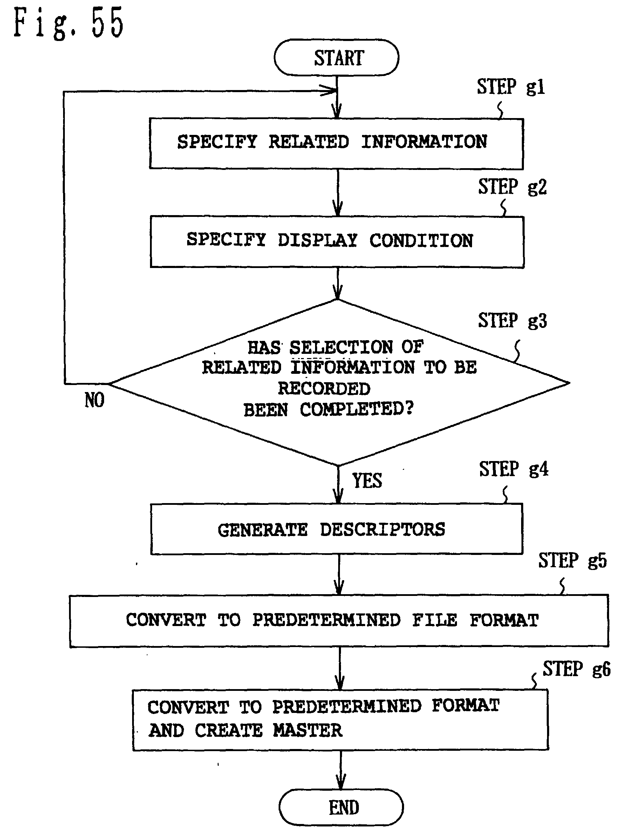

First, creation of program related information for CD-ROM data will be described with reference to the flow chart of Figure 55.

### 〈Step g1〉

Program related information is specified using the related information specifying means 1301A. It is assumed here that the file name of already created data is specified.

### 〈Step g2〉

Program identifier obtained when a program is selected from the program list is specified as the event for displaying the related information. It is assumed here that the condition that the related information is displayed if, by judging from the time, it is determined that the program is not being broadcast at the moment, is given by default as the condition in the condition descriptor. By so defining the condition descriptor, if the same program is selected, the displayed contents differ depending on the time; that is, if the program is being broadcast, the program is displayed as it is broadcast, otherwise, its related information is displayed.

### 〈Step g3〉

When all information to be recorded on the CD-ROM has been selected by repeating the steps g1 and g2, the process proceeds to step g4.

### 〈Step g4〉

The event descriptor and condition descriptor are generated for all selected information.

### 〈Step g5〉

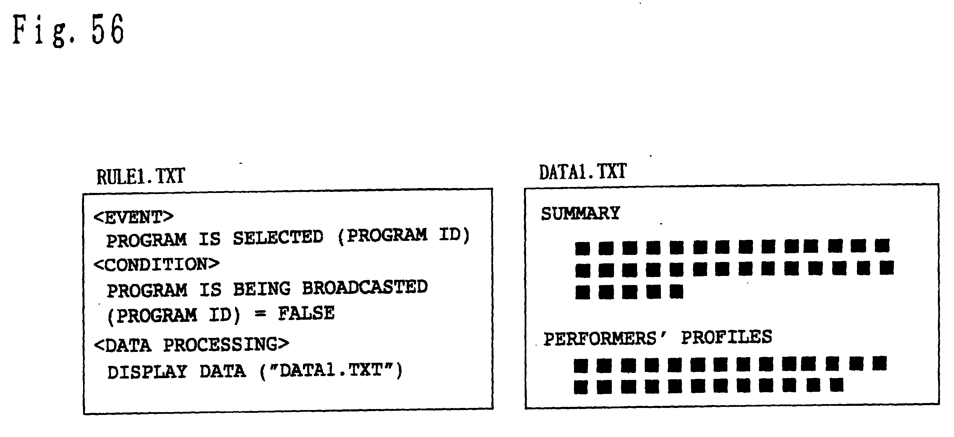

The file creating unit 104A converts the input related information and the descriptors to a predetermined file format. Examples of the generated files are shown in Figure 56.

### 〈Step g6〉

The file writing unit 105A writes the files generated in step g5 onto the CD-ROM master, after which the step is terminated.

In actuality, CD-ROMs are pressed from the thus created master.

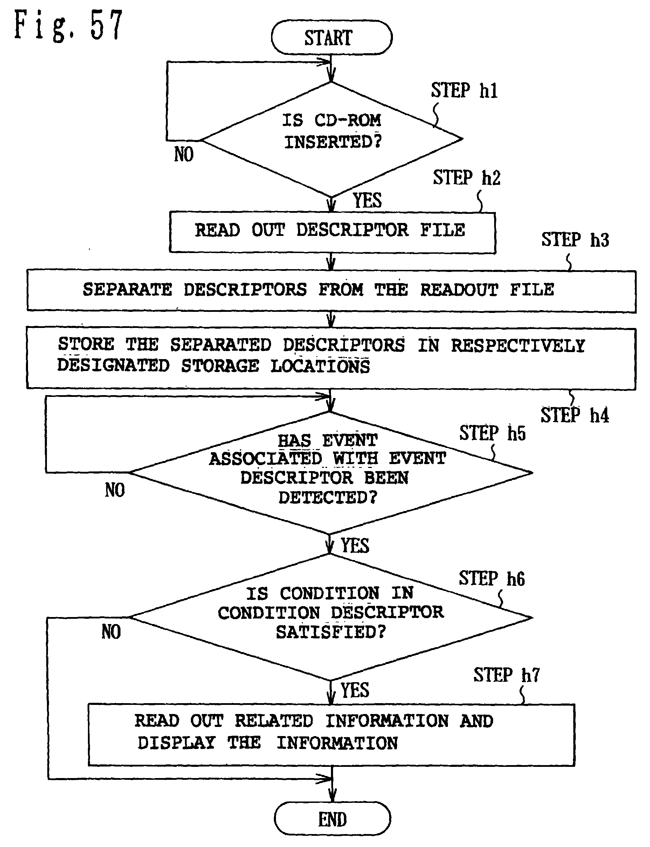

Next, the operation at the display (reading) side will be described with reference to the flow chart of Figure 57.

### 〈Step h1〉

It is examined whether the CD-ROM is inserted or not. If the CD-ROM is inserted, the process proceeds to step h2.

### 〈Step h2〉

The descriptor file is read out from the file reading unit 106A.

### 〈Step h3〉

The respective descriptors, i.e., the event descriptor and the condition descriptor, are separated from the file read out in step f2.

### 〈Step h4〉

The condition descriptor thus separated is stored in the condition descriptor storing means 304A, and the event descriptor is stored in the event descriptor storing means 305A.

### 〈Step h5〉

The event receiving unit 308A receives the event described in the event descriptor. When the event is received, the process proceeds to step f6. In this example, the selection of a program from a program list is received as the event.

### 〈Step h6〉

When, the selection of a program is received, it is examined whether the condition defined in the condition descriptor associated with the program related information is satisfied or not; if the condition is satisfied, the process proceeds to step f7. In this example, the scheduled broadcast time segment for the program is compared with the current time obtained from the timing means 310A and, if the current time is outside the scheduled broadcast time segment, it is determined that the condition is satisfied.

### 〈Step h7〉

The corresponding related information is read out from the file reading unit 301A, and displayed on the related information display means 1501A, after which the step is terminated. Any display method, such as a pop-up display, two-screen display, or picture-in-picture, can be used.

In the above example, a CD-ROM has been used as the recording medium, but other media such as a ROM, a DVD-ROM, for example,or floppy disk may be used.

By writing the related information as an event-driven data processing descriptor (rule) to the recording medium together with the data at the writing side, as described above, interlinking operations such as displaying the related data can be accomplished just by providing a rule interpreter at the reading side. Generally, in an electronic program guide, since the amount of information that can be transmitted is limited, it is difficult to transmit detailed information. In view of this, if related information with the descriptors of the present invention recorded on a CD-ROM is delivered in cooperation with program guide or like publishing media, a greater merit can be provided for the user.

The file creating unit in the present embodiment is an example of the file creating means of the present invention, the file writing unit in the present embodiment is an example of the file writing means of the present invention, the display condition specifying means in the present embodiment is an example of the data processing method specifying means of the present invention, the file reading unit in the present embodiment is an example of the file reading means of the present invention, and the related information display means, condition evaluating unit, and event receiving unit in the present embodiment are each an example of the data processing means of the present invention.

Here, the event descriptor, condition descriptor, and data processing descriptor of the present invention can be associated with an event time limiting descriptor, condition time limiting descriptor, and processing time limiting descriptor, respectively, to impose time limitations on the respective descriptors. When the event time limiting descriptor is provided, reception of the event is enabled only during the time segment defined by the event time limiting descriptor. Thus it becomes possible not to receive any event outside the defined time segment. When the condition time limiting descriptor is provided, evaluation, of the condition is done during the time segment defined by the condition time limiting descriptor. Thus it becomes possible not to evaluate the condition outside the defined time segment. When the processing time limiting descriptor is provided, processing of the data is performed during the time segment defined by the processing time limiting descriptor. Thus it becomes possible not to perform data processing outside the defined time segment. In this way, by imposing time limitations, the data processing method can be specified in a more flexible manner.

In the above embodiments of the present invention, interrupts to the CPU have been handled as events, but the events used in the present invention are not limited to such events, but generally refer to externally arising events that need not monitoring.

Further, all or part of the functions of each constituent element of the event-driven type file creating apparatus, event-driven type file reading apparatus, data storing method, or data processing method of the present invention may be implemented in software using a computer, or in hardware using a dedicated hardware circuit or device.

It should also be noted that a program recording medium, which stores a program for implementing by a computer all or part of the functions of each constituent element of the event-driven type file creating apparatus, event-driven type file reading apparatus, data storing method, or data processing method of the present invention, also falls within the scope of the present invention.

Next, various embodiments in accordance with the third aspect of the present invention will be described with reference to drawings.

### (Embodiment 1 in the Third Aspect of the Invention)

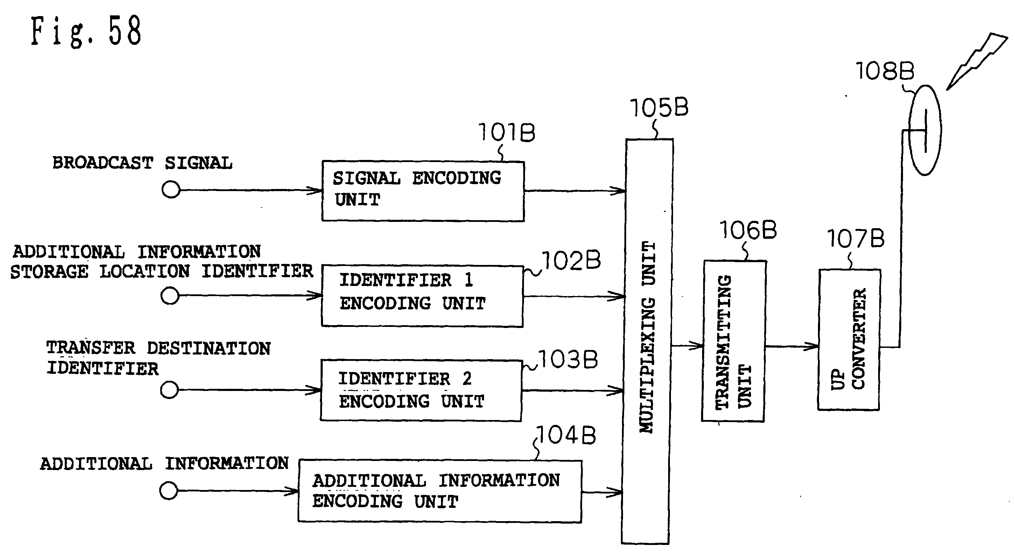

Figure 58 is a diagram showing the system configuration at the transmitting end according to a first embodiment in the third aspect of the present invention. In Figure 58, reference numeral 101B is a signal encoding unit for applying proper encoding operations, including compression, etc. to a broadcast signal, 102B is an identifier 1 encoding unit for encoding an additional information storage location identifier in synchronization with the encoding being performed in the signal encoding unit, 103B is an identifier 2 encoding unit for encoding a transfer destination identifier in synchronization with the encoding being performed in the signal encoding unit, 104B is an additional information encoding unit for encoding additional information in synchronization with the encoding being performed in the signal encoding unit, 105B is a multiplexing unit for multiplexing the encoded broadcast signal, identifiers, and additional information, 106B is a transmitting unit for applying processing necessary for transmission, such as channel codec and modulation operations, to the multiplexed signal, 107B is an up converter for modulating modulated signal into a predetermined higher frequency, and 108B is a transmitting antenna.

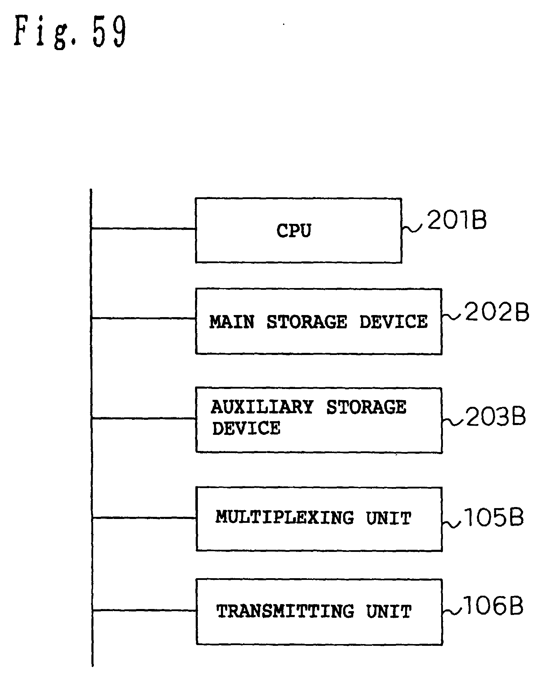

Figure 59 shows the hardware configuration of the present embodiment for implementing the above-configured system at the transmitting end. The configuration shown in Figure 59 is basically the same as that of a general purpose computer system. Since this hardware configuration includes the same constituent elements as those shown in the system configuration of Figure 58, the same constituent elements will be designated by the same reference numerals and will not be specifically described herein. In Figure 59, reference numeral 202B is a main storage device constructed from a volatile memory for storing programs, 203B is an auxiliary storage device constructed from a nonvolatile memory in which programs and other data are stored, and 201B is a CPU for executing the programs stored in the main storage device 202B. As noted above, the hardware configuration is basically the same as that of a general purpose computer system, so that any program stored on the auxiliary storage device 203B is first loaded into the main storage device 202B before it can be executed by the CPU 201B.

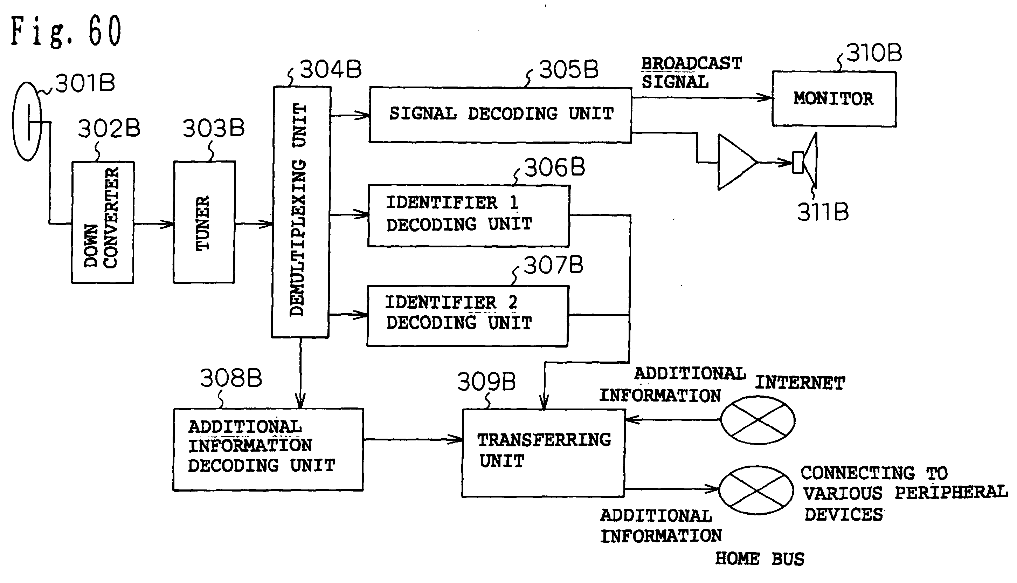

The system configuration at the receiving end is shown in Figure 60. In Figure 60, reference numeral 301B is a receiving antenna, 302B is a down converter for modulating the satellite wave received by the receiving antenna into a predetermined lower frequency, 303B is a digital broadcast receiving tuner, 304B is a demultiplexing unit for demultiplexing the signal selected by the tuner 303B into the broadcast signal consisting of video and audio information, the additional information storage location identifier, the transfer destination identifier, and the additional information, 305B is a signal decoding unit for decoding the encoded broadcast signal, 306B is an identifier 1 decoding unit for decoding the encoded additional information storage location identifier, 307B is an identifier 2 decoding unit for decoding the encoded transfer destination identifier, 308B is an additional information decoding unit for decoding the encoded additional information, 309B is a transferring unit for transferring the additional information in accordance with a user device identifier or the transfer destination identifier, 310B is a monitor, and 311B is a speaker.

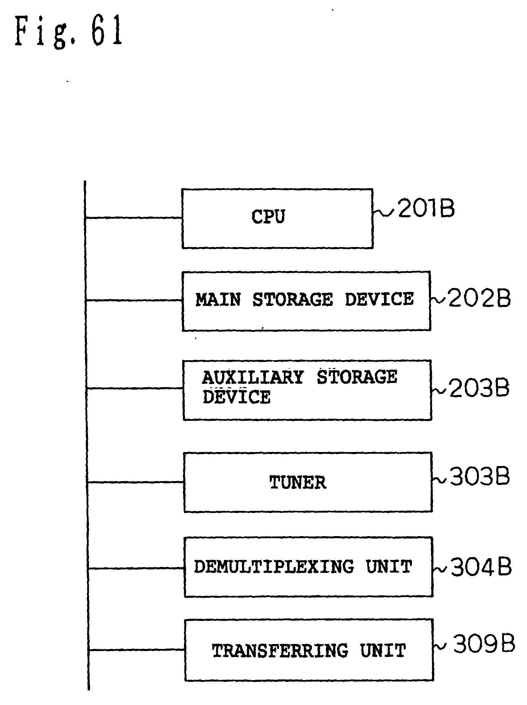

Figure 61 shows the hardware configuration of the present embodiment for implementing the above-configured system. The configuration shown in Figure 61 is basically the same as that of a general purpose computer system. Since this hardware configuration includes the same constituent elements as those shown in the system configuration of Figure 59 or 61, the same constituent elements will be designated by the same reference numerals and will not be specifically described herein.

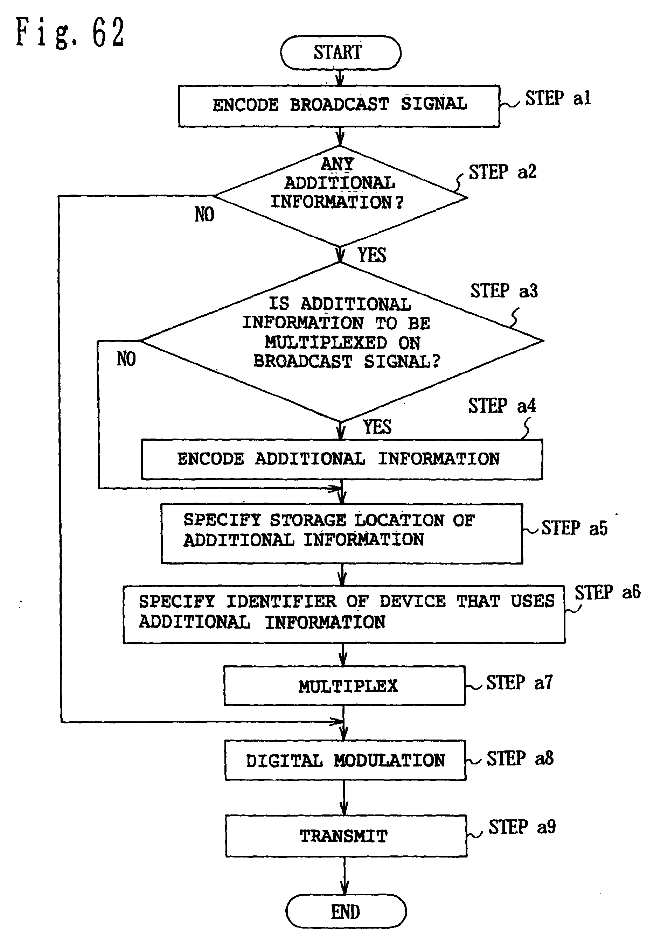

The operation of the above-configured systems will be described, first the transmitting system and then the receiving system. The operation at the transmitting end will be described with reference to the flow chart of Figure 62.

### 〈Step a1〉

The signal encoding unit 101B applies proper encoding operations, including compression, etc. to the broadcast signal consisting of video information, such as a standard television signal or HighVision signal, and its associated audio information.

### 〈Step a2〉

Using prescribed means, it is examined whether there is additional information associated with the broadcast signal encoded in step a1 and, if there is additional information, the process proceeds to step a3. Otherwise, the process proceeds to step a8.

### 〈Step a3〉

Using prescribed means, it is determined whether the additional information should be transmitted by multiplexing on the broadcast signal; if it should be so transmitted, the process proceeds to step a4. If it should be accessed from the receiving apparatus side via a network or the like, the process proceeds to step a5.

### 〈Step a4〉

The additional information to be multiplexed for transmission is encoded by the additional information encoding unit 104B in the same manner as in step a1.

### 〈Step a5〉

The storage location of the additional information is specified using prescribed means, and encoding is applied using the identifier 1 encoding unit 102B. If the additional information is to be multiplexed on broadcast signal for transmission, an identifier corresponding to a file name is specified which is used to specify the location of the additional information multiplexed for transmission. If the storage location indicates a file on a network, a URL address as used in an Internet browser or the like is specified.

### 〈Step a6〉

Using prescribed means, maker type or model name of the device for which the additional information is intended is given in accordance with a predetermined naming scheme, and this name is appended as the transfer destination identifier and is encoded by the identifier 2 encoding unit 103B.

### 〈Step a7〉

The encoded broadcast signal, additional information, additional information storage location identifier, and transfer destination identifier are supplied to the multiplexing unit 105B for multiplexing.

### 〈Step a8〉

The transmitting unit 106B applies necessary processing, such as channel codec and modulation operations, to the signal multiplexed in step a7, and thus modulates the signal into a digital broadcast transmission signal.

### 〈Step a9〉

The signal is transmitted toward a broadcast satellite from the transmitting antenna 108B via the up converter 107B.

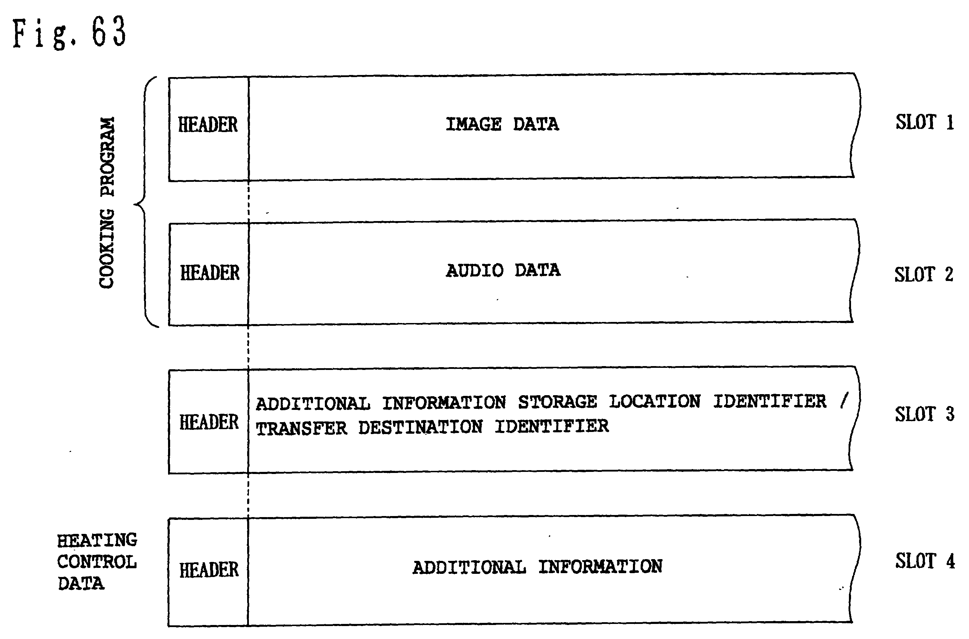

An example at the transmitting end will be described with reference to drawing. Figure 63 shows an example in which the additional information storage location identifier, transfer destination identifier, and additional information are multiplexed for transmission with a cooking program. The cooking program consists of video data in slot 1 and audio data in slot 2. The additional information storage location identifier, which indicates the storage location of the additional information relating to the cooking program, and the transfer destination identifier, which indicates the device for which the additional information is intended, are paired together, and the thus paired data is transmitted in slot 3. Here, the transfer destination identifier can be determined uniquely in accordance with a prescribed naming scheme; for example, if the device is a microwave oven manufactured by Company N, then the name "N-NE-XXXX" (XXXX is the model name ID) or the like is given. In the example of Figure 63, heating control data for the microwave oven is transmitted in slot 4 as the additional information. The heating control data is used in the peripheral device connected at the receiving apparatus side and designated by the transfer destination identifier.

Using the digital broadcast transmission method described above, a device manufacturer can transmit, for example, device control data, or the like as additional information for an advertisement by multiplexing them together, and can thus provide remote service in broadcasting fashion to devices in homes connected by a home bus, IEEE 1394, or the like. For example, if a defect is found in a program built in a product, etc., a corrective measure can be taken quickly and at low cost compared with the traditional method of replacing a ROM.

The additional information itself need not necessarily be multiplexed on the broadcast signal, but may be obtained via a network. It is obtained by the transferring unit 309B in Figure 60 via the Internet (see the NO branch from the multiplexing step a3 in Figure 62).

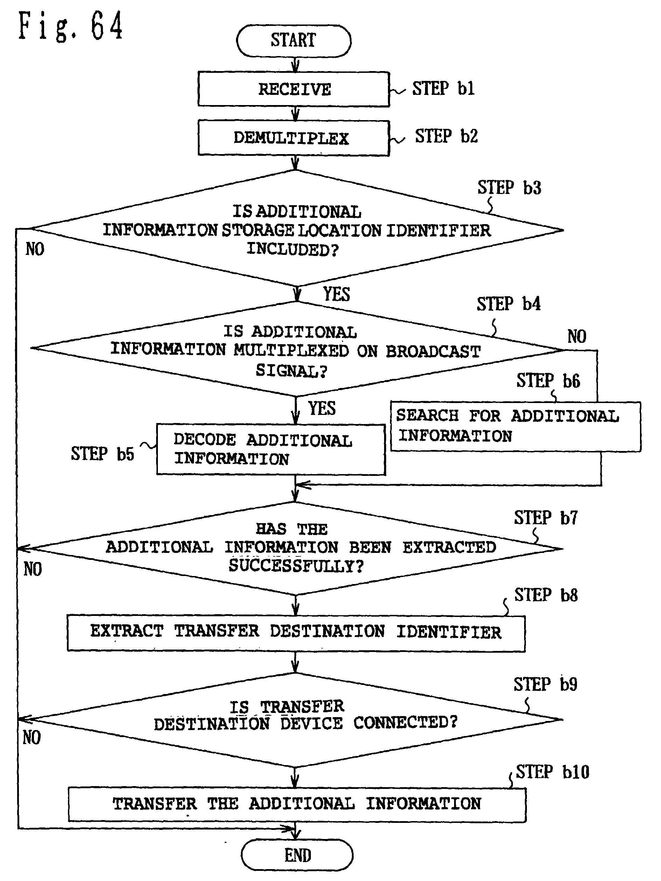

Next, the operation at the receiving end will be described with reference to the flow chart of Figure 64.

### 〈Step b1〉

The satellite wave received by the receiving antenna 301B is down converted by the down converter 302B to the predetermined lower frequency, and supplied to the digital broadcast tuner 303B and then to the digital demodulator for frequency selection and demodulation.

### 〈Step b2〉

The digital broadcast signal selected and demodulated in step b1 is demultiplexed by the demultiplexing unit 304B into the program information consisting of video and audio information, the additional information storage location identifier, the transfer destination identifier, and the additional information.

### 〈Step b3〉

Using the identifier 1 decoding unit 306B, it is examined whether an additional information storage location identifier is carried in the received signal and, if yes, the process proceeds to step b4. Otherwise, the step is terminated.

### 〈Step b4〉

Using prescribed means, the additional information storage location identifier is analyzed to see whether additional information is multiplexed on the broadcast signal. If additional information is multiplexed on the broadcast signal, the process proceeds to step b5. Otherwise, the process proceeds to step b6.

### 〈Step b5〉

The additional information multiplexed on the broadcast signal is decoded by the additional information decoding unit 308B.

### 〈Step b6〉

The transferring unit 309B searches for the additional information in accordance with the additional information storage location identifier and, if it is found, the additional information is received by the receiving apparatus. If the additional information is multiplexed, it is transferred from the additional information decoding unit 308B; if the additional information is to be obtained via the Internet, it is transferred from the designated URL.

### 〈Step b7〉

If the additional information is successfully obtained in accordance with the additional information storage location identifier, the process proceeds to step b8. If failed to obtain the additional information, for example, because the additional information storage location is wrong, or the like, the step is terminated.

### 〈Step b8〉

The transferring unit 309B receives from the identifier 2 decoding unit 307B the transfer destination identifier extracted from the received signal and designating the peripheral device for which the additional information obtained in step b7 is intended.

### 〈Step b9〉

Using prescribed means, it is examined whether the peripheral device designated by the transfer destination identifier is connected or not; if it is connected, the process proceeds to step b10, otherwise, the step is terminated.

### 〈Step b10〉

The transferring unit 309B transfers the additional information to the peripheral device designated by the transfer destination identifier. Suppose, for example, that a signal such as shown in Figure 64 described in connection with the transmitting end is received; then, when the cooking program is selected at the receiving end, the received signal is demultiplexed, and the additional information storage location identifier is decoded. In this example, since the additional information is multiplexed on the received signal, the additional information is decoded, and further, the transfer destination identifier is decoded. It is assumed here that the additional information carries new cooking menu data and the transfer destination identifier designates a microwave oven manufactured by Company N. When Company N's microwave oven is connected to the receiving apparatus, then the decoded additional information is transferred to the microwave oven. If it is assumed here that the microwave oven has the function of updating or modifying the cooking data, then with the transferred data a new cooking menu is automatically added without human intervention and becomes ready to use.

Not only control data such as described above, but any other data such as voice data, image data, driver (firmware), script, executable program, etc; can also be transmitted as the additional data, and in any data format. It will also be appreciated that the user device identifier or the transfer destination identifier may be constructed to designate the receiving apparatus itself or an external device having such functions of display, output (printing), storage, etc. In this way, the method of processing the additional information can be set and/or added independently at the user device or destination device side, irrespective of the functions of the receiving apparatus. As a result, the additional information can be used freely at the peripheral device side according to individual needs, for example, allowing the user to print out the information promptly or to temporarily store it.

Further, the transfer destination identifier to be multiplexed on the broadcast signal may be constructed to designate a plurality of destinations. A service called LCR which automatically chooses the lowest cost telephone line has been around for many years, but since this service delivers telephone tariffs over the telephone line, if a fax machine, a telephone, etc. are connected in series, for example, there arises the problem that only the equipment installed on the upstream side can use the service. By contrast, according to the present invention, if the telephone tariff of each telephone company as additional information and the user device identifier designating the manufacturers or model names of usable telephones or fax machines are transmitted by multiplexing on a broadcast signal, a plurality of communication devices can be configured to receive the LCR service by extracting the user device identifier at the receiving apparatus side and, if the applicable devices are connected to the receiving apparatus, then by extracting the corresponding additional information and transferring it to the devices. If no devices corresponding to the user device identifier are connected, the received additional information is not transferred, but is discarded.

Information transfer may also be controlled according to user profile information stored in the receiving apparatus by using a transfer condition identifier in addition to the transfer destination identifier. In such services as member exclusive service where value added service is provided only to particular users, if the transfer condition identifier is multiplexed for transmission together with the transfer destination identifier, conditions for the transfer can be set to match individual needs. For example, in a music broadcast program, or the like, where an idol singer appears, if a picture image of the idol singer is multiplexed as additional information on the broadcast signal and transmitted together with the transfer condition identifier that requires a fan club member to enter his or her member number, program interlinked service can be provided that allows the user to view the picture image of the idol by entering his or her fan club member number from the numeric keypad on the receiving apparatus.

Thus, the third aspect of the present invention provides a transmitting apparatus and receiving apparatus capable of updating firmware, software, or data in peripheral devices utilizing a digital broadcast, by identifying the peripheral devices connected to the receiving apparatus via a home bus or IEEE 1394 and by transferring the additional information, demultiplexed from the transmitted signal, to the peripheral devices designated by the transfer destination identifier at the transmitting apparatus side.

According to the third aspect of the invention, information can be transferred to any peripheral device designated from the transmitting apparatus side irrespective of the contents or the format of the information, provided that the information transfer is performed in accordance with the protocol between the receiving apparatus and the peripheral device; accordingly, control commands, etc. specific to the peripheral device need not be supported at the receiving apparatus side.

The embodiments in the third aspect of the invention have been described by taking a digital broadcast as an example, but it will be appreciated that the invention is also applicable to an analog broadcast.

Furthermore, since a device connected to the receiving apparatus is identified, the data is transferred only when the specified device is connected; therefore; by broadcasting data utilizing a CM broadcast, or the like, maintenance service can be provided simultaneously to all designated devices.

The present invention also concerns a medium for storing a program that can implement all or part of the means, units, or steps of the invention described above.

Further, in the present invention, each means or unit may be implemented using dedicated hardware having the equivalent function, or by a computer using software achieving the equivalent function.

In the third aspect of the invention described above, while data is transferred to the peripheral device connected to the receiving apparatus without user intervention, the disadvantage is that the user cannot determine whether or not the data should be transferred to the peripheral device.

Generally, many apparatuses used in homes are not equipped with sufficient memory, and therefore, cannot store all transferred data. While the third aspect of the invention proposes a method for automatically determining whether to transfer or not transfer the data on the basis of the transfer condition identifier, there are cases where the procedure is simpler and more efficient if the user makes the decision on the transfer by himself.

In view of this, various embodiments in accordance with the fourth aspect of the invention, which overcomes the disadvantage of the third aspect of the invention, will be described below with reference to drawings.

### (Embodiment 1 in the Fourth Aspect of the Invention)

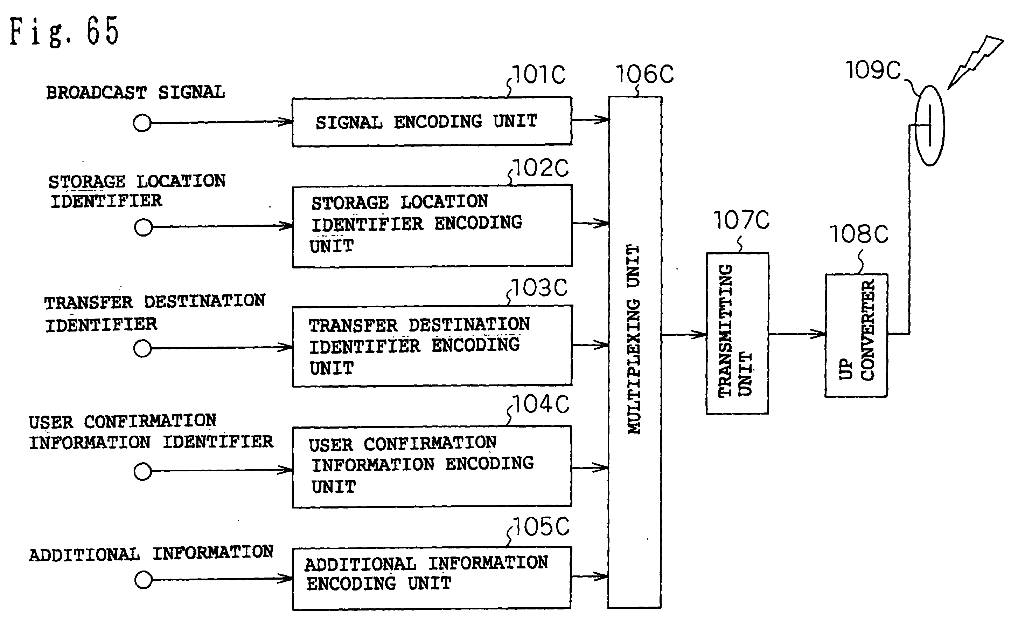

As one embodiment, a digital broadcast transmission method and receiving method will be described below. Figure 65 is a diagram showing the system configuration at the transmitting end according to a first embodiment of the fourth aspect of the present invention. In Figure 65, reference numeral 101B is a signal encoding unit for applying proper encoding operations, including compression, to a broadcast signal, 102C is a storage location identifier encoding unit for encoding a storage location identifier in synchronization with the encoding being performed in the signal encoding unit, 103C is a transfer destination identifier encoding unit for encoding a transfer destination identifier in synchronization with the encoding being performed in the signal encoding unit, 104C is a user confirmation information encoding unit for encoding user confirmation information in synchronization with the encoding being performed in the signal encoding unit, 105C is an additional information encoding unit for encoding additional information in synchronization with the encoding being performed in the signal encoding unit, 106C is a multiplexing unit for multiplexing the encoded broadcast signal, identifiers, and additional information, 107C is a transmitting unit for applying processing necessary for transmission, such as channel codec and modulation operations, to the multiplexed signal, 108C is an up converter for modulating the signal into a predetermined higher frequency, and 109C is a transmitting antenna.

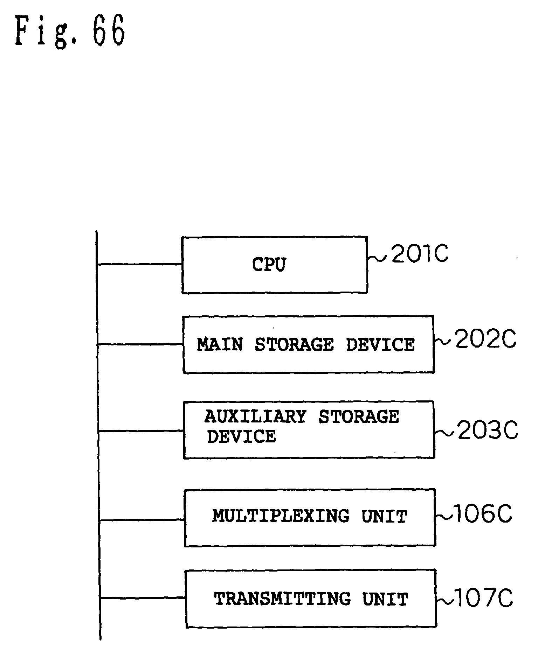

Figure 66 shows the hardware configuration of the present embodiment for implementing the above-configured system at the transmitting end. The configuration shown in Figure 66 is basically the same as that of a general purpose computer system. Since this hardware configuration includes the same constituent elements as those shown in the system configuration of Figure 65, the same constituent elements will be designated by the same reference numerals and will not be specifically described herein. In Figure 66, reference numeral 202C is a main storage device constructed from a volatile memory for storing programs, 203C is an auxiliary storage device constructed from a nonvolatile memory in which programs and data are stored, and 201C is a CPU for executing the programs stored in the main storage device 202C. As noted above, the hardware configuration is basically the same as that of a general purpose computer system, so that any program stored on the auxiliary storage device 203C is first loaded into the main storage device 202C before it can be executed by the CPU 201C.

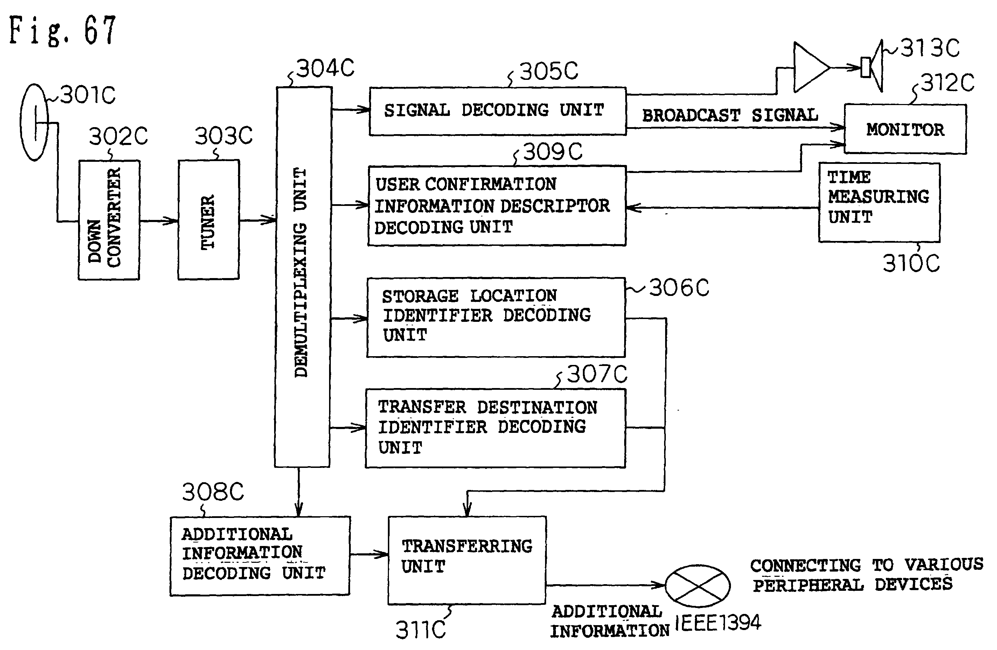

The system configuration at the receiving end is shown in Figure 67. In Figure 67, reference numeral 301C is a receiving antenna, 302C is a down converter for modulating the satellite wave received by the receiving antenna into a predetermined lower frequency, 303C is a digital broadcast receiving tuner, 304C is a demultiplexing unit for demultiplexing the signal selected by the tuner into the broadcast signal consisting of video and audio information, the additional information storage location identifier, the transfer destination identifier, and the additional information, 305C is a signal decoding unit for decoding the encoded broadcast signal, 306C is a storage location identifier decoding unit for decoding the encoded storage location identifier, 307C is a transfer destination identifier decoding unit for decoding the encoded transfer destination identifier, 308C is an additional information decoding unit for decoding the encoded additional information, 309C is a user confirmation information descriptor decoding unit for decoding the encoded user confirmation information identifier, 310C is a time measuring unit for measuring the monitor output time, 311C is a transferring unit for transferring the additional information in accordance with a user device identifier or the transfer destination identifier, 312C is a monitor, and 313C is a speaker.

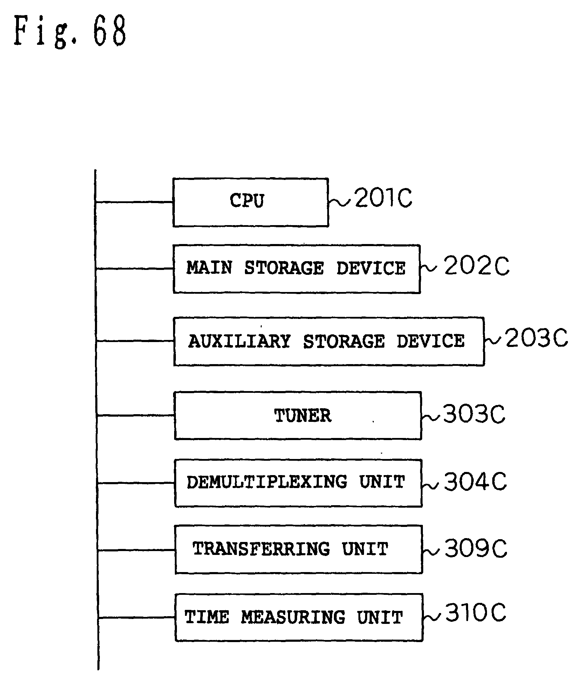

Figure 68 shows the hardware configuration of the present embodiment for implementing the above-configured system. The, configuration shown in Figure 68 is basically the same as that of a general purpose computer system.

Since this hardware configuration includes the same constituent elements as those shown in the system configuration of Figure 66 or 67, the same constituent elements will be designated by the same reference numerals and will not be specifically described herein.

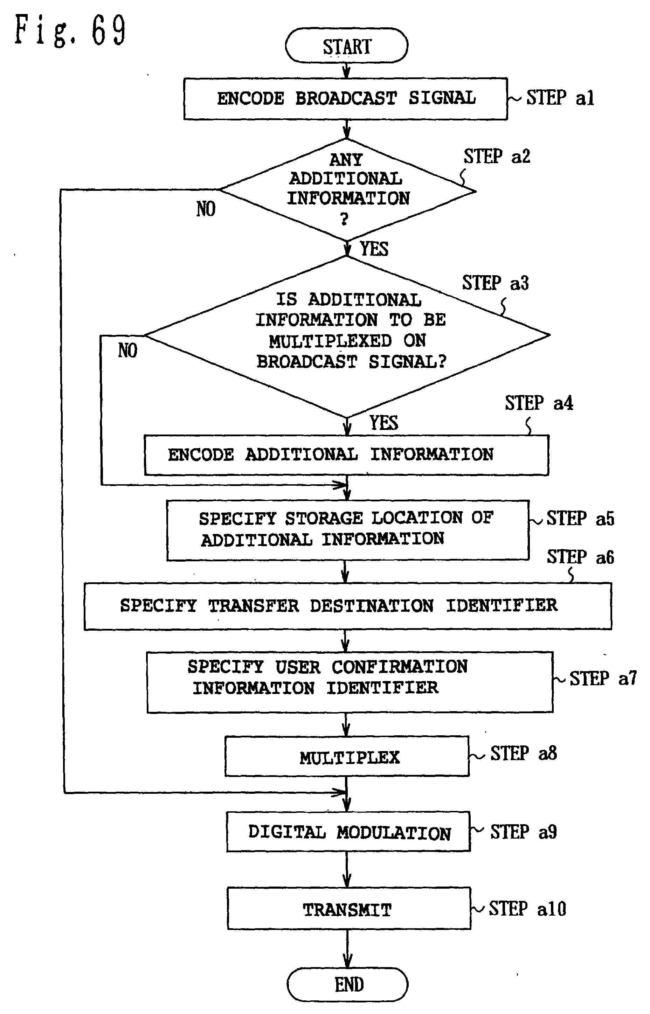

The operation of the above-configured systems will be described, in the order, first the transmitting end and then the receiving end. The operation at the transmitting end will be described with reference to the flow chart of Figure 69.

### 〈Step a1〉

The signal encoding unit 101C applies proper encoding operations, including compression, to the broadcast signal consisting of video information, such as a standard television signal or HighVision signal, and its associated audio information.

### 〈Step a2〉

It is examined whether there is additional information associated with the broadcast signal encoded in step a1 and, if there is additional information, the process proceeds to step a3. Otherwise, the process proceeds to step a8.

### 〈Step a3〉

If the additional information should be transmitted by multiplexing on the broadcast signal, the process proceeds to step a4. If it should be accessed from the receiving apparatus side via a network or the like, the process proceeds to step a5.

### 〈Step a4〉

The additional information to be multiplexed for transmission is encoded by the additional information encoding unit 104C in the same manner as in step a1.

### 〈Step a5〉

The storage location of the additional information is specified, and encoding is applied using the storage location identifier encoding unit 102C. If the additional information is to be multiplexed on the broadcast signal for transmission, an identifier corresponding to a file name is specified which is used to designate the location of the additional information multiplexed for transmission.

If the storage location indicates a file on a network, a URL address as used in an Internet browser or the like is specified.

### 〈Step a6〉

Maker type or model name of the device for which the additional information is intended is given in accordance with a predetermined naming scheme, and this name is appended as the transfer destination identifier and is encoded by the destination identifier encoding unit 103C.

### 〈step a7〉

Information to be confirmed by the user is specified, and is encoded by the user confirmation information identifier encoding unit 104C.

### 〈Step a8〉

The encoded broadcast signal, additional information, additional information storage location identifier, and user device identifier are supplied to the multiplexing unit 106C for multiplexing.

### 〈Step a9〉

The transmitting unit 107C applies necessary processing, such as channel codec and modulation operations, to the signal multiplexed in step a8, and thus modulates the signal into a digital broadcast transmission signal.

### 〈Step a10〉

The signal is transmitted toward a broadcast satellite from the transmitting antenna 109C via the up converter 108C.

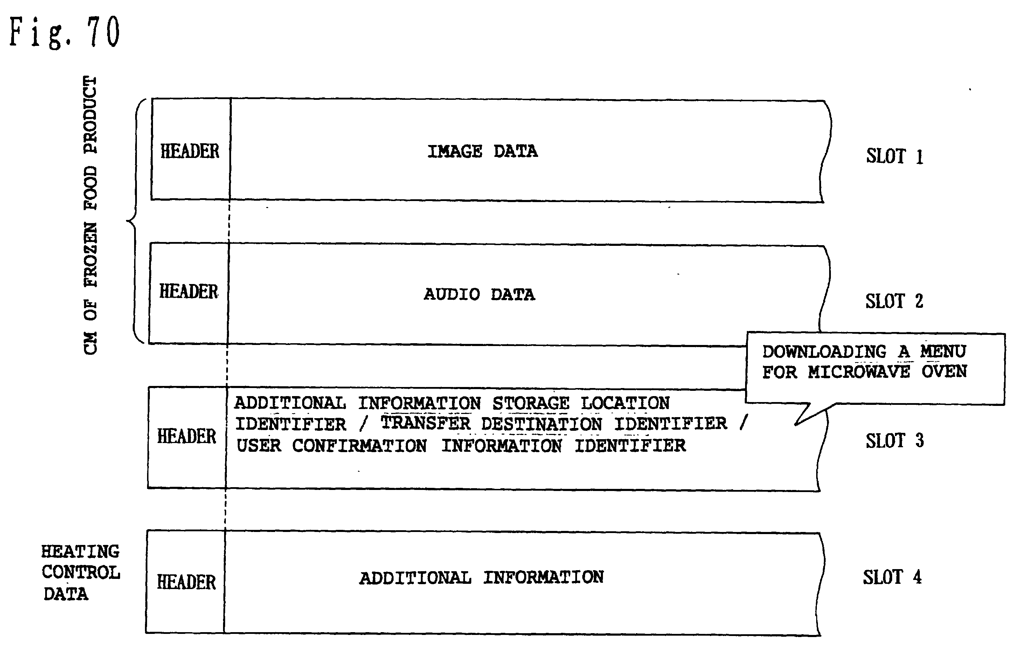

An example at the transmitting end will be described with reference to drawings. Figure 70 shows an example in which the storage location identifier, transfer destination identifier, user confirmation information identifier, and additional information are multiplexed for transmission with a CM for a frozen food product. The frozen food CM consists of video data in slot 1 and audio data in slot 2. The storage location identifier, which indicates the storage location of the additional information relating to the frozen food product, and the transfer destination identifier, which designates the device for which the additional information is intended, are paired together, and the thus paired data is transmitted in slot 3. Here, the transfer destination identifier can be determined uniquely in accordance with a prescribed naming scheme; for example, if the device is a microwave oven manufactured by Company N, the name "N-NE-XXXX" (XXXX is the model ID) is given.

In the example of Figure 70, microwave oven control data for optimum heating of the frozen food is transmitted in slot 4 as the additional information. The control data is used in the microwave oven connected at the receiving apparatus side and designated by the transfer destination identifier. The information carried in the user confirmation information descriptor is used, for example, by outputting it to the monitor when transferring the data at the receiving apparatus side.

Using the digital broadcast transmission method described above, device control data can be transmitted after being multiplexed as additional information with the CM, and when the user confirmation information descriptor is used, it becomes possible to confirm on a screen that the data is being transferred when the applicable device is connected.

The additional information itself need not necessarily be multiplexed on the broadcast signal, but may be obtained via a network. That is, in the broadcast, only information concerning the method of obtaining the additional information may be transmitted, and the actual additional information may be obtained through the Internet or from a dealer. Further, how each identifier or descriptor is to be used at the receiving end is not specifically specified from the transmitting end.

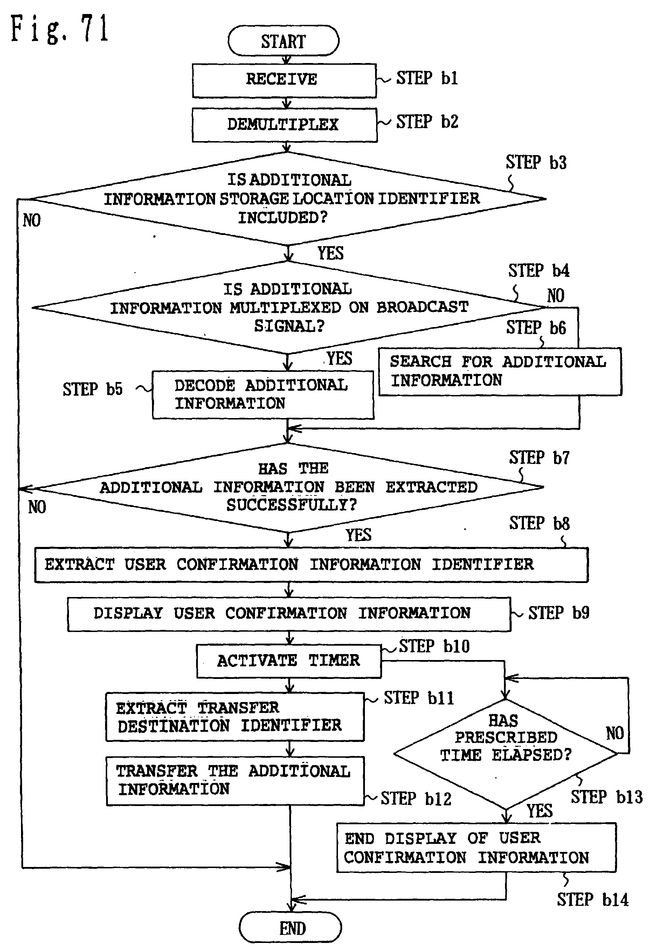

Next, the operation at the receiving end will be described with reference to the flow chart of Figure 71.

### 〈Step b1〉

The satellite wave received by the receiving antenna 301C is down converted by the down converter 302C to the predetermined frequency band, and supplied to the digital demodulator for frequency selection and demodulation via the digital broadcast tuner 303C.

### 〈Step b2〉

The digital broadcast signal selected and demodulated in step b1 is demultiplexed by the demultiplexing unit 304C into the program information consisting of video and audio information, the storage location identifier, the transfer destination identifier, and the additional information.

### 〈Step b3〉

Using the identifier 1 decoding unit 306C, it is examined whether a storage location identifier is carried in the received signal and, if yes, the process proceeds to step b4. Otherwise, the step is terminated.

### 〈Step b4〉

The storage location identifier is analyzed to see whether additional information is multiplexed on the broadcast signal.

If additional information is multiplexed on the broadcast signal, the process proceeds to step b5. Otherwise, the process proceeds to step b6.

### 〈Step b5〉

The additional information multiplexed on the broadcast signal is decoded by the additional information decoding unit 308C.

### 〈Step b6〉

Search is made for the additional information in accordance with the storage location identifier and, if it is found, the additional information is received by the receiving apparatus.

### 〈Step b7〉

If the additional information is successfully obtained in accordance with the storage location identifier, the process proceeds to step b8. If failed to obtain the additional information, for example, because the storage location of the additional information is wrong, the step is terminated.

### 〈Step b8〉

The user confirmation information descriptor decoding unit 309C extracts from the received signal the user confirmation information descriptor which describes the confirmation information for the user.

### 〈Step b9〉

The contents of the user confirmation information descriptor extracted in step b8 are output on the monitor 312C.

### 〈Step b10〉

Timer is activated to measure the monitor output time.

### 〈Step b11〉

The transfer destination identifier decoding unit 307C extracts from the received signal the transfer destination identifier identifying the peripheral device for which the additional information obtained in step b7 is intended.

### 〈Step b12〉

The additional information is transferred to the peripheral device designated by the transfer destination identifier.

### 〈Step b13〉

It is examined whether a prescribed time has elapsed from the activation of the timer; if the prescribed time has elapsed, the process proceeds to step b14 to end the monitor output of the user confirmation information.

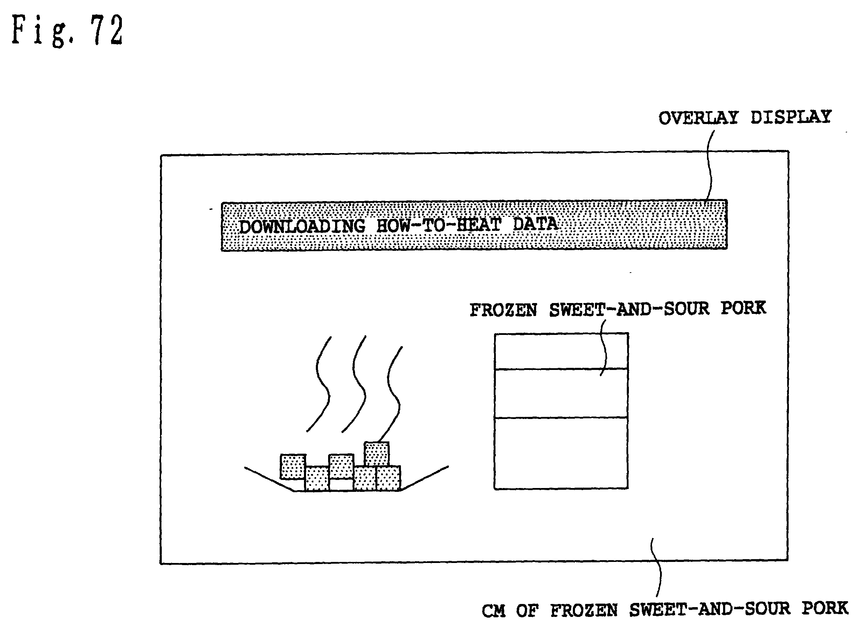

Suppose, for example, that a signal such as shown in Figure 71 described in connection with the transmitting end is received; then, when the CM is received at the receiving end, the received signal is demultiplexed, and the additional information storage location identifier is decoded. In this example, since the additional information is multiplexed on the received signal, the additional information and the user confirmation information descriptor are decoded, and further, the transfer destination identifier is decoded. It is assumed here that the additional information carries data instructing how to heat frozen sweet-and-sour pork which is a new product, that the user confirmation information descriptor carries a message "DOWNLOADING HOW-TO-HEAT DATA", and that the transfer destination identifier designates a microwave oven manufactured by Company N. First, when the CM appears, the message "DOWNLOADING HOW-TO-HEAT DATA" is displayed in an overlaid fashion on the monitor for 10 seconds. An example of the monitor output is shown in Figure 72. Next, the decoded additional information is transferred to the designated microwave oven. The microwave oven to which the additional information has been transferred, can heat the frozen sweet-and-sour pork using the optimum heating data so it tastes good when eaten.

Here, the user confirmation information descriptor may be constructed to carry not only the text data to be displayed on the monitor, but also image data or melody or voice data or a combination thereof.

According to the present embodiment, the user can easily confirm what additional information is being transferred.

### (Embodiment 2 in the Fourth Aspect of the Invention)

As one embodiment, a digital broadcast receiving method will be described below.

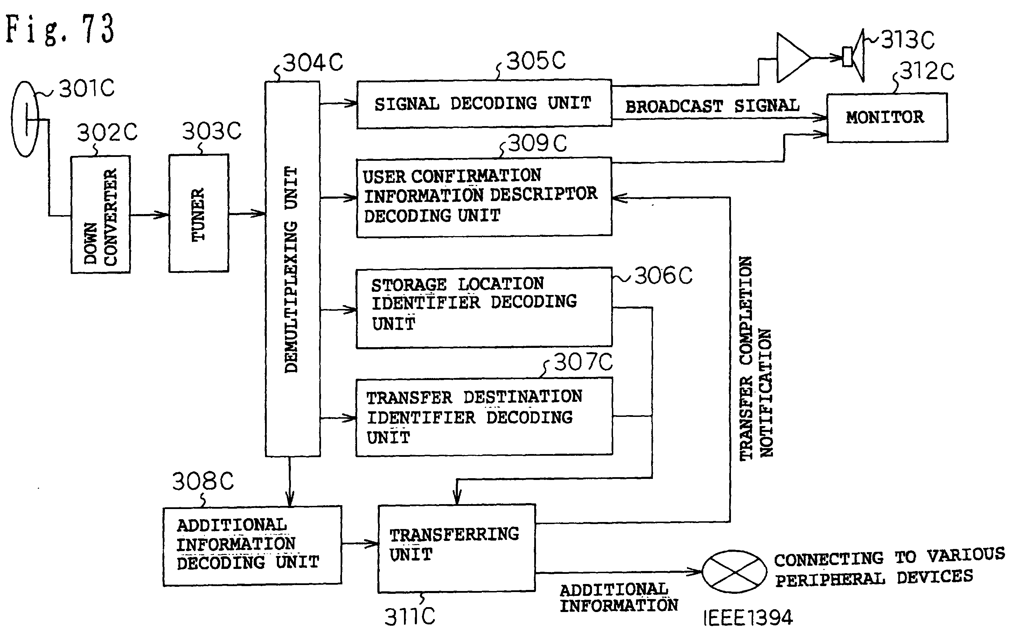

Figure 73 shows the system configuration according to a second embodiment of the present invention. In Figure 73, the same elements as those shown in the system configuration of Figure 67 will be designated by the same reference numerals and will not be specifically described herein. Reference numeral 311C is a transferring unit for transferring additional information in accordance with the user device identifier or transfer destination identifier; the system configuration of this embodiment differs from the system configuration of Figure 67 in that a transfer completion notification can be sent to the user confirmation information descriptor decoding unit.

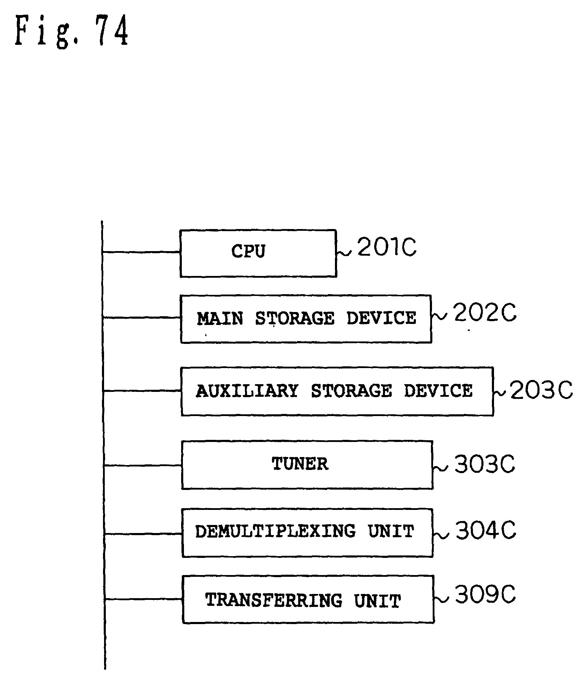

Figure 74 shows the hardware configuration of the present embodiment for implementing the above-configured system. The configuration shown in Figure 74 is basically the same as that of a general purpose computer system. Since this hardware configuration includes the same constituent elements as those shown in the system configuration of Figure 68, the same constituent elements will be designated by the same reference numerals and will not be specifically described herein.

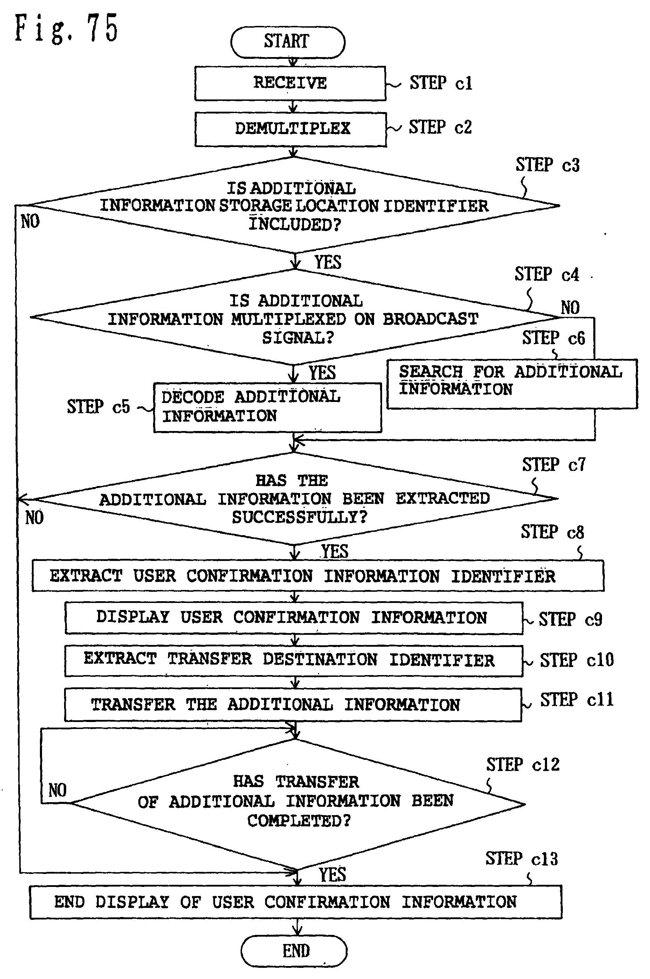

The operation of the above-configured receiving system will be described with reference to the flow chart of Figure 75.
〈Step c1〉 to 〈Step c9〉 perform the same processing as 〈Step b1〉 to 〈Step b9〉 described in the first embodiment.

### 〈Step c10〉

The transfer destination identifier decoding unit 307C extracts from the received signal the transfer destination identifier identifying the peripheral device for which the additional information obtained in step b7 is intended.

### 〈Step c11〉

The additional information is transferred to the peripheral device designated by the transfer destination identifier.

### 〈Step c12〉

It is examined whether the transfer of the additional information has been completed; if the transfer has been completed, the process proceeds to step c13 to end the monitor output of the user confirmation information.

If it is assumed here that heating control data for a microwave oven is downloaded from a CM, as in the first embodiment, the displayed message "DOWNLOADING HOW-TO-HEAT DATA" disappears as soon as the downloading is finished; this is convenient because the user can confirm whether the writing to the microwave oven has been completed or riot.

### (Embodiment 3)

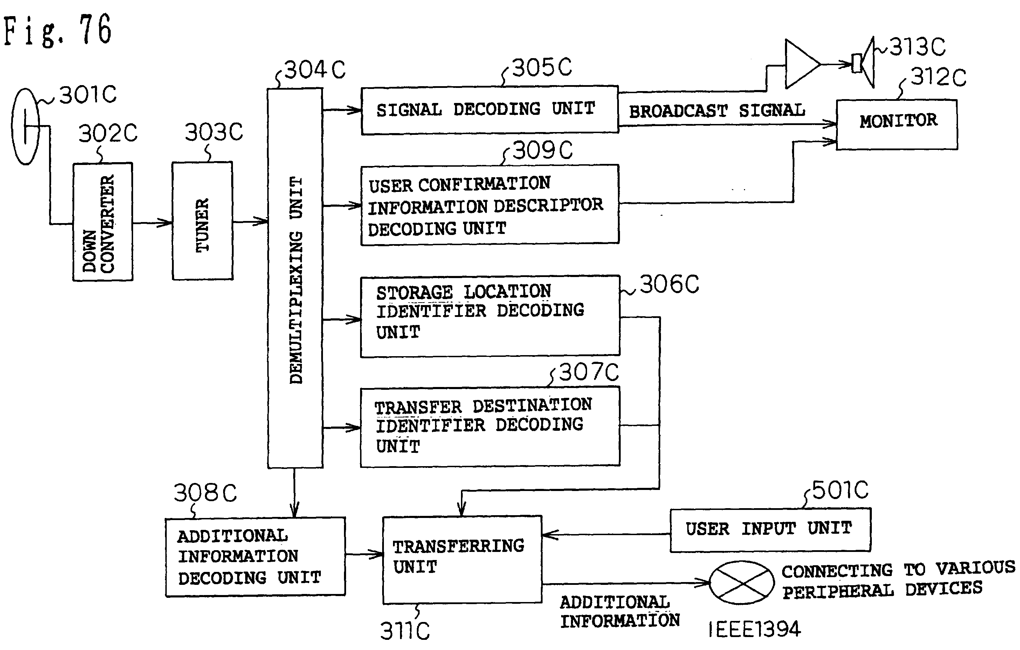

As one embodiment, a digital broadcast receiving method will be described below. Figure 76 shows the system configuration at the receiving end according to a third embodiment of the present invention. In Figure 76, the same elements as those shown in the system configuration of Figure 67 will be designated by the same reference numerals and will not be specifically described herein. Reference numeral 501C is a user input unit for accepting an input from the user regarding the display of the user confirmation information.

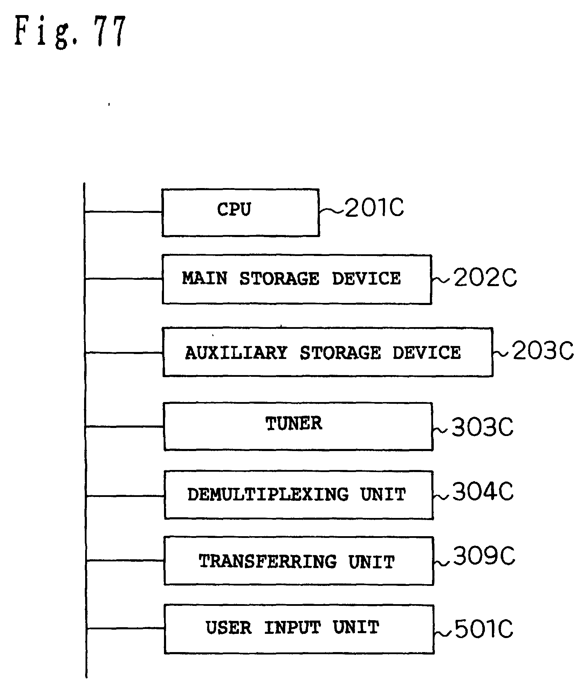

Figure 77 shows the hardware configuration of the present embodiment for implementing the above-configured system. The configuration shown in Figure 77 is basically the same as that of a general purpose computer system. Since this hardware configuration includes the same constituent elements as those shown in the system configuration of Figure 68 or 76, the same constituent elements will be designated by the same reference numerals and will not be specifically described herein.

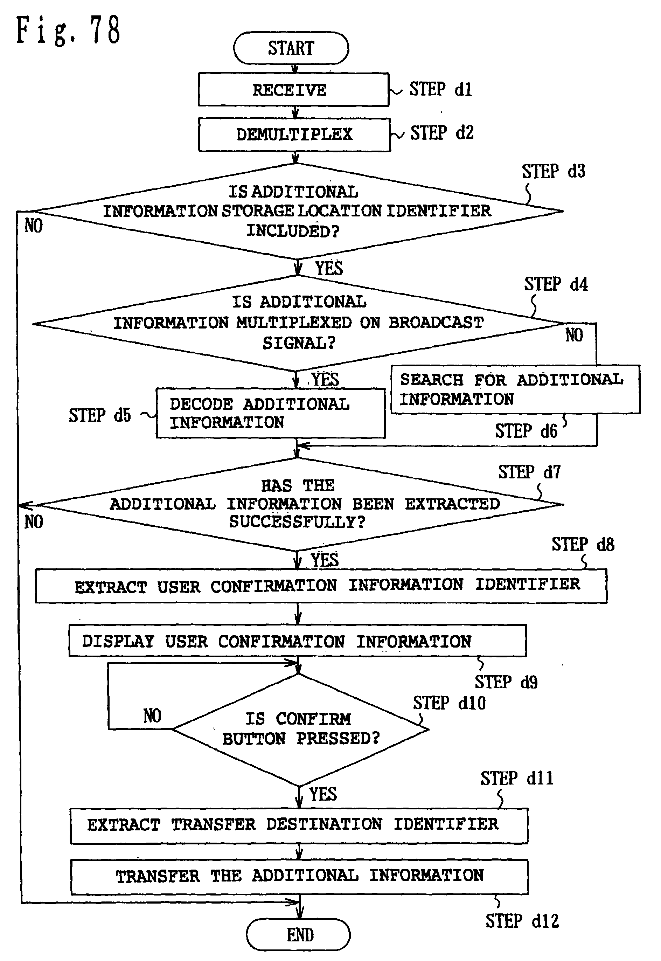

The operation of the above-configured receiving system will be described with reference to the flow chart of Figure 78.
〈Step d1〉 to 〈Step d9〉 perform the same processing as 〈Step b1〉 to 〈Step b9〉 described in the first embodiment.

### 〈Step d10〉

Here, accepts an input from the user input unit 501. When the confirm button is pressed, the process proceeds to step d11.

### 〈Step d11〉

The transfer destination identifier decoding unit 307C extracts from the received signal the transfer destination identifier identifying the peripheral device for which the additional information obtained in step b7 is intended.

### 〈Step d12〉

The additional information is transferred to the peripheral device designated by the transfer destination identifier.

If it is assumed here that heating control data for a microwave oven is downloaded from a CM, as in the first embodiment, the transfer, is performed only when the user presses the confirm button during the broadcasting of the CM; this offers the advantage that unnecessary data is not transferred. If a message "PRESS CONFIRM BUTTON TO START TRANSFER" is set in the user confirmation information identifier, the operating procedure is easier to understand.

### (Embodiment 4)

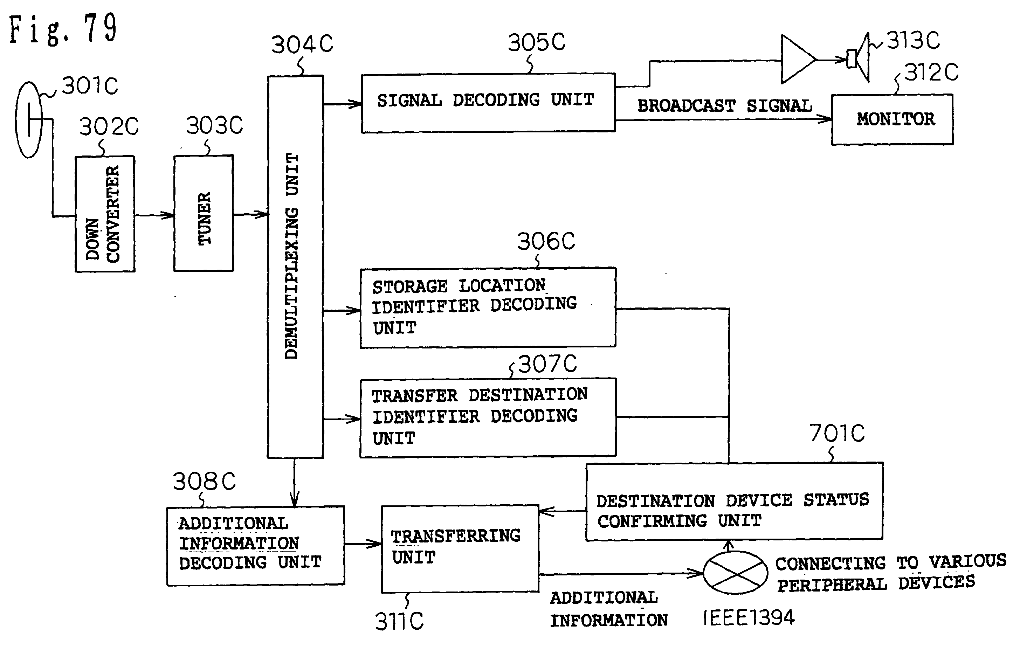

As one embodiment, a digital broadcast receiving method will be described below. Figure 79 shows the system configuration at the receiving end according to a fourth embodiment of the present invention. In Figure 79, the same elements as those shown in the system configuration of Figure 67 will be designated by the same reference numerals and will not be specifically described herein. Reference numeral 701C is a destination device status confirming unit for confirming the status of the destination device connected to the receiving apparatus.

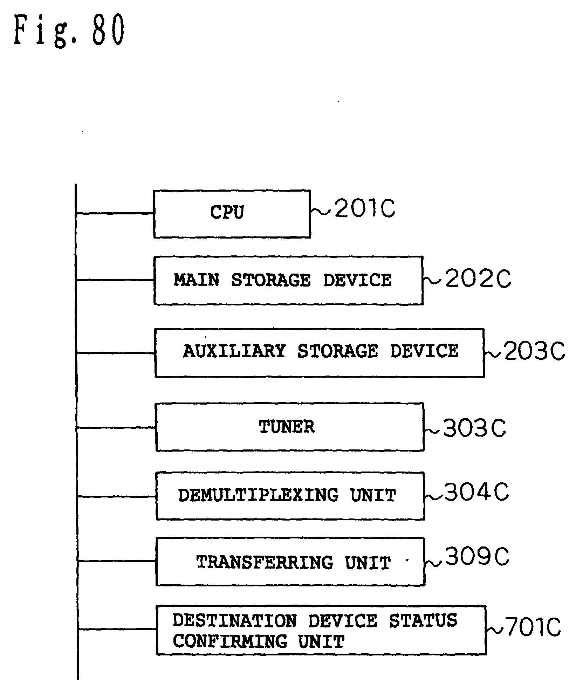

Figure 80 shows the hardware configuration of the present embodiment for implementing the above-configured system. The configuration shown in Figure 80 is basically the same as that of a general purpose computer system. Since this hardware configuration includes the same constituent elements as those shown in the system configuration of Figure. 68 or 79, the same constituent elements will be designated by the same reference numerals and will not be specifically described herein.

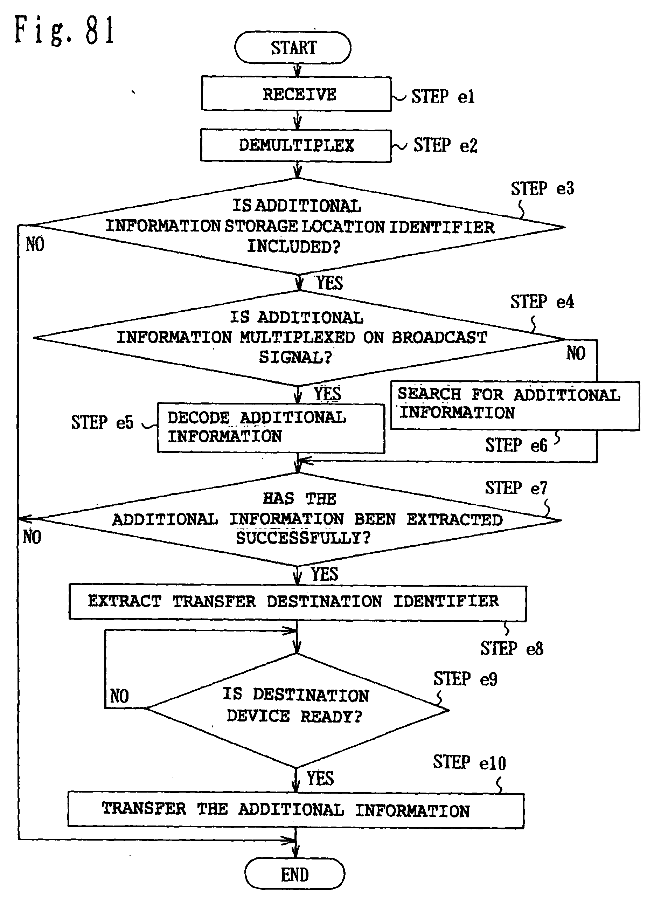

The operation of the above-configured receiving system will be described with reference to the flow chart of Figure 81.
〈Step e1〉 to 〈Step e7〉 perform the same processing as 〈Step b1〉 to 〈Step b7〉 described in the first embodiment.

### 〈Step e8〉

The transfer destination identifier decoding unit 307C extracts from the received signal the transfer destination identifier identifying the peripheral device for which the additional information obtained in step b7 is intended.

### 〈Step e9〉

It is examined whether the destination device designated by the transfer destination identifier is ready to accept data. If the device is ready, the process proceeds to step e10; otherwise, the process waits until the device is ready. Consider, for example, the case where the receiving apparatus and the destination device are connected in series; in this case, whether the device is ready or not can be examined by checking whether the CTS signal from the destination device is ON or OFF.

### 〈Step e10〉

The additional information is transferred to the peripheral device designated by the transfer destination identifier.

Assuming here that heating control data for a microwave oven is downloaded from a CM, as in the first embodiment, if the power of the destination device is OFF, the data transfer is started after power is turned on to the device; this offers the advantage of being able to transfer the data without fail.

### (Embodiment 5 in the Fourth Aspect of the Invention)

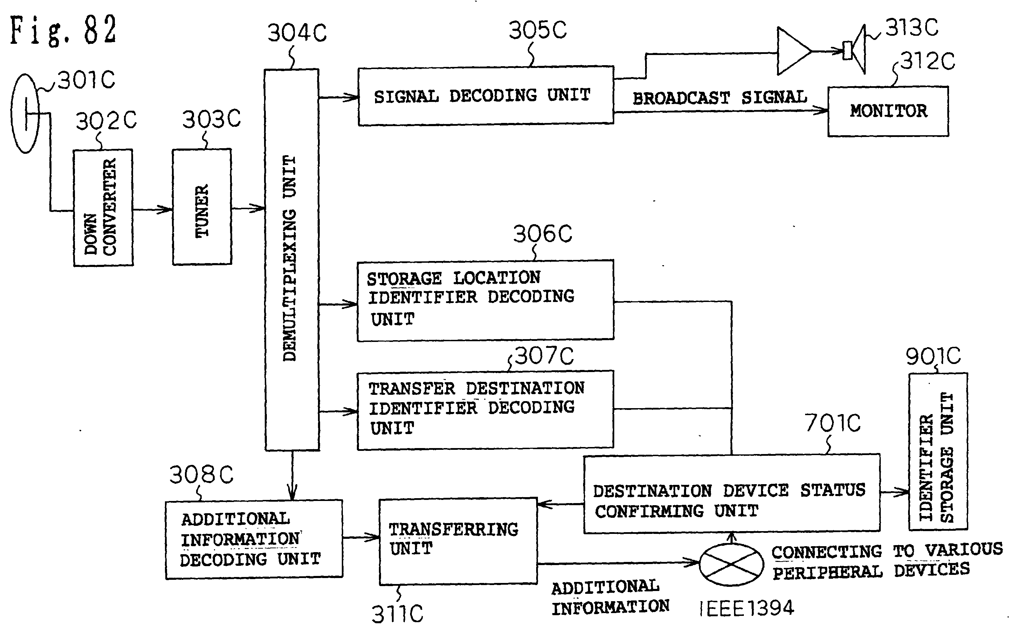

As one embodiment, a digital broadcast receiving method will be described below. Figure 82 shows the system configuration at the receiving end according to a fifth embodiment of the present invention. In Figure 82, the same elements as those shown in the system configuration of Figure 79 will be designated by the same reference numerals and will not be specifically described herein. Reference numeral 901C is an identifier storage unit for storing the transfer destination identifier and additional information as a pair.

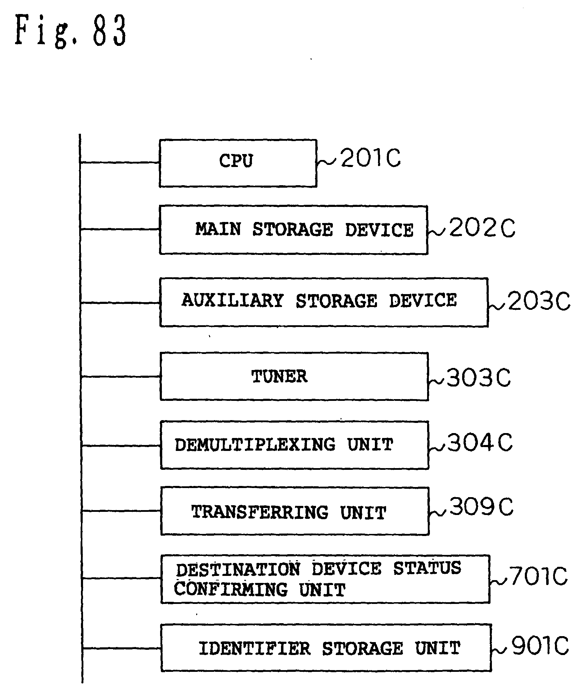

Figure 83 shows the hardware configuration of the present embodiment for implementing the above-configured system. The configuration shown in Figure 83 is basically the same as that of a general purpose computer system. Since this hardware configuration includes the same constituent elements as those shown in the system configuration of Figures 68 and 82, the same constituent elements will be designated by the same reference numerals and will not be specifically described herein.

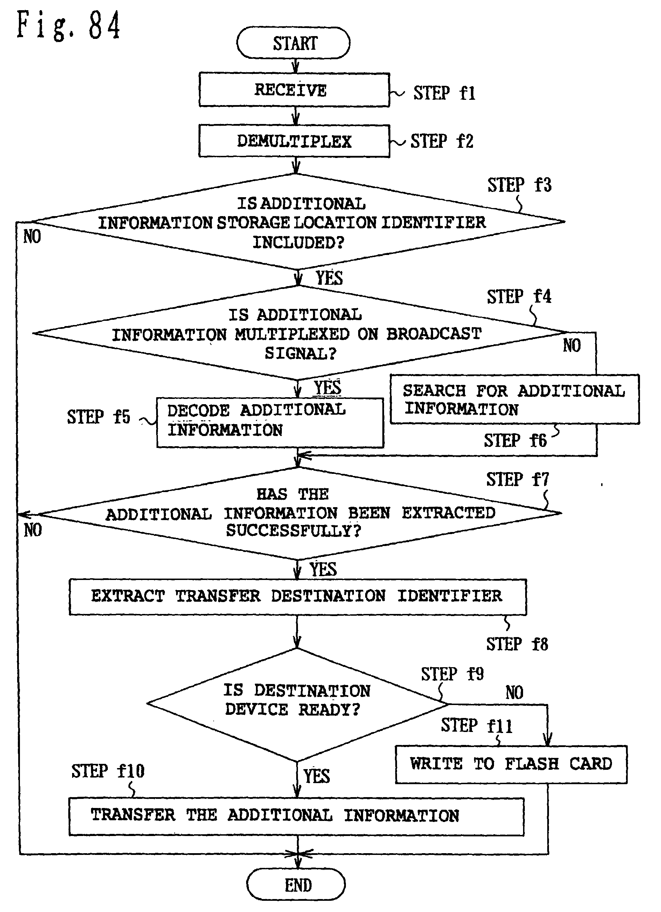

The operation of the above-configured receiving system will be described with reference to the flow chart of Figure 84.
〈Step f1〉 to 〈Step f8〉 perform the same processing as 〈Step e1〉 to 〈Step e8〉 described in the fourth embodiment.

### 〈Step f9〉

It is examined whether the destination device designated by the transfer destination identifier is ready to accept data. If the device is ready, the process proceeds to step f10; otherwise, the process proceeds to f11.

### 〈Step f10〉

The additional information is transferred to the peripheral device designated by the transfer destination identifier.

### 〈Step f11〉

The additional information and the transfer destination identifier are paired and stored in the identifier storage unit. A removable medium such as a flash card is used as the identifier storage unit.

Assuming here that heating control data for a microwave oven is downloaded from a CM, as in the first embodiment, if the destination device is not connected, the data can be stored in the identifier storage unit constructed from a flash card or the like. The stored data can be retrieved when the device is replaced or when a new device is connected.

### (Embodiment 6 in the Fourth Aspect of the Invention)

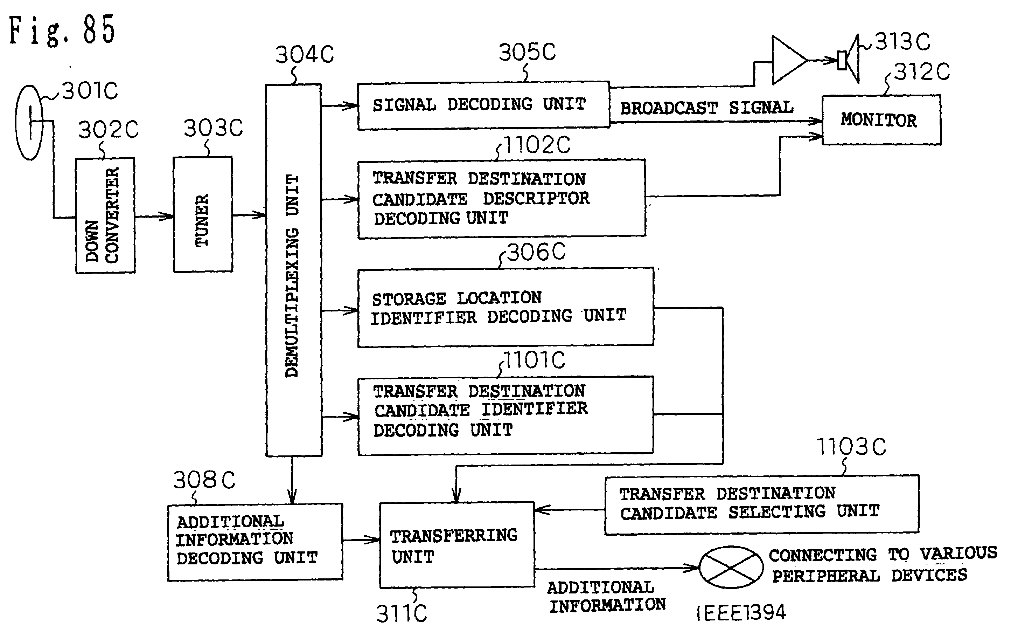

As one embodiment, a digital broadcast receiving method will be described below. Figure 85 shows the system configuration at the receiving end according to a sixth embodiment of the present invention. In Figure 85, the same elements as those shown in the system configuration of Figure 67 will be designated by the same reference numerals and will not be specifically described herein. Reference numeral 1101C is a transfer destination candidate identifier decoding unit for decoding an encoded transfer destination candidate identifier, 1102C is a transfer destination candidate identifier decoding unit for decoding an encoded transfer destination candidate identifier, and 1103C is a transfer destination candidate selecting unit for providing a means for allowing the user to select a transfer destination candidate.

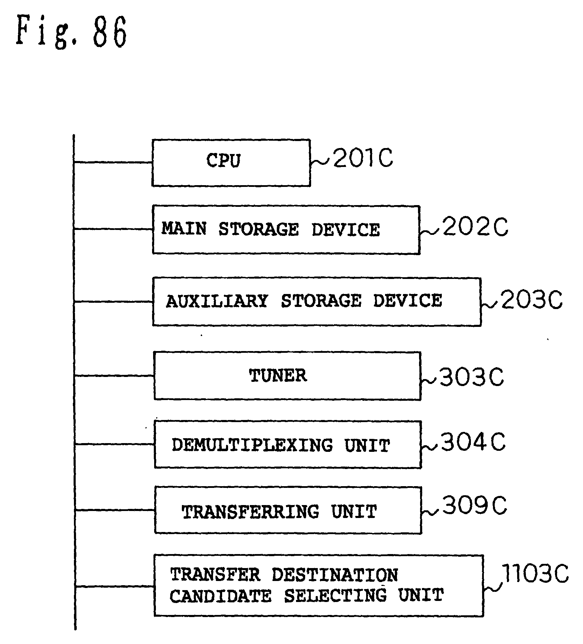

Figure 86 shows the hardware configuration of the present embodiment for implementing the above-configured system. The configuration shown in Figure 86 is basically the same as that of a general purpose computer system. Since this hardware configuration includes the same constituent elements as those shown in the system configuration of Figures 68 and 85, the same constituent elements will be designated by the same reference numerals and will not be specifically described herein.

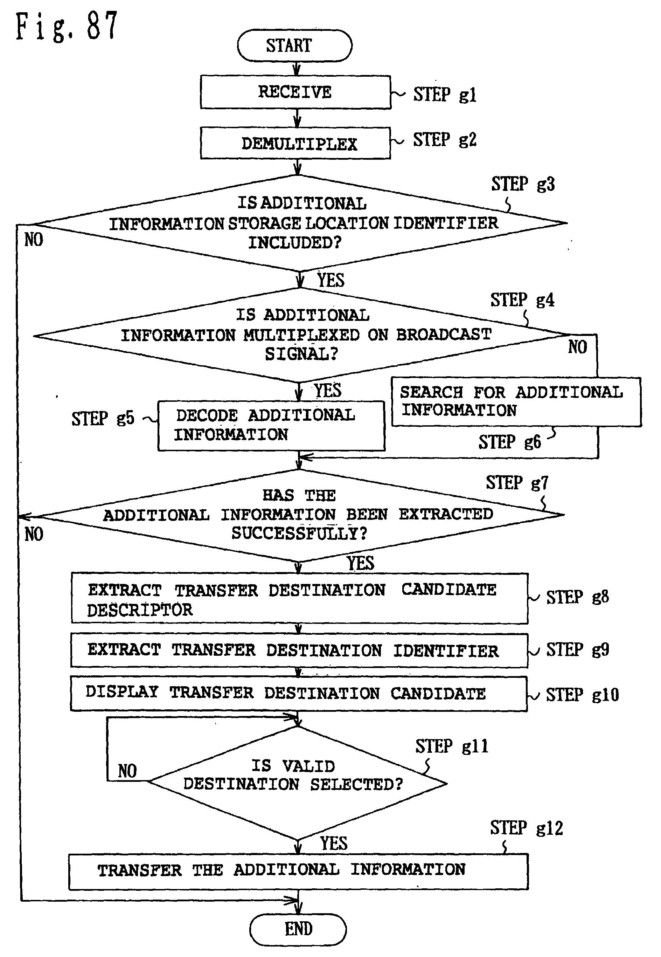

The operation of the above-configured receiving system will be described with reference to the flow chart of Figure 87.
〈Step g1〉 to 〈Step g7〉 perform the same processing as 〈Step b1〉 to 〈Step b7〉 described in the first embodiment.

### 〈Step g8〉

The transfer destination candidate descriptor decoding unit 1102C extracts from the received signal the transfer destination identifier identifying the peripheral device for which the additional information obtained in step g is intended.

### 〈Step g9〉

The transfer destination descriptor decoding unit 1102C extracts from the received signal the transfer destination candidate descriptor which gives a description about peripheral device candidates that can use the additional information obtained in step g5.

### 〈Step g10〉

The transfer destination identifier decoding unit 1101C extracts from the received signal the transfer destination candidate identifier corresponding to the transfer destination candidate descriptor obtained in g9.

### 〈Step g11〉

A user selection input is accepted from the transfer destination candidate selecting unit 1103C, and when a valid destination is selected, the process proceeds to step g12.

### 〈Step g12〉

The additional information is transferred to the peripheral device designated by the transfer destination candidate identifier selected in step g12.

There are cases where a plurality of the devices connected to the receiving apparatus can use the same data. Text data is such an example. There are also cases where it is desired to select the storage location for the data, for example, it is desired to transmit the data directly to the connected device,to store the data at the receiving apparatus, or to store the data in a storage device external to the receiving apparatus. As described above, in cases where there are a plurality of possible destination candidates, the method of how the additional information is used can be selected as the user desires by using the transfer destination candidate identifier and transfer destination candidate descriptor according to the present embodiment.

### POTENTIAL FOR EXPLOITATION IN INDUSTRY

According to the first aspect of the invention, data, event, condition, and processing for the data can be transmitted as a set of information.

Further, according to the first aspect of the invention, by receiving the set of information consisting of data, event, condition, and processing for the data, the processing can be carried out in accordance with the condition, without increasing the burden of the CPU.

As is apparent from the above description, according to the present invention, a set of information consisting of data, event, condition, and processing for the data can be written to a designated recording medium.

Further, according to the present invention, data, a destination descriptor specifying the destination of the data, and an event descriptor specifying the event for starting the transmission can be written as a set of information to a designated storage medium.

Further, according to the present invention, data describing a heating control method, a condition descriptor describing the condition for performing the heating, and an event descriptor specifying the input menu number can be written as a set of information to a designated storage medium.

Further, according to the present invention, program related information, a condition descriptor describing the condition for displaying the related information, and an event descriptor in which the selection of a program from an electronic program guide is associated as an event with the related information can be written as a set of information to a designated storage medium.

Further, according to the present invention, the set of information consisting of data, event, condition, and processing for the data can be read out from the designated recording medium and, by evaluating the condition at the timing of reception of the event, the processing can be carried out in accordance with the result of the condition evaluation.

Further, according to the present invention, the data, the destination descriptor specifying the destination of the data, and the event descriptor specifying the event for starting the transmission can be read out from the designated storage medium and, with the event described in the event descriptor as a trigger, the data can be automatically transmitted to the destination described in the destination descriptor.

Further, according to the present invention, the data describing the heating control method, the condition descriptor describing the condition for performing the heating by using the data, and the event descriptor specifying the input menu number can be read out from the designated storage medium, and the heating can be performed based on the data associated with the input menu number.

Further, according to the present invention, the program related information, the condition descriptor describing the condition for displaying the related information, and the event descriptor in which the selection of a program from an electronic program guide is associated as an event with the related information can be read out from the designated storage medium and, when a program is selected from the electronic program guide, the related information can be displayed by evaluating the condition carried in the condition descriptor.

As described above, in a digital broadcast transmission method and receiving method according to the present invention, an additional information storage location identifier indicating the storage location of related additional information and a destination identifier designating a device that can use the additional information are transmitted by multiplexing on a broadcast signal consisting of video information and audio information; at the receiving end, the additional information is extracted from the received signal or obtained through a network by referring to the additional information storage location identifier demultiplexed from the received signal, so that the extracted or obtained additional information can be transferred in accordance with the transfer destination identifier demultiplexed from the received signal. As a result, when a new function is added to a peripheral device, or a new peripheral device is added, for example, various kinds of data, for individual devices connected to the receiving apparatus can be delivered without having to make major modifications or changes at the receiving apparatus side.

For example, when multiplexing a new cooking menu for a microwave oven as the additional information on the transmission signal, the additional information storage location identifier, which corresponds to a file name indicating the storage location of the additional information and used to locate the additional information in the transmission signal, and the transfer destination identifier, which designates the device that can use the additional information, are also multiplexed for transmission simultaneously; then, at the receiving end, the new cooking menu as the additional information is extracted and, when an applicable microwave oven is connected to the receiving apparatus, the new cooking menu is transferred to that applicable microwave oven. If, at the applicable microwave oven, a function is provided that automatically adds to or updates its cooking menu when a new cooking menu is transferred to it, a service that can freely add cooking menus for hot-selling frozen food products can be easily realized.

As described above, according to the transmission method and receiving method of the present invention, the additional information storage location identifier indicating the storage location of related additional information and the destination identifier designating a device that can use the additional information are transmitted by multiplexing on the broadcast signal consisting of video information and audio information; at the receiving end, the additional information is extracted from the received signal or obtained through a network by referring to the additional information storage location identifier demultiplexed from the received data, and the user confirmation information descriptor demultiplexed from the received signal is displayed on the screen prompting the user for confirmation, upon which the extracted or obtained additional information can be transferred in accordance with the transfer destination identifier demultiplexed from the received signal. This not only serves to retain the advantage that additional information can be readily used through a broadcast or a network, but also serves to avoid trouble such as data being updating before the user is aware of it, or the user being put under the impression that data has been transferred when the device is not connected.

## Claims

1. A data transmission method for transmitting:
data consisting of at least one of character data, image data, and voice data;
an event descriptor describing an event for triggering the processing of said data;
a condition descriptor describing a condition (including no condition) for the processing of said data; and
a data processing descriptor describing a specific processing method for said data.

2. A data transmission method according to claim 1, wherein of descriptors consisting of an event time limiting descriptor defining a time segment during which the occurrence of said event is to be enabled, a condition time limiting descriptor defining a time segment during which the condition described in said condition descriptor is to be evaluated, and a processing time limiting descriptor defining a time segment during which the data processing described in said data processing descriptor is to be performed, at least one descriptor is transmitted.

3. A data reception processing method wherein said data, said event descriptor, said condition descriptor, and said data processing descriptor, transmitted in accordance with the data transmission method of claim 1, are received, and when the event associated with said event descriptor occurs, if the condition described in said condition descriptor is satisfied, said data is processed in accordance with said data processing descriptor.

4. A data reception processing method wherein
of said event time limiting descriptor, said condition time limiting descriptor, and said data processing descriptor, transmitted in accordance with the data transmission method of claim 2, at least one descriptor is received, and
when the event associated with said event descriptor occurs, if the condition described in said condition descriptor is satisfied, said data is processed in accordance with said data processing descriptor, and wherein
the occurrence of said event is enabled in accordance with said event time limiting descriptor for said event time limiting descriptor, the condition described in said condition descriptor is evaluated in accordance with said condition time limiting descriptor for said condition time limiting descriptor, and said data processing is performed in accordance with said processing time limiting descriptor forsaid processing time limiting descriptor.

5. A digital broadcast data transmission method for transmitting by multiplexing on a broadcast signal:
digital broadcast data consisting of at least one of character data, image data, and voice data;
an event descriptor describing an event for triggering the processing of said data;
a condition descriptor describing a condition (including no condition) for the processing of said data; and
a data processing descriptor describing a specific processing method for said data.

6. A digital broadcast data transmission method according to claim 5, wherein of descriptors consisting of an event time limiting descriptor defining a time segment during which the occurrence of said event is to be enabled, a condition time limiting descriptor defining a time segment during which the condition described in said condition descriptor is to be evaluated, and a processing time limiting descriptor defining a time segment during which the data processing described in said data processing descriptor is to be performed, at least one descriptor is transmitted by multiplexing on said broadcast signal.

7. A digital broadcast data reception processing method wherein said data, said event descriptor, said condition descriptor, and said data processing descriptor, multiplexed and transmitted in accordance with the digital broadcast data transmission method of claim 5, are received, and when the event associated with said event descriptor occurs, if the condition described in said condition descriptor is satisfied, said data is processed in accordance with said data, processing descriptor.

8. A digital broadcast data reception processing method wherein
of said event time limiting descriptor, said condition time limiting descriptor, and said data processing descriptor, multiplexed and transmitted in accordance with the data transmission method of claim 6, at least one descriptor is received, and
when the event associated with said event descriptor occurs, if the condition described in said condition descriptor is satisfied, said data is processed in accordance with said data processing descriptor, and wherein
the occurrence of said event is enabled in accordance with said event time limiting descriptor for said event time limiting descriptor, the condition described in said condition descriptor is evaluated in accordance with said condition time limiting descriptor for said condition time limiting descriptor , and said data processing is performed in accordance with said processing time limiting descriptor for said processing time limiting descriptor.

9. A program medium which stores a program for implementing by a computer all or part of each process in the data transmission method of claim 1, 2, 5, or 6.

10. A program medium which stores a program for implementing by a computer all or part of the processing steps in the data reception processing method of claim 3, 4, 7, or 8.

11. A data transmission method according to claim 1, 2, 5, or 6, wherein said event is an interrupt event caused to a central processing unit.

12. A data reception processing method according to claim 3, 4, 7, or 8, wherein said event is an interrupt event caused to a central processing unit.

13. A processing information transmission method for transmitting:
an event descriptor describing an event for triggering the processing to be performed at receiving end;
a condition descriptor describing a condition (including no condition) for carrying out said processing; and
a processing descriptor describing the contents of said processing.

14. A processing information reception processing method wherein said event descriptor, said condition descriptor, and said processing descriptor, transmitted in accordance with the processing information transmission method of claim 13, are received, and when the event associated with said event descriptor occurs, if the condition described in said condition descriptor is satisfied, said processing is carried out in accordance with said processing descriptor.

15. An event-driven type file creating apparatus comprising:
data processing method specifying means for specifying a method for processing data;
file creating means for storing said data and said specified data processing method in a file; and
file writing means for writing said file to a recording medium.

16. An event-driven type file creating apparatus according to claim 15, wherein said method for processing said data is a method that uses at least an event descriptor describing an event for triggering the processing of said data, a condition descriptor describing a condition as to whether or not processing is performed on said data, and a data processing descriptor describing a specific processing method for said data.

17. An event-driven type file creating apparatus according to claim 16, wherein said method for processing said data is a method that further uses at least one descriptor selected from among descriptors consisting of an event time limiting descriptor defining a time segment during which the reception of said event described in said event descriptor is to be enabled, a condition time limiting descriptor defining a time segment during which the condition described in said condition descriptor is to be evaluated, and a processing time, limiting descriptor defining a time segment during which the data processing method described in said data processing descriptor is to be carried out.

18. An event-driven type file creating apparatus according to claim 15, wherein said method for processing said data is a method that uses at least a destination descriptor specifying the destination of said data and an event descriptor specifying an event for triggering the transmission of said data.

19. An event-driven type file creating apparatus according to claim 15, wherein
said data is data describing a heating control method, and
the method for processing said data is a method that uses at least an event descriptor in which an input menu key is associated as an event with said data and a condition descriptor describing a condition for performing heating by using said data.

20. An event-driven type file creating apparatus according to claim 15, wherein
said data is program related information, and
the method for processing said data is a method that uses a condition descriptor describing a condition for displaying said program related information and an event descriptor in which the selection of a program from an electronic program guide is associated as an event with said program related information

21. An event-driven type file reading apparatus comprising:
file reading means for reading out the file created by the event-driven type file creating apparatus of claim 15; and
data processing means for processing the data read out by said file reading means in accordance with said data processing method read out by said file reading means.

22. An event-driven type file reading apparatus comprising:
file reading means for reading out the file created by the event-driven type file creating apparatus of claim 16; and
data processing means for receiving the event in accordance with said event descriptor, determining processing timing for said data, and if the condition described in said condition descriptor is satisfied, then carrying out processing of said data in accordance with said data processing descriptor.

23. An event-driven type file reading apparatus comprising:
file reading means for reading out the file created by the event-driven type file creating apparatus of claim. 17; and
data processing means for receiving the event in accordance with said event descriptor, determining processing timing for said data, and if the condition described in said condition descriptor is satisfied, then carrying out specified processing for said data in accordance with said data processing descriptor, wherein:
the reception of said event is enabled during the time segment defined by said event time limiting descriptor if said event time limiting descriptor is given; said condition is evaluated during the time segment defined by said condition time limiting descriptor if said condition time limiting descriptor is given; and the specified processing of said data is carried out during the time segment defined by said processing time limiting descriptor if said processing time limiting descriptor is given.

24. An event-driven type file reading apparatus comprising:
file reading means for reading out the file created by the event-driven type file creating apparatus of claim 18; and
data processing means for receiving the event in accordance with said event descriptor, and for transmitting said data to said destination specified by said destination descriptor upon when receiving said event.

25. A microwave oven comprising:
file reading means for reading out the file created by the event-driven type file creating apparatus of claim 19;
data processing means for receiving the event in accordance with said event descriptor, and for performing control in accordance with said heating control method described in said data if the condition described in said condition descriptor is satisfied; and
heating means for performing heating under the control of said data processing means.

26. A television receiving apparatus comprising:
file reading means for reading out the file created by the event-driven type file creating apparatus of claim 20;
data processing means for receiving the event in accordance with said event descriptor, and for performing control so that said data, that is, said program related information, is displayed if the condition described in said condition descriptor is satisfied; and
image receiving means for displaying said data or said program under the control of said data processing means.

27. A data storing method comprising:
specifying a method for processing data;
storing said data and said method for processing said data in a file; and
writing said file to a recording medium, wherein
said method for processing said data is a method that uses at least an event descriptor describing an event for triggering the processing of said data, a condition descriptor describing a condition as to whether or not processing is performed on said data, and a data processing descriptor describing a specific processing method for said data.

28. A data processing method comprising:
reading out one or a plurality of files created in accordance with the data storing method of claim 27;
receiving the event in accordance with said event descriptor, and determining processing timing for said data; and
if the condition described in said condition descriptor is satisfied, carrying out specified processing for said data in accordance with said data processing descriptor.

29. A program recording medium which stores a program for implementing by a computer the functions of all or part of the elements constituting the apparatus of any one of claims 15 to 26.

30. A program recording medium which stores a program for implementing by a computer the functions of all or part of the steps of the method of claim 27 or 28.

31. A transmission method for transmitting, by multiplexing on a broadcast signal, an additional information storage location identifier indicating the storage location of additional information and a transfer destination identifier expressing transfer destination information of said additional information.

32. A transmission method for transmitting, by multiplexing on a broadcast signal, an additional information storage location identifier indicating the storage location of additional information, a transfer destination identifier expressing transfer destination information of said additional information, and a user confirmation information descriptor describing contents that need user confirmation regarding said additional information.

33. A transmission method according to claim 31 or 32, wherein said transfer destination identifier is an identifier that includes a destination device name.

34. A transmission method according to claim 31 or 32, wherein said additional information consists of at least one of an image, voice, and data.

35. A transmission method according to claim 31 or 32, wherein said additional information is version upgrading data for a device designated by said transfer destination identifier.

36. A transmission method according to claim 31 or 32, wherein said additional information is multiplexed on said broadcast signal for transmission.

37. A transmission method according to claim 31 or 32, wherein a transfer condition identifier designating a transfer condition is further multiplexed for transmission.

38. A broadcast receiving method wherein: a broadcast signal, on which an additional information storage location identifier indicating the storage location of additional information and a transfer destination identifier designating an identifier of the transfer destination of said additional information are multiplexed, is received; said additional information is extracted in accordance with said additional information storage location identifier; and said extracted additional information is transferred in accordance with said transfer destination identifier.

39. A broadcast receiving method according to claim 38, wherein said transfer destination identifier is an identifier that includes a destination device name.

40. A broadcast receiving method wherein: a broadcast signal, on which an additional information storage location identifier indicating the storage location of additional information, a transfer destination identifier designating an identifier of the transfer destination of said additional information, and a transfer condition identifier describing a transfer condition for said additional information are multiplexed, is received; said additional information is extracted in accordance with said additional information storage location identifier; and said extracted additional information is transferred in accordance with the transfer condition described in said transfer condition identifier to the destination designated by said transfer, destination identifier.

41. A broadcast receiving method according to claim 38 or 40, wherein said additional information consists of at least one of an image, voice, and data.

42. A broadcast receiving method according to claim 38, wherein said additional information is version upgrading data for a device designated by said transfer destination identifier.

43. A broadcast receiving method according to claim 38 or 40, wherein said additional information is multiplexed on said broadcast signal for transmission.

44. A broadcast transmission apparatus comprising: signal encoding means for encoding a broadcast signal; identifier 1 encoding means for encoding an additional information storage location identifier indicating the storage location of additional information; identifier 2 encoding means for encoding a transfer destination identifier expressing transfer destination information of said additional information; multiplexing means for multiplexing said encoded broadcast signal, said encoded additional information storage location identifier, and said encoded transfer destination identifier; and control means for controlling at least part of the above-enumerated means.

45. A broadcast receiving apparatus comprising: demultiplexing means for demultiplexing a received signal on which an additional information storage location identifier indicating the storage location of additional information and a transfer destination identifier designating an identifier of the transfer destination of said additional information are multiplexed; identifier 1 decoding means for decoding said additional information storage location identifier; additional information decoding means for decoding said additional information in accordance with said additional information storage location identifier; identifier 2 decoding means for decoding said transfer destination identifier; transfer means for transferring said additional information in accordance with said transfer destination identifier; and control means for controlling at least part of the above-enumerated means.

46. A broadcast transmission method wherein a transfer destination identifier expressing transfer destination information of additional information other than a broadcast signal is multiplexed on said broadcast signal for transmission.

47. A broadcast receiving method wherein a broadcast signal, on which a transfer destination identifier designating an identifier of the transfer destination of additional information other than a broadcast signal, is received; said additional information is extracted; and said extracted additional information is transferred in accordance with said transfer destination identifier.

48. A receiving method wherein: a broadcast signal, on which an additional information storage location identifier indicating the storage location of additional information, a transfer destination identifier designating an identifier of the transfer destination of said additional information, and a user confirmation information descriptor describing contents that need user confirmation regarding said additional information are multiplexed, is received; said additional information is extracted in accordance with said additional information storage location identifier; the contents of said user confirmation information descriptor are displayed on a screen for a predetermined length of time; and said extracted additional information is transferred in accordance with said transfer destination identifier.

49. A receiving method wherein: a broadcast signal, on which a storage location identifier indicating the storage location of additional information, a transfer destination identifier designating an identifier of the transfer destination of said additional information, and a user confirmation information descriptor describing contents that need user confirmation regarding said additional information are multiplexed, is received; said additional information is extracted in accordance with said storage location identifier; the contents of said user confirmation information descriptor are output on a screen; said extracted additional information is transferred in accordance with said transfer destination identifier; and the screen output of the contents of said user confirmation information descriptor is terminated when the transfer of said additional information terminates.

50. A receiving method wherein: a broadcast signal, on which an additional information storage location identifier indicating the storage location of additional information, a transfer destination identifier designating an identifier of the transfer destination of said additional information, and a user confirmation information descriptor describing contents that need user confirmation regarding said additional information are multiplexed, is received; said additional information is extracted in accordance with said storage location identifier; the contents of said user confirmation information descriptor are output on a monitor; and when a prescribed user input is received, said extracted additional information is transferred in accordance with said transfer destination identifier.

51. A receiving method wherein: a broadcast signal, on which an additional information storage location identifier indicating the storage location of additional information and a transfer destination identifier designating an identifier of the transfer destination of said additional information are multiplexed, is received; said additional information is extracted in accordance with said storage location identifier; status of said transfer destination is checked in accordance with said transfer destination identifier; and if said transfer destination is not ready yet, said additional information and said transfer destination identifier as a pair are held until said transfer destination gets ready.

52. A receiving method wherein: a broadcast signal, on which an additional information storage location identifier indicating the storage location of additional information and a transfer destination identifier designating an identifier of the transfer destination of said additional information are multiplexed, is received; said additional information is extracted in accordance with said storage location identifier; status of said transfer destination is checked in accordance with said transfer destination identifier; and if said transfer destination is not ready yet, said additional information and said transfer destination identifier as a pair are stored in a designated storage unit.

53. A receiving method wherein: a broadcast signal, on which an additional information storage location identifier indicating the storage location of additional information, a transfer destination candidate identifier designating a candidate for the transfer destination of said additional information, and a transfer destination candidate descriptor carrying a description of said transfer destination candidate are multiplexed, is received; said additional information is extracted in accordance with said storage location identifier; the contents of said transfer destination candidate descriptor are output on a monitor; and when a user input designating the transfer destination is received, said extracted additional information is transferred in accordance with the corresponding transfer destination candidate identifier.

54. A transmission apparatus comprising: signal encoding means for encoding a broadcast signal; storage location identifier encoding means for encoding a storage location identifier indicating the storage location of additional information; transfer destination identifier encoding means for encoding a transfer destination identifier expressing transfer destination information of said additional information; a user confirmation information descriptor encoding means for encoding a user confirmation information descriptor describing contents that need user confirmation regarding said additional information; and multiplexing means for multiplexing said encoded broadcast signal, said encoded additional information storage location identifier, and said encoded transfer destination identifier.

55. A receiving apparatus comprising: demultiplexing means for demultiplexing a received signal on which a storage location identifier indicating the storage location of additional information, a transfer destination identifier designating an identifier of the transfer destination of said additional information, and a user confirmation information descriptor describing contents that need user confirmation regarding said additional information are multiplexed; storage location identifier decoding means for decoding said storage location identifier; additional information decoding means for decoding said additional information in accordance with said storage location identifier; screen output means for outputting the contents of said user confirmation information descriptor onto a monitor; transfer destination identifier decoding means for decoding said transfer destination identifier; and transfer means for transferring said additional information in accordance with said transfer destination identifier.

56. A program medium which stores a program for implementing by a computer all or part of the means or steps described in any one of claims 31 to 55.
